(19) Europäisches Patentamt / European Patent Office / Office européen des brevets

(11) **EP 3 624 446 B1**

(12) **EUROPEAN PATENT SPECIFICATION**

(45) Date of publication and mention
of the grant of the patent:
**18.12.2024   Bulletin 2024/51**

(21) Application number: **18870426.6**

(22) Date of filing: **24.10.2018**

(51) International Patent Classification (IPC):
*G06T 3/00* $^{(2024.01)}$    *H04N 13/139* $^{(2018.01)}$
*H04N 13/232* $^{(2018.01)}$    *H04N 13/117* $^{(2018.01)}$
*H04N 13/161* $^{(2018.01)}$    *H04N 13/194* $^{(2018.01)}$
*H04N 13/178* $^{(2018.01)}$    *H04N 21/81* $^{(2011.01)}$
*H04N 21/2343* $^{(2011.01)}$    *H04N 21/235* $^{(2011.01)}$
*H04N 21/236* $^{(2011.01)}$

(52) Cooperative Patent Classification (CPC):
H04N 13/232; G06T 3/047; H04N 13/117;
H04N 13/139; H04N 13/161; H04N 13/178;
H04N 13/194; H04N 21/2343; H04N 21/235;
H04N 21/236; H04N 21/81

(86) International application number:
**PCT/KR2018/012606**

(87) International publication number:
**WO 2019/083266 (02.05.2019 Gazette 2019/18)**

(54) **METHOD FOR TRANSMITTING/RECEIVING 360-DEGREE VIDEO INCLUDING FISHEYE VIDEO INFORMATION, AND DEVICE THEREFOR**

VERFAHREN ZUM SENDEN/EMPFANGEN VON 360-GRAD-VIDEOS MIT FISCHAUGENVIDEOINFORMATIONEN UND VORRICHTUNG DAFÜR

PROCÉDÉ DE TRANSMISSION/RÉCEPTION DE VIDÉO À 360 DEGRÉS COMPRENANT DES INFORMATIONS VIDÉO DE TYPE ULTRA-GRAND-ANGULAIRE, ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.10.2017   US 201762576087 P**

(43) Date of publication of application:
**18.03.2020   Bulletin 2020/12**

(73) Proprietor: **LG Electronics Inc.**
Seoul 07336 (KR)

(72) Inventors:
  • **OH, Hyunmook**
    Seoul 06772 (KR)
  • **OH, Sejin**
    Seoul 06772 (KR)

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
WO-A1-2016/076680     WO-A2-2012/166593
KR-A- 20110 074 442     KR-A- 20170 084 275
KR-B1- 101 725 024     US-A1- 2017 287 200

• EICHENSEER ANDREA ET AL: "A data set providing synthetic and real-world fisheye video sequences", 2016 IEEE INTERNATIONAL CONFERENCE ON ACOUSTICS, SPEECH AND SIGNAL PROCESSING (ICASSP), IEEE, 20 March 2016 (2016-03-20), pages 1541 - 1545, XP032900861, DOI: 10.1109/ ICASSP.2016.7471935

- PODBORSKI D: "Virtual Reality And Dash", INTERNATIONAL BROADCASTING CONFERENCE 2017; 14 SEPTEMBER 2017 - 18 SEPTEMBER 2017; AMSTERDAM,, no. IBC-2017-18, 14 September 2017 (2017-09-14), XP030082665
- CHANG CHE-HAN ET AL: "Rectangling Stereographic Projection for Wide-Angle Image Visualization", COMPUTER VISION (ICCV), 2011 IEEE INTERNATIONAL CONFERENCE ON, IEEE, 1 December 2013 (2013-12-01), pages 2824 - 2831, XP032572783, ISSN: 1550-5499, [retrieved on 20140228], DOI: 10.1109/ICCV.2013.351
- MARIA MIKHISOR ET AL: "The Integral Image Method for Fisheye Images", IMAGE AND VISION COMPUTING NEW ZEALAND (IVCNZ), 27 November 2013 (2013-11-27), XP055373612, ISBN: 978-1-4799-0883-7, DOI: 10.1109/IVCNZ.2013.6726983
- CHOI, BYEONGDOO ET AL.: "WD on ISO/IEC 23000-20 Omnidirectional Media Application Format", ISO/IEC JTC1/SC29/WG11 N16189, 1 June 2016 (2016-06-01), Geneva, Switzerland, pages 1 - 42, XP055517901

**Description**

**BACKGROUND OF THE INVENTION**

Field of the invention

The present invention relates to a 360-degree video and, more particularly, to a method and a device for transmitting and receiving a 360-degree video including fisheye video information.

Related Art

Virtual reality (VR) systems allow users to feel as if they are in electronically projected environments. Systems for providing VR can be improved in order to provide images with higher picture quality and spatial sounds. VR systems allow users to interactively consume VR content.

From WO 2016/076680 A1 a video processing unit is known which is configured to code 360 degree videos using region adaptive smoothing. The video processing unit comprises a processor which is configured to stitch together a plurality of video frames into a plurality of equirectangular mapped frames of a video. The processor is further configured to subsequently perform a smoothing process on a top region and a bottom region for each of the equirectangular mapped frames of a video and to encode the smoothed equirectangular mapped frames of the video.

**SUMMARY OF THE INVENTION**

An aspect of the present invention is to provide a method for improving VR video data transmission efficiency for providing a VR system.

Another aspect of the present invention is to provide a method for transmitting VR video data and metadata with respect to VR video data.

Still another aspect of the present invention is to provide a method for transmitting VR video data and metadata about fisheye video information of the VR video data.

Yet another aspect of the present invention is to provide a method for deriving a spherical coordinate system mapping equation according to the lens type based on information indicating the lens type of a fisheye lens and mapping 360-degree video data to a 3D space based on the derived spherical coordinate system mapping equation.

Still another aspect of the present invention is to provide a method for deriving 360-degree video data mapped to a 3D space based on information indicating a region not mapped to 360-degree video data.

According to one embodiment of the present invention, there is provided a 360-degree video processing method performed by a 360-degree video transmission apparatus. The method includes the steps defined claim 1.

According to still another embodiment of the present invention, there is provided a 360-degree video processing method performed by a 360-degree video reception apparatus. The method includes the steps defined in claim 10.

According to the present invention, it is possible to efficiently transmit 360-degree content in an environment supporting next-generation hybrid broadcast using terrestrial broadcast networks and the Internet.

According to the present invention, it is possible to propose a method for providing interactive experience in 360-degree content consumption of users.

According to the present invention, it is possible to propose a signaling method for correctly reflecting the intention of a 360-degree content provider in 360-degree content consumption of users.

According to the present invention, it is possible to propose a method for efficiently increasing transmission capacity and forwarding necessary information in 360-degree content transmission.

According to the present invention, it is possible to propose a method for deriving a spherical coordinate system mapping equation according to the lens type based on information indicating the lens type of a fisheye lens that captures 360-degree content and thus accurately mapping 360-degree video data to a 3D space.

According to the present invention, it is possible to propose a method for efficiently deriving 360-degree video data mapped to a 3D space based on information indicating a region not mapped to 360-degree video data of 360-degree content.

**BRIEF DESCRIPTION OF THE DRAWINGS**

FIG. 1 is a view illustrating overall architecture for providing a 360-degree video according to a processing method of the to the present invention.

FIGS. 2 and 3 are views illustrating a structure of a media file for storing and transmitting media data according to a processing method of the present invention.

FIG. 4 illustrates an example of the overall operation of a DASH-based adaptive streaming model.

FIG. 5 is a view schematically illustrating a configuration of a 360-degree video transmission apparatus adapted to perform a processing method of the present invention.

FIG. 6 is a view schematically illustrating a configuration of a 360-degree video reception apparatus adapted to perform a processing method of the present invention.

FIG. 7a and FIG. 7b illustrate overall architecture for providing a 360-degree video by a 360-degree video transmission apparatus/360-degree video reception apparatus for performing a processing method according to the present invention.

FIG. 8 is a view illustrating the concept of aircraft principal axes for describing a 3D space of a processing method of the present invention.

FIG. 9a and FIG. 9b illustrate projection schemes for a processing method according to the present invention.

FIG. 10 illustrates a 360-degree video transmission apparatus for a processing method according to one aspect of the present invention.

FIG. 11 illustrates a 360-degree video reception apparatus for a processing method according to another aspect of the present invention.

FIG. 12 illustrates a process of processing fisheye 360-degree video data according to one embodiment of the present invention.

FIG. 13 illustrates a process of processing fisheye 360-degree video data according to another embodiment of the present invention.

FIG. 14 illustrates a process of extracting fisheye 360-degree video data according to one embodiment of the present invention.

FIG. 15 illustrates a process of processing a fisheye 360-degree video for a reception side according to one embodiment of the present invention.

FIG. 16 illustrates a process of processing a fisheye 360-degree video for a reception side according to another embodiment of the present invention.

FIG. 17a and FIG. 17b illustrate a process of processing a fisheye 360-degree video for a reception side according to still another embodiment of the present invention.

FIG. 18a and FIG. 18b illustrate a process of processing a fisheye 360-degree video for a reception side according to yet another embodiment of the present invention.

FIG. 19 illustrates a process of mapping a circular image in a processing method according to one embodiment of the present invention.

FIG. 20 schematically illustrates a 360-degree video data processing method by a 360-degree video transmission apparatus according to the present invention.

FIG. 21 schematically illustrates a 360-degree video transmission apparatus that performs a 360-degree video data processing method according to the present invention.

FIG. 22 schematically illustrates a 360-degree video data processing method by a 360-degree video reception apparatus according to the present invention.

FIG. 23 schematically illustrates a 360-degree video reception apparatus that performs a 360-degree video data processing method according to the present invention.

## DESCRIPTION OF EXEMPLARY EMBODIMENTS

Hereinafter, preferred embodiments of the present invention will be described in more detail with reference to the attached drawings. Hereinafter, the same reference numbers will be used throughout this specification to refer to the same components and redundant description of the same component will be omitted.

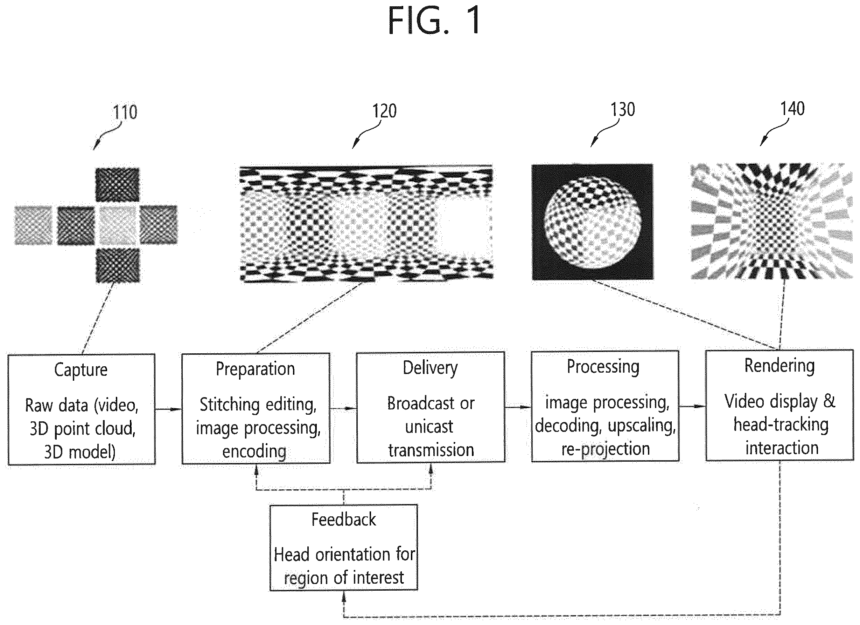

FIG. 1 is a view illustrating overall architecture for providing a 360-degree video according to a processing method of the present invention.

The present invention proposes a method of providing 360-degree content in order to provide virtual reality (VR) to users. VR may refer to technology for replicating actual or virtual environments or those environments. VR artificially provides sensory experience to users and thus users can experience electronically projected environments.

360-degree content refers to content for realizing and providing VR and may include a 360-degree video and/or 360-degree audio. The 360-degree video may refer to video or image content which is necessary to provide VR and is captured or reproduced omnidirectionally (360-degree degrees). Hereinafter, the 360-degree video may refer to 360-degree video. A 360-degree video may refer to a video or an image represented on 3D spaces in various forms according to 3D models. For example, a 360-degree video can be represented on a spherical surface. The 360-degree audio is audio content for providing VR and may refer to spatial audio content whose audio generation source can be recognized to be located in a specific 3D space. 360-degree content may be generated, processed and transmitted to users and users can consume VR experiences using the 360-degree content. Particularly, the present invention proposes a method for effectively providing a 360-degree video. To provide a 360-degree video, a 360-degree video may be captured through one or more cameras. The captured 360-degree video may be transmitted through series of processes, and a reception side may process the transmitted 360-degree video into the original 360-degree video and render the 360-degree video. In this manner the 360-degree video can be provided to a user.

Specifically, processes for providing a 360-degree video may include a capture process, a preparation process, a transmission process, a processing process, a rendering process and/or a feedback process.

The capture process may refer to a process of capturing images or videos for a plurality of viewpoints through one or more cameras. Image/video data 110 shown in FIG. 1 may be generated through the capture process. Each plane of 110 in FIG. 1 may represent an image/video for each viewpoint. A plurality of captured images/videos may be referred to as raw data. Metadata related to capture can be generated during the capture process.

For capture, a special camera for VR may be used. When a 360-degree video with respect to a virtual space generated by a computer is provided according to an embodiment, capture through an actual camera may not be performed. In this case, a process of simply generating related data can substitute for the capture process.

The preparation process may be a process of processing captured images/videos and metadata generated in the capture process. Captured images/videos may be subjected to a stitching process, a projection process, a region-wise packing process and/or an encoding process during the preparation process.

First, each image/video may be subjected to the stitching process. The stitching process may be a process of connecting captured images/videos to generate one panorama image/video or spherical image/video.

Subsequently, stitched images/videos may be subjected to the projection process. In the projection process, the stitched images/videos may be projected on 2D image. The 2D image may be called a 2D image frame according to context. Projection on a 2D image may be referred to as mapping to a 2D image. Projected image/video data may have the form of a 2D image 120 in FIG. 1.

Video data projected on the 2D image may be subjected to the region-wise packing process in order to improve video coding efficiency. Region-wise packing may refer to a process of processing video data projected on a 2D image for each region. Here, regions may refer to divided areas of a 2D image. Regions may be obtained by dividing a 2D image equally or arbitrarily according to an embodiment. Further, regions may be divided according to a projection scheme in an embodiment. The region-wise packing process is an optional process and may be omitted in the preparation process.

The processing process may include a process of rotating regions or rearranging the regions on a 2D image in order to improve video coding efficiency according to an embodiment. For example, it is possible to rotate regions such that specific sides of regions are positioned in proximity to each other to improve coding efficiency.

The processing process may include a process of increasing or decreasing resolution for a specific region in order to differentiate resolutions for regions of a 360-degree video according to an embodiment. For example, it is possible to increase the resolution of regions corresponding to relatively more important regions in a 360-degree video to be higher than the resolution of other regions. Video data projected on the 2D image or region-wise packed video data may be subjected to the encoding process through a video codec.

According to an embodiment, the preparation process may further include an additional editing process. In this editing process, editing of image/video data before and after projection may be performed. In the preparation process, metadata regarding stitching/projection/encoding/editing may also be generated. Further, metadata regarding an initial viewpoint or a region of interest (ROI) of video data projected on the 2D image may be generated.

The transmission process may be a process of processing and transmitting image/video data and metadata which have passed through the preparation process. Processing according to an arbitrary transmission protocol may be performed for transmission. Data which has been processed for transmission may be delivered through a broadcast network and/or a broadband. Such data may be delivered to a reception side in an on-demand manner. The reception side may receive the data through various paths.

The processing process may refer to a process of decoding received data and re-projecting projected image/video data on a 3D model. In this process, image/video data projected on the 2D image may be re-projected on a 3D space. This process may be called mapping or projection according to context. Here, 3D model to which image/video data is mapped may have different forms according to 3D models. For example, 3D models may include a sphere, a cube, a cylinder and a pyramid.

According to an embodiment, the processing process may additionally include an editing process and an up-scaling process. In the editing process, editing of image/video data before and after re-projection may be further performed. When the image/video data has been reduced, the size of the image/video data may be increased by up-scaling samples in the up-scaling process. An operation of decreasing the size through down-scaling may be performed as necessary.

The rendering process may refer to a process of rendering and displaying the image/video data re-projected on the 3D space. Re-projection and rendering may be combined and represented as rendering on a 3D model. An image/video re-projected on a 3D model (or rendered on a 3D model) may have a form 130 shown in FIG. 1. The form 130 shown in FIG. 1 corresponds to a case in which the image/video is re-projected on a 3D spherical model. A user can view a region of the rendered image/video through a VR display. Here, the region viewed by the user may have a form 140 shown in FIG. 1.

The feedback process may refer to a process of delivering various types of feedback information which may be acquired in a display process to a transmission side. Interactivity in consumption of a 360-degree video may be provided through the feedback process. According to an embodiment, head orientation information, viewport information representing a region currently viewed by a user, and the like may be delivered to a transmission side in the feedback process. According to an embodiment, a user may interact with an object realized in a VR environment. In this case, information about the interaction may be delivered to a transmission side or a service provider in the feedback process. According to an embodiment, the feedback process may not be performed.

The head orientation information may refer to information about the position, angle, motion and the like of the head of a user. Based on this information, information about a region in a 360-degree video which is currently viewed by the user, that is, viewport information, may be calculated.

The viewport information may be information about a region in a 360-degree video which is currently viewed by a user. Gaze analysis may be performed through the viewpoint information to check how the user consumes the 360-degree video, which region of the 360-degree video is gazed by the user, how long the region is gazed, and the like. Gaze analysis may be performed at a reception side and a result thereof may be delivered to a transmission side through a feedback channel. A device such as a VR display may extract a viewport region based on the position/direction of the head of a user, information on a vertical or horizontal field of view (FOV) supported by the device, and the like.

According to an embodiment, the aforementioned feedback information may be consumed at a reception side as well as being transmitted to a transmission side. That is, decoding, re-projection and rendering at the reception side may be performed using the aforementioned feedback information. For example, only a 360-degree video with respect to a region currently viewed by the user may be preferentially decoded and rendered using the head orientation information and/or the viewport information.

Here, a viewport or a viewport region may refer to a region in a 360-degree video being viewed by a user. A viewpoint is a point in a 360-degree video being viewed by a user and may refer to a center point of a viewport region. That is, a viewport is a region having a viewpoint at the center thereof, and the size and the shape of the region may be determined by an FOV which will be described later.

In the above-described overall architecture for providing a 360-degree video, image/video data which is subjected to the capture/projection/encoding/transmission/decoding/re-projection/rendering processes may be referred to as 360-degree video data. The term "360-degree video data" may be used as the concept including metadata and signaling information related to such image/video data.

To store and transmit media data such as the aforementioned audio and video data, a standardized media file format may be defined. According to an embodiment, a media file may have a file format based on ISO BMFF (ISO base media file format).

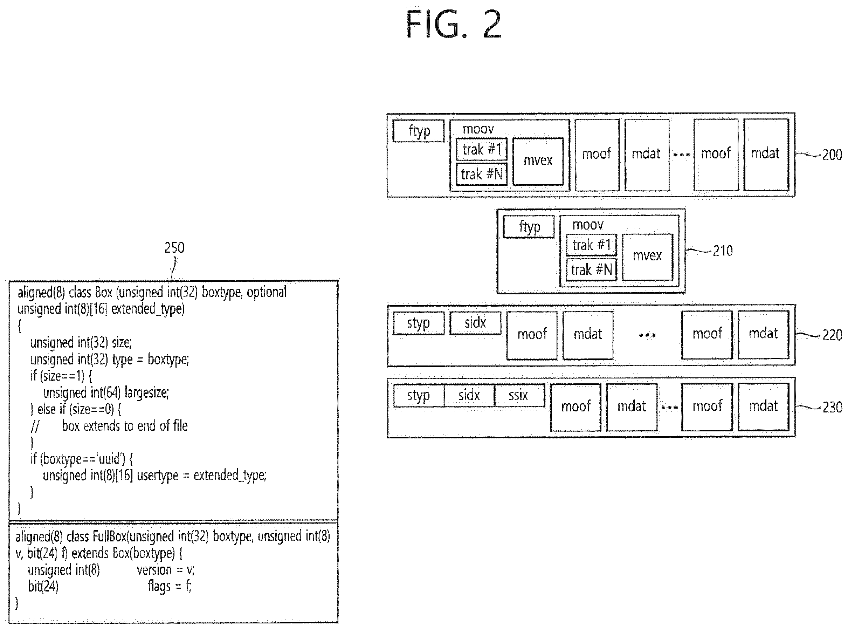

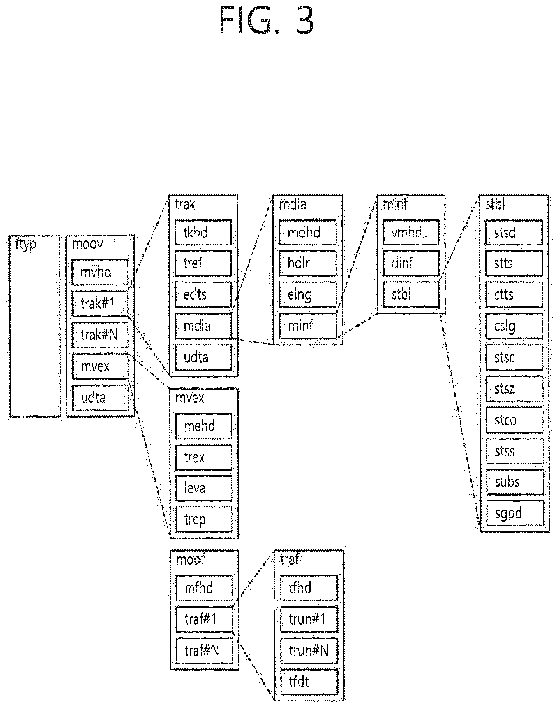

FIGS. 2 and 3 are views illustrating a structure of a media file for storing and transmitting media data according to a processing method of the present invention.

The media file may include at least one box. Here, a box may be a data block or an object including media data or metadata related to media data. Boxes may be in a hierarchical structure and thus data may be classified and media files may have a format suitable for storage and/or transmission of large-capacity media data. Further, media files may have a structure which allows users to easily access media information such as moving to a specific point of media content.

The media file may include an ftyp box, a moov box and/or an mdat box.

The ftyp box (file type box) may provide file type or compatibility-related information about the corresponding media file. The ftyp box may include configuration version information about media data of the corresponding media file. A decoder may identify the corresponding media file with reference to ftyp box.

The moov box (movie box) may be a box including metadata about media data of the corresponding media file. The moov box may serve as a container for all metadata. The moov box may be a highest layer among boxes related to metadata. According to an embodiment, only one moov box may be present in a media file.

The mdat box (media data box) may be a box containing actual media data of the corresponding media file. Media data may include audio samples and/or video samples. The mdat box may serve as a container containing such media samples.

According to an embodiment, the aforementioned moov box may further include an mvhd box, a trak box and/or an mvex box as lower boxes.

The mvhd box (movie header box) may include information related to media presentation of media data included in the corresponding media file. That is, the mvhd box may include information such as a media generation time, change time, time standard and period of corresponding media presentation.

The trak box (track box) may provide information about a track of corresponding media data. The trak box may include information, such as stream-related information, presentation-related information, and access-related information about an audio track or a video track. A plurality of trak boxes may be present depending on the number of tracks.

The trak box may further include a tkhd box (track head box) as a lower box. The tkhd box may include information about the track indicated by the trak box. The tkhd box may include information such as a generation time, a change time and a track identifier of the corresponding track.

The mvex box (movie extend box) may indicate that the corresponding media file may have a moof box which will be described later. To recognize all media samples of a specific track, moof boxes may need to be scanned.

According to an embodiment, the media file may be divided into a plurality of fragments (200). Accordingly, the media file may be fragmented and stored or transmitted. Media data (mdat box) of the media file may be divided into a plurality of fragments and each fragment may include a moof box and a divided mdat box. According to an embodiment, information of the ftyp box and/or the moov box may be required to use the fragments.

The moof box (movie fragment box) may provide metadata about media data of the corresponding fragment. The moof box may be a highest-layer box among boxes related to metadata of the corresponding fragment.

The mdat box (media data box) may include actual media data as described above. The mdat box may include media samples of media data corresponding to each fragment corresponding thereto.

According to an embodiment, the aforementioned moof box may further include an mfhd box and/or a traf box as lower boxes.

The mfhd box (movie fragment header box) may include information about correlation between divided fragments. The mfhd box may indicate the order of divided media data of the corresponding fragment by including a sequence number. Further, it is possible to check whether there is missed data among divided data using the mfhd box.

The traf box (track fragment box) may include information about the corresponding track fragment. The traf box may provide metadata about a divided track fragment included in the corresponding fragment. The traf box may provide metadata such that media samples in the corresponding track fragment may be decoded/reproduced. A plurality of traf boxes may be present depending on the number of track fragments.

According to an embodiment, the aforementioned traf box may further include a tfbd box and/or a trun box as lower boxes.

The tfhd box (track fragment header box) may include header information of the corresponding track fragment. The tfhd box may provide information such as a basic sample size, a period, an offset and an identifier for media samples of the track fragment indicated by the aforementioned traf box.

The trun box (track fragment run box) may include information related to the corresponding track fragment. The trun box may include information such as a period, a size and a reproduction time for each media sample.

The aforementioned media file and fragments thereof may be processed into segments and transmitted. Segments may include an initialization segment and/or a media segment.

A file of the illustrated embodiment 210 may include information related to media decoder initialization except media data. This file may correspond to the aforementioned initialization segment, for example. The initialization segment may include the aforementioned ftyp box and/or moov box.

A file of the illustrated embodiment 220 may include the aforementioned fragment. This file may correspond to the aforementioned media segment, for example. The media segment may further include an styp box and/or an sidx box.

The styp box (segment type box) may provide information for identifying media data of a divided fragment. The styp box may serve as the aforementioned ftyp box for a divided fragment. According to an embodiment, the styp box may have the same format as the ftyp box.

The sidx box (segment index box) may provide information indicating an index of a divided fragment. Accordingly, the order of the divided fragment may be indicated.

According to an embodiment 230, an ssix box may be further included. The ssix box (sub-segment index box) may provide information indicating an index of a sub-segment when a segment is divided into sub-segments.

Boxes in a media file may include more extended information based on a box or a FullBox as shown in the illustrated embodiment 250. In the present embodiment, a size field and a largesize field may represent the length of the corresponding box in bytes. A version field may indicate the version of the corresponding box format. A type field may indicate the type or identifier of the corresponding box. A flags field may indicate a flag associated with the corresponding box.

Meanwhile, the fields (attributes) for 360-degree video of the present invention may be included and delivered in a DASH-based adaptive streaming model.

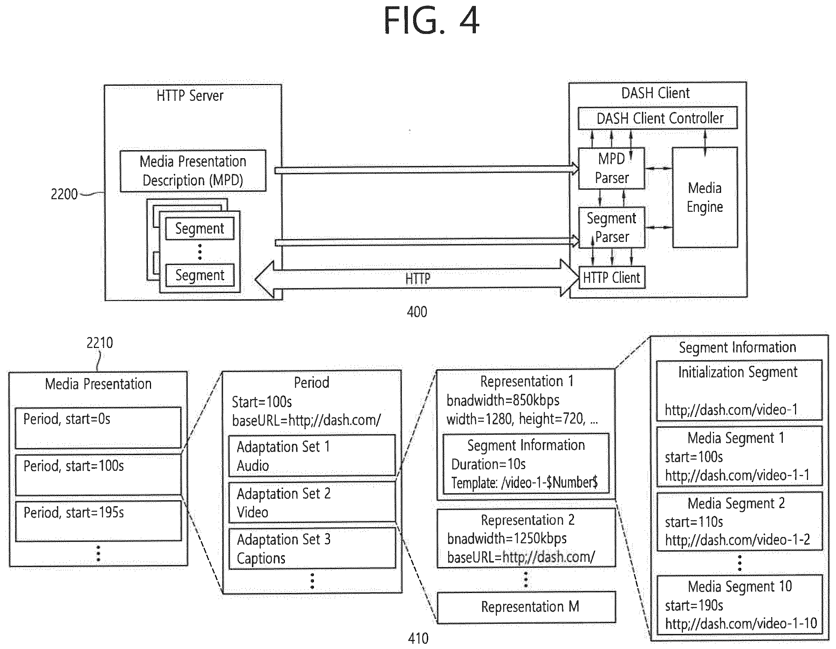

FIG. 4 illustrates an example of the overall operation of a DASH-based adaptive streaming model. The DASH-based adaptive streaming model according to the illustrated embodiment 400 describes operations between an HTTP server and a DASH client. Here, DASH (Dynamic Adaptive Streaming over HTTP) is a protocol for supporting adaptive streaming based on HTTP and may dynamically support streaming according to network state. Accordingly, seamless AV content reproduction may be provided.

First, a DASH client may acquire an MPD. The MPD may be delivered from a service provider such as an HTTP server. The DASH client may send a request for corresponding segments to the server using information on access to the segments which is described in the MPD. Here, the request may be performed based on a network state.

Upon acquisition of the segments, the DASH client may process the segments in a media engine and display the processed segments on a screen. The DASH client may request and acquire necessary segments by reflecting a reproduction time and/or a network state therein in real time (adaptive streaming). Accordingly, content may be seamlessly reproduced.

The MPD (Media Presentation Description) is a file including detailed information for a DASH client to dynamically acquire segments and may be represented in the XML format.

A DASH client controller may generate a command for requesting the MPD and/or segments based on a network state. Further, this controller may control an internal block such as the media engine to be able to use acquired information.

An MPD parser may parse the acquired MPD in real time. Accordingly, the DASH client controller may generate the command for acquiring necessary segments.

The segment parser may parse acquired segments in real time. Internal blocks such as the media block may perform specific operations according to information included in the segments.

An HTTP client may send a request for a necessary MPD and/or segments to the HTTP server. In addition, the HTTP client may transfer the MPD and/or segments acquired from the server to the MPD parser or a segment parser.

The media engine may display content on a screen using media data included in segments. Here, information of the MPD may be used.

A DASH data model may have a hierarchical structure 410. Media presentation may be described by the MPD. The MPD may describe a temporal sequence of a plurality of periods which forms the media presentation. A period may represent one period of media content.

In one period, data may be included in adaptation sets. An adaptation set may be a set of a plurality of exchangeable media content components. Adaptation may include a set of representations. A representation may correspond to a media content component. Content may be temporally divided into a plurality of segments within one representation. This may be for accessibility and delivery. To access each segment, the URL of each segment may be provided.

The MPD may provide information related to media presentation, and a period element, an adaptation set element and a representation element may respectively describe the corresponding period, adaptation set and representation. A representation may be divided into sub-representations, and a sub-representation element may describe the corresponding sub-representation.

Here, common attributes/elements may be defined. The common attributes/elements may be applied to (included in) adaptation sets, representations and sub-representations. The common attributes/elements may include an essential property and/or a supplemental property.

The essential property is information including elements regarded as essential elements in processing data related to the corresponding media presentation. The supplemental property is information including elements which may be used to process data related to the corresponding media presentation. According to an embodiment, when descriptors which will be described later are delivered through the MPD, the descriptors may be defined in the essential property and/or the supplemental property and delivered.

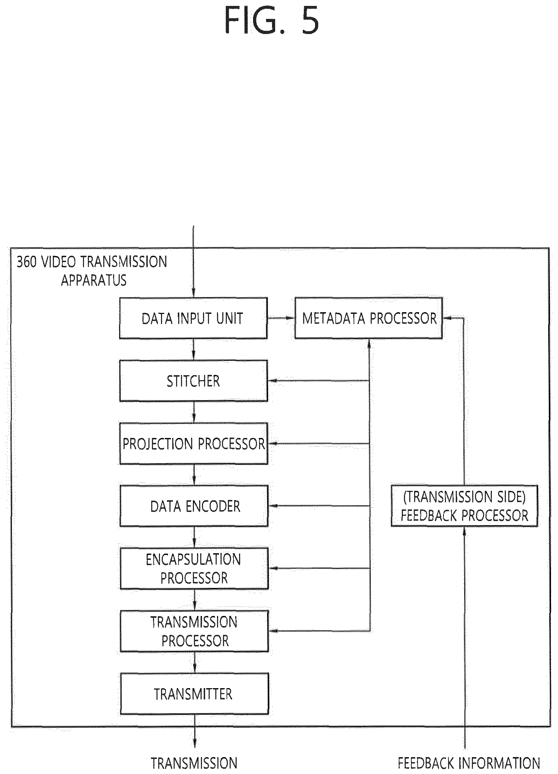

FIG. 5 is a view schematically illustrating a configuration of a 360-degree video transmission apparatus to which the present invention is applicable.

The 360-degree video transmission apparatus according to the present invention may perform operations related the above-described preparation process and the transmission process. The 360-degree video transmission apparatus may include a data input unit, a stitcher, a projection processor, a region-wise packing processor (not shown), a metadata processor, a (transmission side) feedback processor, a data encoder, an encapsulation processor, a transmission processor, and/or a transmitter as internal/external elements.

The data input unit may receive captured images/videos for respective viewpoints. The images/videos for the respective viewpoints may be images/videos captured by one or more cameras. Further, data input unit may receive metadata generated in a capture process. The data input unit may forward the received images/videos for the viewpoints to the stitcher and forward metadata generated in the capture process to the signaling processor.

The stitcher may perform a stitching operation on the captured images/videos for the viewpoints. The stitcher may forward stitched 360-degree video data to the projection processor. The stitcher may receive necessary metadata from the metadata processor and use the metadata for the stitching operation as necessary. The stitcher may forward metadata generated in the stitching process to the metadata processor. The metadata in the stitching process may include information such as information representing whether stitching has been performed, and a stitching type.

The projection processor may project the stitched 360-degree video data on a 2D image. The projection processor may perform projection according to various schemes which will be described later. The projection processor may perform mapping in consideration of the depth of 360-degree video data for each viewpoint. The projection processor may receive metadata necessary for projection from the metadata processor and use the metadata for the projection operation as necessary. The projection processor may forward metadata generated in the projection process to the metadata processor. Metadata generated in the projection processor may include a projection scheme type and the like.

The region-wise packing processor (not shown) may perform the aforementioned region-wise packing process. That is, the region-wise packing processor may perform the process of dividing the projected 360-degree video data into regions and rotating and rearranging regions or changing the resolution of each region. As described above, the region-wise packing process is optional and thus the region-wise packing processor may be omitted when region-wise packing is not performed. The region-wise packing processor may receive metadata necessary for region-wise packing from the metadata processor and use the metadata for a region-wise packing operation as necessary. The region-wise packing processor may forward metadata generated in the region-wise packing process to the metadata processor. Metadata generated in the region-wise packing processor may include a rotation degree, size and the like of each region.

The aforementioned stitcher, projection processor and/or the region-wise packing processor may be integrated into a single hardware component according to an embodiment.

The metadata processor may process metadata which may be generated in a capture process, a stitching process, a projection process, a region-wise packing process, an encoding process, an encapsulation process and/or a process for transmission. The metadata processor may generate 360-degree video-related metadata using such metadata. According to an embodiment, the metadata processor may generate the 360-degree video-related metadata in the form of a signaling table. 360-degree video-related metadata may also be called metadata or 360-degree video-related signaling information according to signaling context. Further, the metadata processor may forward the acquired or generated metadata to internal elements of the 360-degree video transmission apparatus as necessary. The metadata processor may forward the 360-degree video-related metadata to the data encoder, the encapsulation processor and/or the transmission processor such that the 360-degree video-related metadata may be transmitted to a reception side.

The data encoder may encode the 360-degree video data projected on the 2D image and/or region-wise packed 360-degree video data. The 360-degree video data may be encoded in various formats.

The encapsulation processor may encapsulate the encoded 360-degree video data and/or 360-degree video-related metadata in a file format. Here, the 360-degree video-related metadata may be received from the metadata processor. The encapsulation processor may encapsulate the data in a file format such as ISOBMFF, CFF or the like or process the data into a DASH segment or the like. The encapsulation processor may include the 360-degree video-related metadata in a file format. The 360-degree video-related metadata may be included in a box having various levels in SOBMFF or may be included as data of a separate track in a file, for example. According to an embodiment, the encapsulation processor may encapsulate the 360-degree video-related metadata into a file. The transmission processor may perform processing for transmission on the encapsulated 360-degree video data according to file format. The transmission processor may process the 360-degree video data according to an arbitrary transmission protocol. The processing for transmission may include processing for delivery over a broadcast network and processing for delivery over a broadband. According to an embodiment, the transmission processor may receive 360-degree video-related metadata from the metadata processor as well as the 360-degree video data and perform the processing for transmission on the 360-degree video-related metadata.

The transmitter may transmit the 360-degree video data and/or the 360-degree video-related metadata processed for transmission through a broadcast network and/or a broadband. The transmitter may include an element for transmission through a broadcast network and/or an element for transmission through a broadband.

According to an embodiment of the 360-degree video transmission apparatus, the 360-degree video transmission apparatus may further include a data storage unit (not shown) as an internal/external element. The data storage unit may store encoded 360-degree video data and/or 360-degree video-related metadata before the encoded 360-degree video data and/or 360-degree video-related metadata are delivered to the transmission processor. Such data may be stored in a file format such as ISOBMFF. Although the data storage unit may not be required when 360-degree video is transmitted in real time, encapsulated 360-degree data may be stored in the data storage unit for a certain period of time and then transmitted when the encapsulated 360-degree data is delivered over a broadband.

According to another embodiment of the 360-degree video transmission apparatus, the 360-degree video transmission apparatus may further include a (transmission side) feedback processor and/or a network interface (not shown) as internal/external elements. The network interface may receive feedback information from a 360-degree video reception apparatus according to the present invention and forward the feedback information to the transmission-side feedback processor. The transmission-side feedback processor may forward the feedback information to the stitcher, the projection processor, the region-wise packing processor, the data encoder, the encapsulation processor, the metadata processor and/or the transmission processor. According to an embodiment, the feedback information may be delivered to the metadata processor and then delivered to each internal element. Internal elements which have received the feedback information may reflect the feedback information in the following 360-degree video data processing.

According to another embodiment of the 360-degree video transmission apparatus, the region-wise packing processor may rotate regions and map the rotated regions on a 2D image. Here, the regions may be rotated in different directions at different angles and mapped on the 2D image. Region rotation may be performed in consideration of neighboring parts and stitched parts of 360-degree video data on a spherical surface before projection. Information about region rotation, that is, rotation directions, angles and the like may be signaled through 360-degree video-related metadata. According to another embodiment of the 360-degree video transmission apparatus according to the present invention, the data encoder may perform encoding differently for respective regions. The data encoder may encode a specific region in high quality and encode other regions in low quality. The transmission-side feedback processor may forward feedback information received from the 360-degree video reception apparatus to the data encoder such that the data encoder may use encoding methods differentiated for respective regions. For example, the transmission-side feedback processor may forward viewport information received from a reception side to the data encoder. The data encoder may encode regions including an area indicated by the viewport information in higher quality (UHD and the like) than that of other regions.

According to another embodiment of the 360-degree video transmission apparatus, the transmission processor may perform processing for transmission differently for respective regions. The transmission processor may apply different transmission parameters (modulation orders, code rates, and the like) to the respective regions such that data delivered to the respective regions have different robustnesses.

Here, the transmission-side feedback processor may forward feedback information received from the 360-degree video reception apparatus to the transmission processor such that the transmission processor may perform transmission processes differentiated for respective regions. For example, the transmission-side feedback processor may forward viewport information received from a reception side to the transmission processor. The transmission processor may perform a transmission process on regions including an area indicated by the viewport information such that the regions have higher robustness than other regions.

The above-described internal/external elements of the 360-degree video transmission apparatus according to the present invention may be hardware elements. According to an embodiment, the internal/external elements may be changed, omitted, replaced by other elements or integrated.

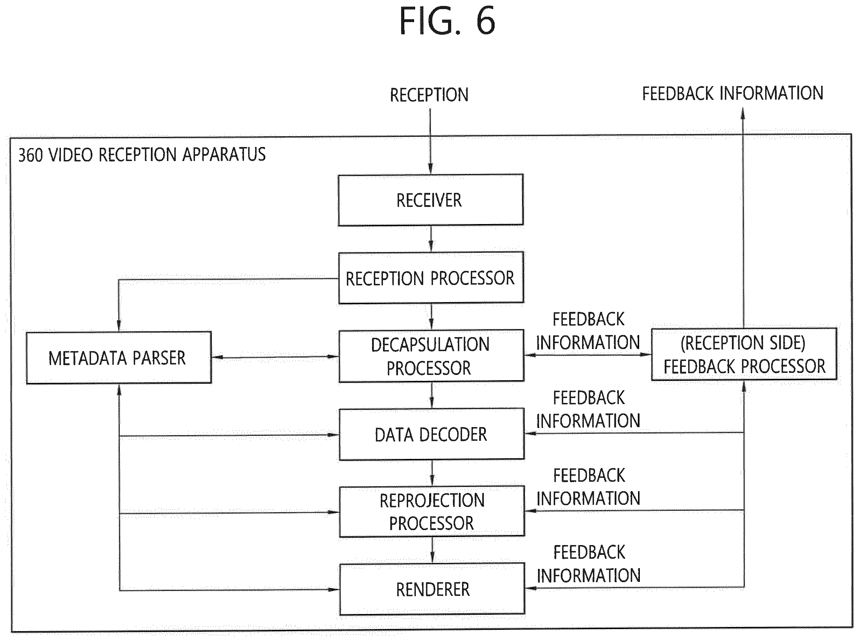

FIG. 6 is a view schematically illustrating a configuration of a 360-degree video reception apparatus to which a processing method according to the present invention is applicable.

The 360-degree video reception apparatus may perform operations related to the above-described processing process and/or the rendering process. The 360-degree video reception apparatus may include a receiver, a reception processor, a decapsulation processor, a data decoder, a metadata parser, a (reception-side) feedback processor, a re-projection processor, and/or a renderer as internal/external elements. A signaling parser may be called the metadata parser.

The receiver may receive 360-degree video data transmitted from the 360-degree video transmission apparatus according to the present invention. The receiver may receive the 360-degree video data through a broadcast network or a broadband depending on a channel through which the 360-degree video data is transmitted.

The reception processor may perform processing according to a transmission protocol on the received 360-degree video data. The reception processor may perform a reverse process of the process of the aforementioned transmission processor such that the reverse process corresponds to processing for transmission performed at the transmission side. The reception processor may forward the acquired 360-degree video data to the decapsulation processor and forward acquired 360-degree video-related metadata to the metadata parser.

The 360-degree video-related metadata acquired by the reception processor may have the form of a signaling table.

The decapsulation processor may decapsulate the 360-degree video data in a file format received from the reception processor. The decapsulation processor may acquired 360-degree video data and 360-degree video-related metadata by decapsulating files in ISOBMFF or the like. The decapsulation processor may forward the acquired 360-degree video data to the data decoder and forward the acquired 360-degree video-related metadata to the metadata parser. The 360-degree video-related metadata acquired by the decapsulation processor may have the form of a box or a track in a file format. The decapsulation processor may receive metadata necessary for decapsulation from the metadata parser as necessary.

The data decoder may decode the 360-degree video data. The data decoder may receive metadata necessary for decoding from the metadata parser. The 360-degree video-related metadata acquired in the data decoding process may be forwarded to the metadata parser.

The metadata parser may parse/decode the 360-degree video-related metadata. The metadata parser may forward acquired metadata to the data decapsulation processor, the data decoder, the re-projection processor, and/or the renderer.

The re-projection processor may perform re-projection on the decoded 360-degree video data. The re-projection processor may re-project the 360-degree video data on a 3D space. The 3D space may have different forms depending on 3D models. The re-projection processor may receive metadata necessary for re-projection from the metadata parser. For example, the re-projection processor may receive information about the type of a used 3D model and detailed information thereof from the metadata parser. According to an embodiment, the re-projection processor may re-project only 360-degree video data corresponding to a specific area of the 3D space on the 3D space using metadata necessary for re-projection.

The renderer may render the re-projected 360-degree video data. As described above, re-projection of 360-degree video data on a 3D space may be represented as rendering of 360-degree video data on the 3D space. When two processes simultaneously occur in this manner, the re-projection processor and the renderer may be integrated and the renderer may perform the processes. According to an embodiment, the renderer may render only a part viewed by a user according to viewpoint information of the user.

The user may view a part of the rendered 360-degree video through a VR display or the like. The VR display is a device which reproduces 360-degree video and may be included in a 360-degree video reception apparatus (tethered) or connected to the 360-degree video reception apparatus as a separate device (un-tethered).

According to an embodiment of the 360-degree video reception apparatus, the 360-degree video reception apparatus may further include a (reception-side) feedback processor and/or a network interface (not shown) as internal/external elements. The reception-side feedback processor may acquire feedback information from the renderer, the re-projection processor, the data decoder, the decapsulation processor and/or the VR display and process the feedback information. The feedback information may include viewport information, head orientation information, gaze information, and the like. The network interface may receive the feedback information from the reception-side feedback processor and transmit the feedback information to a 360-degree video transmission apparatus.

As described above, the feedback information may be consumed at the reception side as well as being transmitted to the transmission side. The reception-side feedback processor may forward the acquired feedback information to internal elements of the 360-degree video reception apparatus such that the feedback information is reflected in processes such as rendering. The reception-side feedback processor may forward the feedback information to the renderer, the re-projection processor, the data decoder and/or the decapsulation processor. For example, the renderer may preferentially render an area viewed by the user using the feedback information. In addition, the decapsulation processor and the data decoder may preferentially decapsulate and decode an area being viewed or will be viewed by the user.

The above-described internal/external elements of the 360-degree video reception apparatus according to the present invention may be hardware elements. According to an embodiment, the internal/external elements may be changed, omitted, replaced by other elements or integrated. According to an embodiment, additional elements may be added to the 360-degree video reception apparatus.

Another aspect of the present invention may pertain to a method for transmitting a 360-degree video and a method for receiving a 360-degree video. The methods for transmitting/receiving a 360-degree video according to the present invention may be performed by the above-described 360-degree video transmission/reception apparatuses or embodiments thereof.

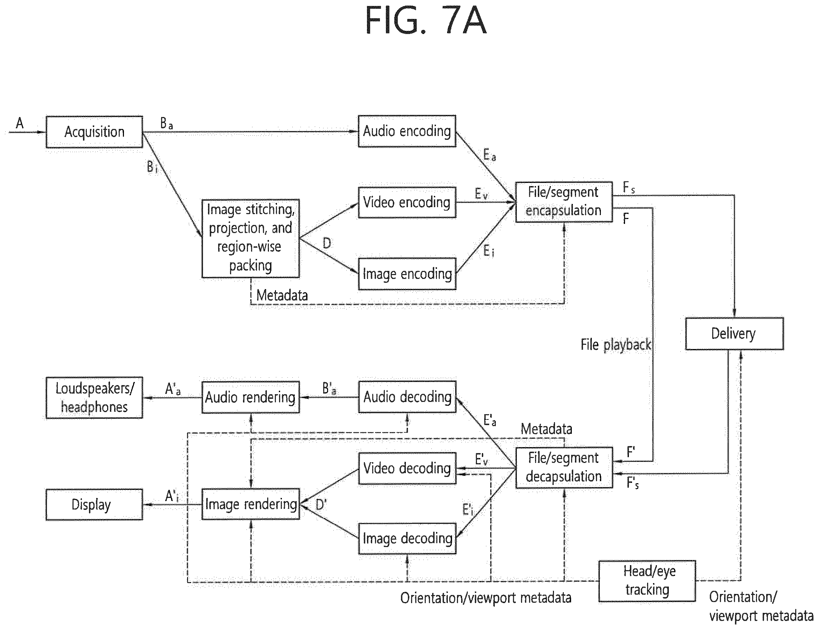

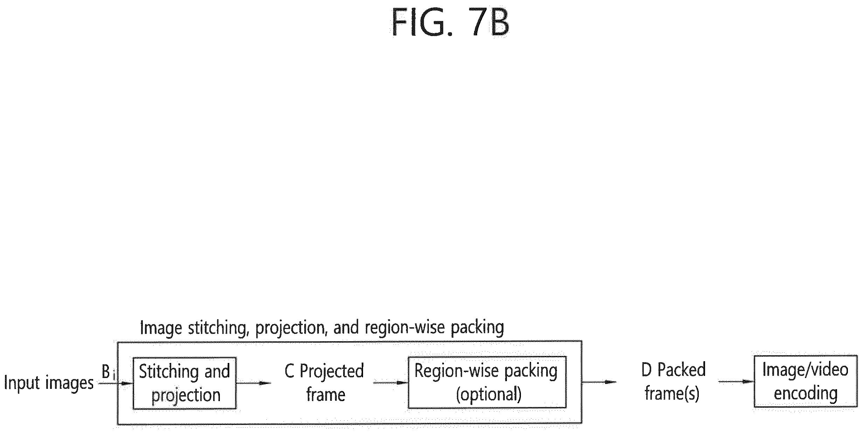

FIG. 7a and FIG. 7b illustrate overall architecture for providing a 360-degree video by a 360-degree video transmission apparatus/360-degree video reception apparatus.

360-degree content may be provided according to the architecture shown in FIG. 7a and FIG. 7b. The 360-degree content may be provided in the form of a file or in the form of a segment-based download or streaming service, such as DASH. Here, the 360-degree content may be referred to as VR content.

Specifically, referring to FIG. 7a, as described above, 360-degree video data and/or 360-degree audio data may be acquired. That is, a 360-degree video may be captured by a 360-degree camera, and the 360-degree video transmission apparatus may acquire the 360-degree video data. The 360-degree audio data may be subjected to audio preprocessing and audio encoding. Through these processes, audio-related metadata may be generated, and the encoded audio and the audio-related metadata may be subjected to processing for transmission (file/segment encapsulation).

The 360-degree video data may be subjected to the aforementioned processes. Referring to FIG. 7a, the stitcher of the 360-degree video transmission apparatus may stitch the 360-degree video data (visual stitching ). In one embodiment, this process may be omitted or may be performed in a reception side.

Further, referring to FIG. 7a, the projection processor of the 360-degree video transmission apparatus may project the 360-degree video data on a 2D image (projection and mapping (packing)). The projecting processor may receive the 360-degree video data (input images), in which case the video transmission apparatus may perform stitching and projection thereon. For example, the 360-degree video transmission apparatus may project and pack fisheye circular images, captured by a plurality of fisheye cameras or a plurality of fisheye lenses and sensors in combination, into one or plurality of pictures/videos. The projection process may be regarded as projecting the stitched 360-degree video data on a 3D space and arranging the projected 360-degree video data on a 2D image. In this specification, this process may be represented as projecting the 360-degree video data on a 2D image. Here, the 3D space may be a sphere or a cube. The 3D space may be identical to s 3D space used for re-projection in the reception side.

The 2D image may also be referred to as a projected frame or a projected picture. Region-wise packing may be optionally performed on the 2D image. When region-wise packing is performed, the position, form, and size of each region may be indicated such that regions on the 2D image may be mapped on a packed frame. The packed frame may be referred to as a packed picture. When region-wise packing is not performed on the projected frame, the projected frame may be identical to the packed frame. A region will be described below. The projection process and the region-wise packing process may be represented as projecting the regions of the 360-degree video data on a 2D image. The 360-degree video data may be directly converted into a packed frame without an intermediate process according to design.

Referring to FIG. 7a, the packed frame about the 360-degree video data may be image-encoded or video-encoded. Even the same 360-degree video content may have pieces of 360-degree video data for different viewpoints, in which case the pieces of 360-degree video data of the content for different viewpoints may be encoded into different bitstreams. The encoded 360-degree video data may be processed into a file format, such as ISOBMFF, by the aforementioned encapsulation processor. Alternatively, the encapsulation processor may process the encoded 360-degree video data into segments. The segments may be included in an individual track for DASH-based transmission.

When the 360-degree video data is processed, 360-degree video-related metadata may be generated as described above. This metadata may be delivered as being included in a video bitstream or a file format. The metadata may be used for encoding, file format encapsulation, processing for transmission, or the like.

The 360-degree audio/video data may be subjected to processing for transmission according to the transmission protocol and may then be transmitted. The 360-degree video reception apparatus may receive the 360-degree audio/-video data via a broadcast network or broadband.

As illustrated in FIG. 7a, a loudspeaker/headphones, a display, and a head/eye tracking component are operated by an external device or a VR application of the 360-degree video reception apparatus. According to an embodiment, the 360-degree video reception apparatus may include all of the loudspeaker/headphones, the display, and the head/eye tracking component. According to an embodiment, the head/eye tracking component may correspond to the aforementioned reception-side feedback processor.

The 360-degree video reception apparatus may perform processing for reception (file/segment decapsulation) on the 360-degree audio/video data. The 360-degree audio data may be subjected to audio decoding and audio rendering and may then be provided to a user through a speaker/headphones.

The 360-degree video data may be subjected to image decoding or video decoding and visual rendering and may then be provided to the user through a display. Here, the display may be a display supporting VR or a normal display.

Specifically, in the rendering process, as described above, the 360-degree video data may be re-projected in a 3D space, and the re-projected 360-degree video data may be rendered. This may be represented as rendering the 360-degree video data on the 3D space.

The head/eye tracking component may acquire and process head orientation information, gaze information, and viewport information about the user, which has been described above.

A VR application that communicates with the reception-side processes may be provided at the reception side.

FIG. 7b illustrates a process of processing a 360-degree video and a 2D image to which a region-wise packing process according to a projection format is applied. FIG. 7b illustrates a process of processing input 360-degree video data. Specifically, referring to FIG. 7b, input 360-degree video data from a viewpoint may be stitched and projected on a 3D projection structure according to various projection schemes, and the 360-degree video data projected on the 3D projection structure may be represented as a 2D image. That is, the 360-degree video data may be stitched and may be projected into the 2D image. The 2D image into which the 360-degree video data is projected may be referred to as a projected frame. The projected frame may be subjected to the above-described region-wise packing process. Specifically, the projected frame may be processed such that an area including the projected 360-degree video data on the projected frame may be divided into regions, and each region may be rotated or rearranged, or the resolution of each region may be changed. That is, the region-wise packing process may indicate a process of mapping the projected frame to one or more packed frames. The region-wise packing process may be optionally performed. When the region-wise packing process is not applied, the packed frame and the projected frame may be the same. When the region-wise packing process is applied, each region of the projected frame may be mapped to a region of the packed frame, and metadata indicating the position, shape, shape, and the size of the region of the packed frame mapped to each region of the projected frame may be derived.

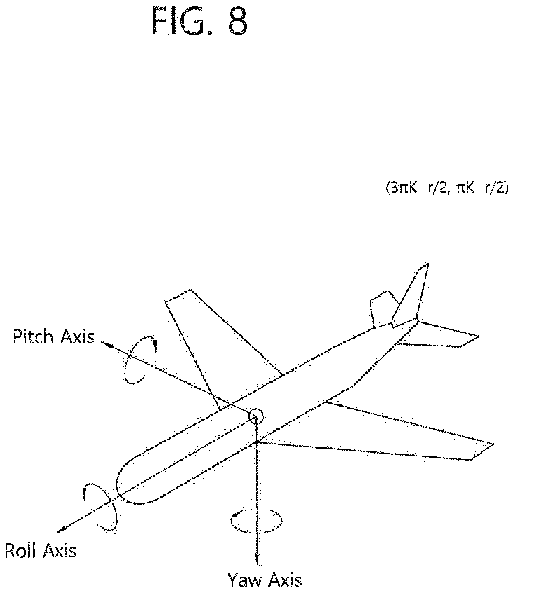

FIG. 8 is a view illustrating the concept of aircraft principal axes for describing a 3D space of a processing method of the present invention. In the present invention, the concept of aircraft principal axes may be used to represent a specific point, position, direction, interval, region, and the like in a 3D space. That is, the concept of aircraft principal axes may be used to describe a 3D space before projection or after re-projection and perform signaling therefor in the present invention. According to an embodiment, a method using the concept of X, Y and Z axes or spherical coordinates may be used.

An aircraft can freely rotate three-dimensionally. Axes forming a three dimension are referred to as a pitch axis, a yaw axis, and a roll axis, which may be abbreviated to as a pitch, a yaw, and a roll or may be represented as a pitch direction, a yaw direction, and a roll direction in the description.

The pitch axis may refer to an axis which is a base of a direction in which the front end of the aircraft rotates up and down. In the illustrated concept of aircraft principal axes, the pitch axis may refer to an axis which connects the wings of the aircraft.

The yaw axis may refer to an axis which is a base of a direction in which the front end of the aircraft rotates to the left and right. In the illustrated concept of aircraft principal axes, the yaw axis may refer to an axis which connects the top to the bottom of the aircraft. The roll axis may refer to an axis which connects the front end to the tail of the aircraft in the illustrated concept of aircraft principal axes, and a rotation in the roll direction may refer to a rotation based on the roll axis. As described above, a 3D space in the present invention may be described using the concept of the pitch, the yaw, and the roll.

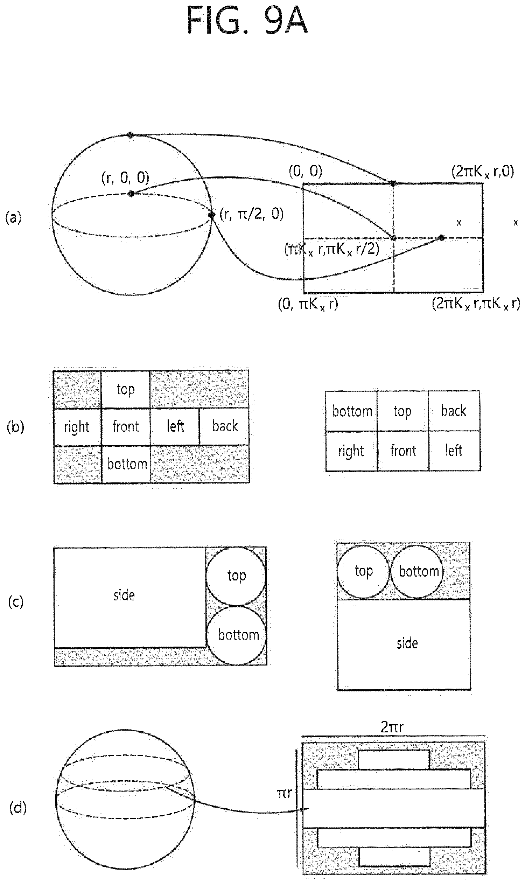

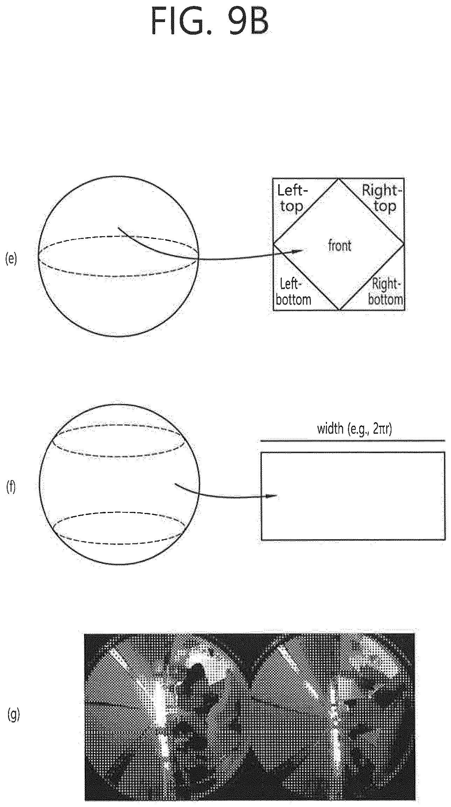

FIG. 9a and FIG. 9b illustrate projection schemes of a processing method according to the present invention. As described above, the projection processor of the 360-degree video transmission apparatus according to the present invention may project stitched 360-degree video data on a 2D image. In this process, various projection schemes may be used. That is, the projection processor may project stitched 360-degree video data on a 2D image according to various projection schemes. The 2D image may be referred to as a projected picture.

According to one embodiment of the present invention, projection may be performed using an equirectangular projection scheme. The projection processor may project 360-degree video data using the equirectangular projection scheme. In FIG. 9a, (a) illustrates the equirectangular projection scheme. The equirectangular projection scheme may be referred to as equirectangular projection. When the equirectangular projection scheme is used, a point $(r, \theta_0, 0)$, that is, $\theta = \theta_0$ and $\varphi = 0$, on the spherical surface may be mapped to a center pixel of a 2D image. Also, it may be assumed that a principal point of a front camera is a point $(r, 0, 0)$ on the spherical surface, and $\varphi_0 = 0$. Accordingly, a converted value $(x, y)$ on the XY coordinate system may be converted into a pixel $(X, Y)$ on the 2D image by the following equation.

[Equation 1]

$$X = K_x * x + X_O = K_x * (\theta - \theta_0) * r + X_O$$

$$Y = -K_y * y - Y_O$$

When a top left pixel of the 2D image is positioned at $(0, 0)$ on the XY coordinate system, an offset for the x-axis and an offset for the y-axis may be represented by the following equation.

[Equation 2]

$$X_O = K_x * \pi * r$$

$$Y_O = -K_y * \pi/2 * r$$

Using these offsets, the equation for conversion onto the XY coordinate system represented by Equation 1 may be modified as follows.

[Equation 3]

$$X = K_x x + X_O = K_x * (\pi + \theta - \theta_0) * r$$

$$Y = -K_y y - Y_O = K_y * (\pi/2 - \varphi) * r$$

For example, when $\theta_0 = 0$, that is, when the center pixel of the 2D image indicates data corresponding to $\theta = 0$ on the spherical surface, the spherical surface may be mapped to an area defined by width $= 2K_x\pi r$ and height $= K_x\pi r$ relative to $(0, 0)$ on the 2D image. Data corresponding to $\varphi = \pi/2$ on the spherical surface may be mapped to an entire top side on the 2D image. Further, data corresponding to $(r, \pi/2, 0)$ on the spherical surface may be mapped to a point $(3\pi K_x r/2, \pi K_x r/2)$ on the 2D image.

A reception side may re-project 360-degree video data on a 2D image onto a spherical surface. Specifically, the re-projection processor of the 360-degree video reception apparatus may re-project 360-degree video data on a 2D image onto a spherical surface. The 2D image may be referred to as a projected picture. This may be represented by the following

equation for conversion.

[Equation 4]

$$\theta = \theta_0 + X/K_x * r - \pi$$
$$\varphi = \pi/2 - Y/K_y * r$$

For example, a pixel defined by XY coordinates $(K_x \pi r, 0)$ on the 2D image may be re-projected into a point defined by $\theta = \theta_0$ and $\varphi = \pi/2$ on the spherical surface.

According to another embodiment of the present invention, projection may be performed using a cubic projection scheme. The projection processor may project 360-degree video data using the cubic projection scheme. The cubic projection scheme may also be referred to as cube map projection (CMP). In FIG. 9a, (b) illustrates the cubic projection scheme. For example, stitched 360-degree video data may be represented on a spherical surface. A projection processor may divide the 360-degree video data in a cubic shape and may project the 360-degree video data onto a 2D image. The 360-degree video data on the spherical surface may be projected on the 2D image corresponding to each face of a cube as shown in the left figure or the right figure in (b) of FIG. 9a.

According to still another embodiment of the present invention, projection may be performed using a cylindrical projection scheme. The projection processor may project 360-degree video data using the cylindrical projection scheme. In FIG. 9a, (c) illustrates the cylindrical projection scheme. Assuming that stitched 360-degree video data may be represented on a spherical surface, the projection processor may divide the 360-degree video data in a cylindrical shape and may project the 360-degree video data onto a 2D image. The 360-degree video data on the spherical surface may be projected on the 2D image corresponding to a side face, a top face, and a bottom face of a cylinder as shown in the left figure or the right figure in (b) of FIG. 9a..

According to yet another embodiment of the present invention, projection may be performed using a tile-based projection scheme. The projection processor may project 360-degree video data using the tile-based projection scheme. In FIG. 9a, (d) illustrates the tile-based projection scheme. When the tile-based projection scheme is used, the projection processor may divide 360-degree video data on a spherical surface into one or more subareas to be projected onto a 2D image as shown in (d) of FIG. 9a. The subareas may be referred to as tiles.

According to still another embodiment of the present invention, projection may be performed using a pyramid projection scheme. The projection processor may project 360-degree video data using the pyramid projection scheme. In FIG. 9b, (e) illustrates the pyramid projection scheme. Assuming that stitched 360-degree video data may be represented on a spherical surface, the projection processor may view the 360-degree video data as a pyramid shape and may divide the 360-degree video data into faces to be projected onto a 2D image. The 360-degree video data on the spherical surface may be projected on the 2D image corresponding to a front face of a pyramid and four side faces of the pyramid including a left-top, left-bottom, right-top, and right-bottom faces as shown in the left figure or the right figure in (e) of FIG. 9b. Herein, the bottom surface may be an area including data acquired by a camera that faces the front surface. Here, the front face may be a region including data acquired by a front camera

According to yet another embodiment of the present invention, projection may be performed using a panoramic projection scheme. The projection processor may project 360-degree video data using the panoramic projection scheme. In FIG. 9b, (f) illustrates the panoramic projection scheme. When the panoramic projection scheme is used, the projection processor may project only a side face of 360-degree video data on a spherical surface onto a 2D image as shown in (f) of FIG. 9b. This scheme may be the same as the cylindrical projection scheme except that there are no top and bottom faces.

According to yet another embodiment of the present invention, projection may be performed without stitching. In FIG. 9b, (g) illustrates a case where projection is performed without stitching. When projecting is performed without stitching, the projection processor may project 360-degree video data onto a 2D image as it is as shown in (g) of FIG. 9. In this case, without stitching, images acquired from respective cameras may be projected on a 2D image as it is.

Referring to (g) of FIG. 9b, two images may be projected onto a 2D image without stitching. Each image may be a fisheye video acquired by a spherical camera through each sensor. As described above, a reception side may stitch image data acquired by camera sensors and may map the stitched image data onto a spherical surface, thereby rendering a spherical video, that is, a 360-degree video.

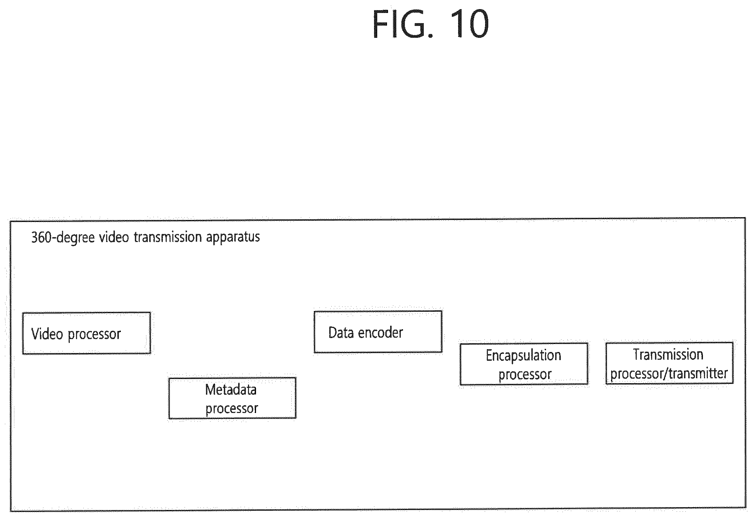

FIG. 10 illustrates a 360-degree video transmission apparatus for performing a processing method according to one aspect of the present invention. According to one aspect, the present disclosure may relate to a 360-degree video transmission apparatus. The 360-degree video transmission apparatus may process 360-degree video data, may generate signaling information about the 360-degree video data, and may transmit the 360-degree video data and the signaling information to a reception side. Specifically, the 360-degree video transmission apparatus may map circular images acquired by a fisheye lens to a picture, may encode the picture, may generate signaling information about 360-degree video data, and may transmit the 360-degree video data and/or the signaling information in various forms using various methods.

The 360-degree video transmission apparatus may include a video processor, a data encoder, a metadata processor, an encapsulation processor, and/or a transmitter as internal/external components.

The video processor may process at least one or more circular images captured by a camera having at least one fisheye lens. Here, the circular images may include 360-degree video data. The video processor may map the circular images to a picture. According to an embodiment, the video processor may map the circular images to rectangular regions of the picture. Here, the picture may have a fisheye video format. In an embodiment, this mapping process may be referred to as packing of the circular images. When fisheye 360-degree video data acquired by the fisheye lens is used, the video processor may be a component that replaces the stitcher, the projection processor, and/or the region-wise packing processor described above. In this case, the circular images acquired by the fisheye lens may be directly mapped to the picture without any processing.

The data encoder may encode the picture to which the circular images are mapped. The data encoder may correspond to the data encoder described above.

The metadata processor may generate signaling information about the 360-degree video data. The metadata processor may correspond to the metadata processor described above.

The encapsulation processor may encapsulate the encoded picture and the signaling information into a file. The encapsulation processor may correspond to the encapsulation processor described above.

The transmitter may transmit the 360-degree video data and the signaling information. When these pieces of information are encapsulated into files, the transmitter may transmit the files. The transmitter may be a component corresponding to the transmission processor and/or the transmitter described above. The transmitter may transmit the pieces of information through a broadcast network or broadband.

In one embodiment of the 360-degree video transmission apparatus, the signaling information may include fisheye video information for processing the circular images in a receiver. The fisheye video information is one piece of the signaling information and may provide the circular images, the rectangular regions mapped to the circular images, monoscopic 360-degree video data or stereoscopic 360-degree video data, which is delivered in the form of a circular image, information about the type of the rectangular regions, and the like. The fisheye video information may also provide information necessary for a reception side to extract, project, and blend the circular images, which will be described in detail later.

In one embodiment of the 360-degree video transmission apparatus, the fisheye video information may include information describing a circular image of the circular images. Also, the fisheye video information may include information describing a rectangular region of the rectangular regions. The information describing the circular image and/or the information describing the rectangular region may be used for the receiver to acquire the fisheye 360-degree video data delivered via the circular images. According to an embodiment, these pieces of information may be used to extract (fisheye) 360-degree video data of a region which corresponds to the intersection of a region corresponding to the circular images and the rectangular regions.

In one embodiment of the 360-degree video transmission apparatus, the information describing the circular image may include attribute information about the circular image. According to an embodiment, the information describing the circular image may include information about the view angle of the fisheye lens that captures the circular image. Here, the view angle of the fisheye lens may be expressed as the field of view (FOV) of the fisheye lens, which may be different from the FOV of the reception-side VR display. As described above, the FOV of the VR display may refer to the range of a view displayed at a time when reproducing a 360-degree video. According to an embodiment, the information describing the circular image may include information indicating the coordinates of the center point of a region occupied by the circular image in a 3D space. Here, the coordinates of the center point may be represented by yaw, pitch, and/or roll values.

In one embodiment of the 360-degree video transmission apparatus, the information describing the rectangular region may include information specifying the rectangular region and/or information specifying a circular image mapped to the rectangular region. The information specifying the rectangular region may indicate the position of the top left point of the rectangular region, the width of the rectangular region, and/or the height of the rectangular region, thereby specifying the rectangular region. The information specifying the circular image mapped to the rectangular region may indicate the coordinates of the center point of the circular image and/or the radius of the circular image, thereby specifying the circular image.

In one embodiment of the 360-degree video transmission apparatus, the information describing the rectangular region may include region type information and/or region addition information. According to an embodiment, the region addition information may have a different meaning depending on the value of the region type information.

In one embodiment of the 360-degree video transmission device, the region type information and/or the region addition information may have different meanings depending on whether the circular images include monoscopic 360-degree video data or stereoscopic 360-degree video data. According to an embodiment, the region type information and/or the region addition information may also indicate information about whether circular images are frame-packed in a corresponding region, the viewing direction and/or the viewing position of the circular image, and the like. When two or more circular images are mapped to one region, the circular images may be expressed as being frame-packed. When only one circular image is mapped to one region, the circular image may be expressed as not being frame-packed.

In one embodiment of the 360-degree video transmission apparatus, monoscopic 360-degree video data may refer to 360-degree video data provided in two dimensions (2D). Stereoscopic 360-degree video data may refer to 360-degree video data that can be provided in 3D. Stereoscopic 360-degree video data may also be provided in 2D depending on the capabilities of the receiver.

In one embodiment of the 360-degree video transmission apparatus, the viewing direction of the circular image may refer to the direction of the region in which the circular image is located in the 3D space. For example, when the circular image corresponds to the front of the 3D space, such as a sphere, the view direction of the circular image may be front.

In one embodiment of the 360-degree video transmission apparatus, the viewing position of the circular image may indicate whether the circular image corresponds to a left image or a right image when delivering stereoscopic 360 degrees video data. For example, when the circular image has an image corresponding to a left image of a stereoscopic 360-degree video, the viewing position of the circular image may be left.

In one embodiment of the 360-degree video transmission apparatus, the video processor may map one circular image to one rectangular region. According to an embodiment, the video processor may map a plurality of circular images to one rectangular region. According to an embodiment, the video processor may map N circular images to M rectangular regions.

In one embodiment of the 360-degree video transmission apparatus, when the circular images deliver stereoscopic 360-degree video data, the region type information may indicate the viewing position of a single circular image mapped to a rectangular region. Here, the region addition information may indicate the viewing direction of the single circular image.

In one embodiment of the 360-degree video transmission apparatus, when the circular images deliver stereoscopic 360-degree video data, the region type information may indicate whether a plurality of circular images having the same viewing direction is mapped to a corresponding rectangular region. That is, the region type information may indicate whether the circular images frame-packed in the rectangular region are grouped based on the same viewing direction. Here, the region addition information may indicate the same viewing direction.

In one embodiment of the 360-degree video transmission apparatus, when the circular images deliver stereoscopic 360-degree video data, the region type information may indicate whether a plurality of circular images having the same viewing position is mapped to a corresponding rectangular region. That is, the region type information may indicate whether the circular images frame-packed in the rectangular region are grouped based on the same viewing position. Here, the region addition information may indicate the same viewing position.

In one embodiment of the 360-degree video transmission apparatus, the video processor may not stitch the circular images or may not perform region-wise packing on the circular image when processing the stitching circular images. That is, the video processor may omit stitching and region-wise packing when processing the fisheye 360-degree video data based on the fisheye lens.

In one embodiment of the 360-degree video transmission apparatus, the signaling information or the fisheye video information about the 360-degree video data may be generated in the form of a Dynamic Adaptive Streaming over HTTP (DASH) descriptor. The fisheye video information may be configured as a DASH descriptor having a different format only, in which case the DASH descriptor may be included in a media presentation description (MPS) and may be transmitted via a separate path, which is different from that for a (fisheye) 360-degree video data file. In this case, the fisheye video information may be encapsulated in a file, not together with the 360-degree video data. That is, the fisheye video information may be transmitted in the form of an MPD or the like to the reception side through a separate signaling channel. According to an embodiment, the fisheye video information may be included both in the file and in separate signaling information, such as an MPD.

In one embodiment of the 360-degree video transmission apparatus, the signaling information or the fisheye video information about the 360-degree video data may be inserted into a file in the form of an ISO base media file format (ISOBMFF) box. According to an embodiment, the file may be an ISOBMFF file or a file according to a common file format (CFF). In this case, the fisheye video information may be located in a sample entry level or the like.

In one embodiment of the 360-degree video transmission apparatus, the signaling information or the fisheye video information about the 360-degree video data may be delivered in a video level in the form of a supplemental enhancement information (SEI) message.

In one embodiment of the 360-degree video transmission device, the circular image is an image for a 360-degree video captured by the fisheye lens and may be referred to as a fisheye video or the like.

In one embodiment of the 360-degree degree video transmission apparatus, the 360-degree video transmission apparatus may further include a (transmission-side) feedback processor. The (transmission-side) feedback processor may correspond to the (transmission-side) feedback processor described above. The (transmission-side) feedback processor may receive feedback information indicating the current viewport of a user from the reception side. The feedback information may include information specifying a viewport that the user is currently viewing through a VR device or the like. As described above, tiling may be performed using the feedback information. Here, one region of a sub-picture or a picture transmitted by the 360-degree video transmission apparatus may be one region of a sub-picture or a picture corresponding to the viewport indicated by the feedback information. Here, the fisheye video information may provide information about the fisheye 360-degree video data relating to the one region of the sub-picture or the picture corresponding to the viewport indicated by the feedback information.

In one embodiment of the 360-degree video transmission apparatus, the fisheye video information may provide relevant signaling information based on the case where the fisheye 360-degree video data transmits the entire image. According to an embodiment, when a sub-picture of the entire image is transmitted, the fisheye video information may further include pieces of information about whether a fisheye lens-based image is included in the sub-picture and about a region corresponding to an image included in the sub-picture. Here, the sub-picture may correspond to a tile in the tiling operation described above.

In one embodiment of the 360-degree video transmission apparatus, the fisheye video information may be applied not only when transmitting an image captured by the fisheye lens-based camera but also when transmitting an image captured by a general lens-based camera. That is, not only when a fisheye lens-based image is transmitted to the receiver but also when a general lens-based image is transmitted to the receiver, the fisheye video information according to the embodiments of the present invention may be used so that the receiver provides a 360-degree video service, a panoramic video service, or a general video service. For example, six general lens-based cameras may be used and configured to match the respective faces of a cubemap. In this case, the fisheye video information proposed in the present invention may also transmit a stereoscopic or monoscopic camera configuration, information for extracting an individual image, and information for rendering relating to a corresponding image.

In one embodiment of the 360-degree video transmission apparatus, the 3D space may be a sphere. According to an embodiment, the 3D space may be a cube or the like.

In one embodiment of the 360-degree video transmission apparatus, the 360-degree video transmission apparatus may further include a data input unit, which is not shown. The data input unit may be an internal component corresponding to the data input unit described above.

The embodiments of the 360-degree video transmission apparatus may be combined with each other. In addition, the internal/external components of the 360-degree video transmission apparatus according to the present invention may be added, changed, replaced, or deleted according to the embodiment. Also, the internal/external components of the 360-degree video transmission apparatus may be configured as hardware components.

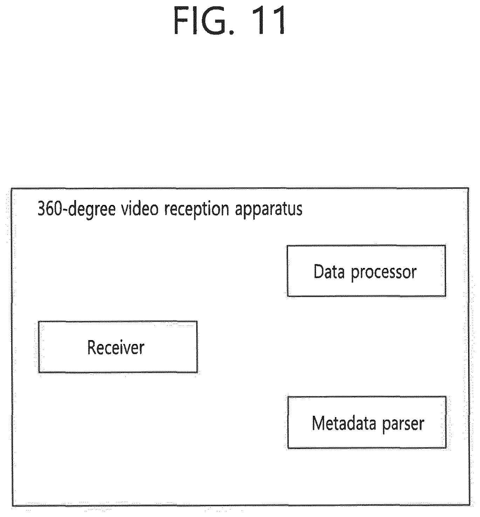

FIG. 11 illustrates a 360-degree video reception apparatus for a processing method according to another aspect of the present invention.

According to another aspect, the present disclosure may relate to a 360-degree video reception apparatus. The 360-degree video reception apparatus may receive and process 360-degree video data and/or signaling information about the 360-degree video data, thus rendering a 360-degree video for a user. The 360-degree video reception apparatus may be a device for a reception side corresponding to the 360-degree video transmission apparatus described above. Here, the signaling information may indicate metadata.

Specifically, the 360-degree video reception apparatus may receive fisheye 360-degree video data and/or signaling information about the 360-degree video data, may acquire the signaling information, may decode the fisheye 360-degree video data based on the signaling information, may extract circular images from a pictures of the fisheye 360-degree video data and rectangular regions of the picture, may project the extracted circular images on a plane, may combine the projected circular images into one picture by blending, and may render a fisheye 360-degree video based on the picture.

The 360-degree video reception apparatus may include a receiver, a data processor, and/or a metadata parser as internal/external components.

The receiver may receive (fisheye) 360-degree video data and/or signaling information about the 360-degree video data. According to an embodiment, the receiver may receive these pieces of information in the form of a file. According to an embodiment, the receiver may receive these pieces of information through a broadcast network or broadband. The receiver may be a component corresponding to the receiver described above.

The data processor may obtain the (fisheye) 360-degree video data and/or the signaling information about the 360-degree video data from the received files. The data processor may process the received information according to a transmission protocol, may decapsulate the file, or may decode the 360-degree video data. Here, the data processor that processes the fisheye 360-degrees video data may extract circular images from a picture including the fisheye 360-degree video data. In this extraction process, the circular images may be extracted from rectangular regions of the picture. Further, the data processor may project the extracted circular images on respective planes. In addition, the data processor may compose the plurality of planes on which the circular images are projected into one plane. This composition process may be referred to as blending. According to an embodiment, the projection process and the blending process may be collectively referred to as stitching. According to an embodiment, the blending process may be referred to as boundary region merging. For reference, this stitching may be different from stitching performed in a transmission side. Then, the data processor may perform rendering based on the composed plane, thereby generating a viewport. The video processor may use signaling information obtained from the metadata parser when performing these processes. The data processor may be a component that performs a function corresponding to the reception processor, the decapsulation processor, the data decoder, and/or the renderer described above.

The metadata parser may parse the obtained signaling information. The metadata parser may correspond to the metadata parser described above.

The 360-degree video reception apparatus has embodiments corresponding to the aforementioned 360-degree video transmission apparatus. The 360-degree video reception apparatus and the internal/external components thereof perform embodiments corresponding to the embodiments of the 360-degree video transmission apparatus described above.

The embodiments of the 360-degree video reception apparatus may be combined with each other. In addition, the internal/external components of the 360-degree video reception apparatus may be added, changed, replaced, or deleted according to the embodiment. Also, the internal/external components of the 360-degree video reception apparatus may be configured as hardware components.

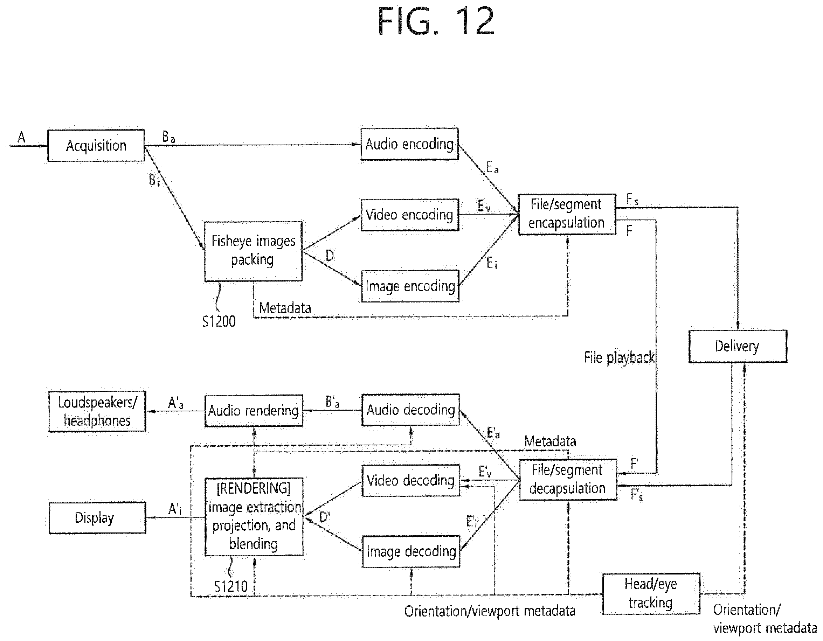

FIG. 12 illustrates a process of processing fisheye 360-degree video data according to one embodiment of the present invention.

As described above, a 360-degree video transmission apparatus and a 360-degree video reception apparatus may process fisheye 360-degree video data.

In the illustrated embodiment of the process of processing the fisheye 360-degree video data, a video processor of the 360-degree video transmission apparatus may map circular images having the fisheye 360-degree video data to rectangular regions of a picture (S1200).

First, the 360-degree video transmission apparatus may acquire an image captured by a 360-degree camera.

Here, the 360-degree camera may refer to at least one fisheye camera or a camera having at least one fisheye lens and sensors.

The video processor of the 360-degree video transmission apparatus may map/pack the circular images onto the picture (S1200). Then, as described above, the video processor may encode the picture, and a metadata processor may generate signaling information about the fisheye 360-degree video data, the circular images, and/or the rectangular regions. Thereafter, the 360-degree video data and/or the signaling information may be subjected to a file encapsulation process or the like and may be transmitted to a reception side.

As shown, stitching, projection, and/or region-wise packing operations of the video processor may be replaced by an operation of packing the circular images (S 1200).

In the illustrated embodiment of the process of processing the fisheye 360-degree video data, a data processor of the 360-degree video reception apparatus may extract the fisheye 360-degree video data corresponding to the circular images from the rectangular regions of the picture, may project the extracted data on planes, and may combine the planes into one plane by blending the planes (S1210).

A receiver of the 360-degree video reception apparatus may acquire and process the 360-degree video data and/or the signaling information from a received broadcast signal. The data processor and a metadata parser of the 360-degree video reception apparatus may obtain the fisheye 360-degree video data and/or the signaling information from a received bitstream.

The data processor of the 360-degree video reception apparatus may extract the circular images from the picture having the fisheye 360-degree video data. The data processor may extract images about a single fisheye lens.

According to an embodiment, the data processor may first extract the rectangular regions and may then extract a region mapped to a circular image from the rectangular regions. In this case, a region corresponding to the internal intersection of a rectangular region and the region mapped to the circular image may be actual fisheye 360-degree video data acquired through the fisheye lens. The remaining invalid regions may be discriminatively indicated with black or the like. According to an embodiment, the data processor may extract a region corresponding to the intersection of the rectangular regions and the region mapped to the circular image. Here, the region mapped to the circular image may be referred to as a circular region.

The data processor may specify a rectangular region using fisheye video information illustrated above. Here, information about the top-left point of the rectangular region, width information about the rectangular region, and/or height information about the rectangular region provided by the fisheye video information may be used. The data processor may also specify the region mapped to the circular image using the fisheye video information. Here, information about the center point and/or radius information provided by the fisheye video information may be used.

The data processor of the 360-degree video reception apparatus may project the extracted circular images on a plane (projection). Here, the plane may be an equirectangular projection (ERP) plane. This projection process may be an intermediate step for re-projecting the circular images into a 3D space, such as a spherical coordinate system.

A valid region having the actual fisheye 360-degree video data may be defined as the intersection of a rectangular region and a region mapped to a circular image. Here, the data processor may project the circular images in a valid region using ERP considering that the valid region has a one-to-one relationship with a region that the valid region has in a 3D space. As described above, the region that the valid region has in the 3D space may be defined by view angle information and information about the center point. The information about the center point may be expressed by yaw, pitch, and roll or by azimuth, elevation, and tilt.

According to an embodiment, the data processor may project an extracted image in the valid region on a plane using standardized projection according to the view angle.

According to an embodiment, when the axis of the lens is not consistent between the circular images due to device characteristics or when the lens is not properly corrected in an ISP, the metadata processor for the transmission side may generate additional parameters therefor and may include the additional parameters in the signaling information. These additional parameters may be used by the data processor for the reception side to perform projection. These additional parameters may include a lens distortion correction parameter and/or a lens shading correction parameter.

The data processor of the 360-degree video reception apparatus may compose at least one projected plane into one ERP plane (blending). According to an embodiment, a portion where circular images overlap may occur due to the view angle of the fisheye lens and the coordinates of the center point, and the data processor may appropriately blend pixel information of the overlapping portion.

The data processor of the 360-degree video reception apparatus may perform rendering based on the finally composed ERP plane (picture), thereby generating a corresponding viewport.

As shown, the image rendering process of the data processor may be replaced with the aforementioned operations of extraction, projection, blending, and the like (S1210).

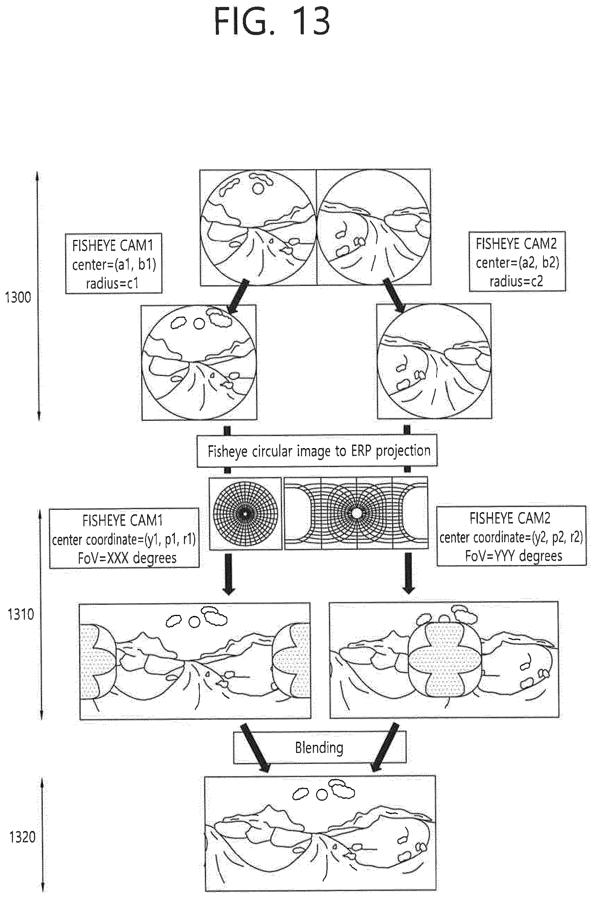

FIG. 13 illustrates a process of processing fisheye 360-degree video data according to another embodiment of the present invention.

As described above, a data processor of a 360-degree video reception apparatus may extract fisheye 360-degree video data corresponding to a circular image from rectangular regions of a picture, may project the extracted data on planes, and may combine the planes into one plane by blending the planes.

In the illustrated embodiment of the process of processing the 360-degree video data, two circular images obtained by two fisheye lenses having a view angle of 180 degrees or greater may be transmitted to a reception side.

In this embodiment, the data processor may extract a valid region corresponding to the fisheye 360-degree video data of the circular image from the picture (1300). A first valid region may be represented by the intersection of a first rectangular region and a first circular region. Here, the circular region may be a region specified by a center point of (al, b1) and a radius of c1. A second valid region may be represented by the intersection of a second rectangular region and a second circular region. Here, the circular region may be a region specified by a center point of (a2, b2) and a radius of c2. According to an embodiment, a region other than the valid region may be processed as black.

Subsequently, the data processor may project each extracted image onto a separate ERP plane (1310). A first image may have center coordinates of (y1, p1, r1) in a 3D space and a view angle of XXX degrees. A second image may have center coordinates of (y2, p2, r2) in the 3D space and a view angle of YYY degrees. As a result of projection, two projected ERP planes may be output.

The data processor may blend these ERP planes into a single ERP plane (1320). The data processor may generate a viewport based on the one blended ERP plane (1330).

The above-described information, such as the specifications of the rectangular regions, the specifications of the circular regions, and the view angles, may be obtained through signaling information about the 360-degree video data.

The foregoing embodiments of the process of processing the fisheye 360-degree video data according to the present invention may be combined with each other. In embodiments of a 360-degree video transmission apparatus and a 360-degree video reception apparatus according to the present invention, a process of processing fisheye 360-degree video data may be the process of processing fisheye 360-degree video data according to the foregoing embodiments.

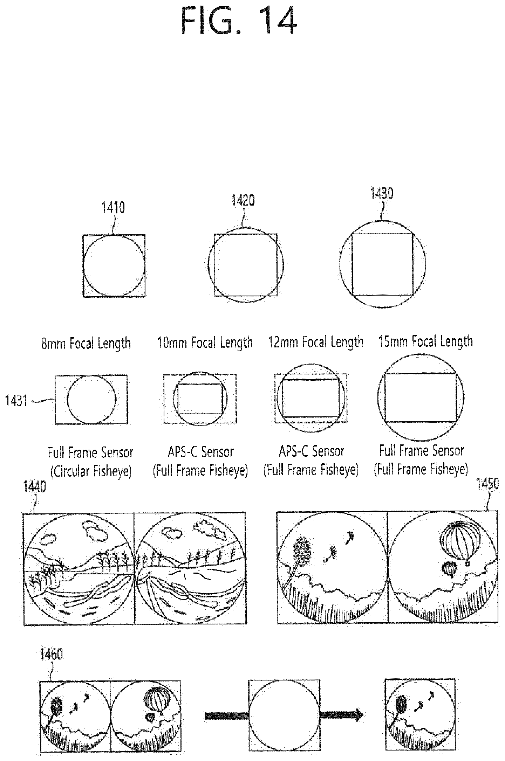

FIG. 14 illustrates a process of extracting fisheye 360-degree video data according to one embodiment of the present invention.

As described above, a data processor of a 360-degree video reception apparatus may extract fisheye 360-degree video data corresponding to a circular image from rectangular regions of a picture.

The data processor may use both a circular region and a rectangular region of the picture in order to extract a valid region including actual fisheye 360-degree video data from the picture. As described above, the circular region may refer to a region corresponding to the circular image.

In the extraction process of the data processor, the valid region may have various shapes depending on the distance between a fisheye lens and an imaging surface (on a sensor), the size of a sensor frame, a focal length, or the like.

When the size of the sensor frame is adequately larger than the focal length, that is, when the circular image fits within a rectangular region of a frame, the valid region may be the entire circular image (1410).

When the size of the sensor frame is smaller than the focal length, that is, when part of the circular image is outside the frame, the valid region may be the circular image excluding the part outside the frame (1420).

When the size of the sensor frame is too smaller than the focal length and thus the diagonal length of the frame is shorter than the diameter of the circular image, the valid region may have a rectangular shape and part of the circular image may occupy the entire frame (1430).

In the illustrated embodiment (1431), a circular valid region may be obtained using a full-frame sensor with a focal length of 8 mm (circular fisheye, first from the left). Also, a rectangular valid region occupying the entire frame may be obtained using an APS-C sensor having a focal length of 10 mm (full-frame fisheye, second from the left). Further, a rectangular valid region occupying the entire frame may be obtained using an APS-H sensor having a focal length of 12 mm (full-frame fisheye, third from the left). In addition, a rectangular valid region occupying the entire frame may be obtained using a full-frame sensor having a focal length of 15 mm (full-frame fisheye, fourth from the left).

According to an embodiment, in the extraction process of the data processor, a plurality of circular images may be separated (1440) or may be packed in an overlapping manner (1450) on the picture.

When a plurality of circular images is separately packed (1440), a valid region corresponds to two whole circles, and thus it is possible accurately extract the valid regions using only information about the circular regions. However, when a plurality of circular images is packed in an overlapping manner (1450), if extraction is performed using only information about circular regions, part of other adjacent images may also be extracted.

To avoid extracting part of other images, as described above, the data processor may extract only a region corresponding to the intersection of a circular region and a rectangular region. Alternatively, according to an embodiment, the data processor may extract a rectangular region first and may extract a circular region from the rectangular region, thereby extracting a final valid region (1460).

The foregoing embodiments of the process of extracting the fisheye 360-degree video data according to the present invention may be combined with each other. In embodiments of a 360-degree video reception apparatus according to the present invention, a process of extracting fisheye 360-degree video data may be the process of extracting fisheye 360-degree video data according to the foregoing embodiments.

As described above, fisheye video information according to the present invention is one piece of signaling information about 360-degree video data and may include information about fisheye 360-degree video data. As described above, the fisheye video information may provide information necessary for a receiver to perform extraction, projection, and blending.

According to an embodiment, the fisheye video information may be transmitted in the form of metadata of a video codec, may be transmitted via an SEI message of a video codec, such as HEVC, or may be transmitted in the form of a VPS, an SPS, or a PPS. Also, according to an embodiment, the fisheye video information may also be transmitted through a digital wired/wireless interface, a system-level file format, or the like.

For example, the fisheye video information may be included in an SEI message as illustrated in the following table.

[Table 1]

| sei_payload( payloadType, payloadSize ) { | Category | Descriptor |
|---|---|---|
| if( nal_unit_type == PREFIX_SEI_NUT ) { | | |
| … | | |
| if( payloadType == XXX ) | | |
| omnidirectional_fisheye_video ( payloadSize) | 5 | |
| } } | | |

Referring to Table 1, the SEI message may include omnidirectional_fisheye_video as the fisheye video information.

omnidirectional_fisheye_video may be derived as in the following table.

[Table 2]

| omnidirectional_fisheye_video ( payloadSize ) { | Descriptor |
|---|---|
| omnidirectional_fisheye_video_id | ue(v) |
| stereoscopic_flag | u(1) |
| synchronized_left_right_360camera_flag | u(1) |
| num_viewing_directions_minus1 | u(6) |
| num_picture_regions_minus1 | u(8) |
| if( stereoscopic_flag == 1 ) | |
|    disparity | u(8) |
| for( i = 0 ; i <= num_viewing_directions_minus1; i++ ) { | |
|    field_of_view[ i ] | u(32) |
|    center_yaw[ i ] | i(32) |
|    center_pitch[ i ] | i(32) |
|    center_roll[ i ] | i(32) |
| } | |
| if(stereoscopic_flag == 1 && left_right_360camera_sync_flag == 0) { | |
|    num_viewing_directions_per_right_view_minus1 | u(6) |
|    reserved | u(2) |
|    for( i = 0 ; i <= num_viewing_directions_per_right_view_minus1; i++ ) { | |
|       field_of_view_per_right_view[ i ] | u(32) |
|       center_yaw_per_right_view[ i ] | i(32) |
|       center_pitch_per_right_view[ i ] | i(32) |
|       center_roll_per_right_view[ i ] | i(32) |
|    } | |
| } | |
| for( i = 0 ; i <= num_picture_regions_minus1; i++ ) { | |
|    region_type[ i ] | u(2) |
|    region_info[ i ] | u(6) |
|    if(region_type[i] == 3) { | |
|       viewing_direction_left_circular_image [i] | u(8) |
|       viewing_direction_right_circular_image[i] | u(8) |
|    } | |
|    rect_region_top[ i ] | u(16) |
|    rect_region_left[ i ] | u(16) |
|    rect_region_width[ i ] | u(16) |
|    rect_region_height[ i ] | u(16) |
|    circular_image_center_x[ i ] | u(16) |
|    circular_image_center_y[ i ] | u(16) |
|    circular_image_radius[ i ] | u(32) |
| } | |
| } | |

Referring to Table 2, omnidirectional_fisheye_video may include an omnidirectional_fisheye_video_id field, a stereoscopic_flag field, a synchronized_left_right_360camera_flag field, a num_viewing_directions_minus1 field, and/or a num_picture_regions_minus1 field.

The omnidirectional_fisheye_video_id field may indicate an identifier for identifying the fisheye video information. That is, when a plurality of pieces of fisheye video information is used for a single piece of fisheye 360-degree video data, each piece of fisheye video information may be identified by this field. For example, in a 360-degree video including a plurality of pictures, each picture may be distinguished by this field. According to an embodiment, this field may be assigned a different value depending on whether a frame packing arrangement is used, a frame packing arrangement type, or the like.

The stereoscopic_flag field may indicate whether stereoscopic 360-degree video data is included in a corresponding (decoded) picture. This field equal to 1 may indicate that the picture includes video data corresponding to a left image or a right image to support a stereoscopic video.

The synchronized_left_right_360_camera_flag field may indicate whether the number of cameras for a left image and the number of cameras for a right image are the same when stereoscopic 360-degree video data is used. That is, this field may indicate whether the number of circular images for a left image and the number of circular images for a right image are the same. Alternatively, this field may indicate whether the number of viewing directions for a left image and the number of viewing directions for a right image are the same.

For example, when the value of the synchronized_left_right_360 camera_flag field is 1, the number of left cameras and the number of right cameras or the number of left lenses and the number of right lenses for a stereoscopic 360-degree video may be the same. Accordingly, the num_viewing_directions_minus1 field to be described later may indicate an equal number of cameras or an equal number of view directions for the left and right. Also, when the value of the synchronized_left_right_360 camera_flag field is 1, left and right cameras or lenses may have the same characteristics and may be set to photograph the same position. That is, individual circular images by the left and right cameras may have the same yaw, pitch, and roll values. Accordingly, a field_of_view[i] field, a center_yaw[i] field, a center_pitch[i] field, and a center_roll[i] field to be described below may indicate characteristics of the left and right cameras or the circular images.

When the value of the synchronized_left_right_360camera_flag field is 0, the number of left cameras and the number of right cameras or the number of left lenses and the number of right lenses for a stereoscopic 360-degree video may not be the same. Further, when the value of the synchronized_left_right_360camera_flag field is 0, left and right cameras or lenses may have different characteristics. Accordingly, the num_viewing_directions_minus1 field, the field_of_view[i] field, the center_yaw[i] field, the center_pitch[i] field, and the center_roll[i] field to be described below may indicate characteristics of a left camera or a left circular image, and a num_viewing_directions_per_right_view_minus1 field, a field_of_view_per_right_view[i] field, a center_yaw_per_right_view[i] field, a center_pitch_per_right_view[i] field, and a center_roll_per_right_view[i] field may indicate characteristics of a right camera or a right circular image.

The num_viewing_directions_minus1 field may indicate the number of viewing directions defined in a corresponding picture. That is, the num - viewing- directions_minus 1 field may indicate the number of circular images captured by a fisheye lens at a single viewing position (left/right). The value of the num_viewing_directions_minus1 field plus 1 may be derived as the number of viewing directions. For example, when the picture includes circular images in two viewing directions, which are front and back directions, with respect to a left image, the value of the num_viewing_directions_minus1 field may be 1. According to an embodiment, each viewing direction may be considered as a single camera.

The num_picture_regions_minus1 field may indicate the number of rectangular regions defined in a corresponding picture. The value of the num_picture_regions_minus1 field plus 1 may be derived as the number of rectangular regions.

The illustrated fisheye video information according to the embodiment may further include a disparity field when the value of the stereoscopic_flag field is 1. The disparity field may indicate the distance between left and right cameras, that is, a disparity value, for a stereoscopic 360-degree video. A 360-degree video reception apparatus may provide, using the value of the disparity field, a stereoscopic subtitle or a stereoscopic graphic overlay having depth which corresponds to the depth of the stereoscopic 360-degree video or matches an image.

The illustrated fisheye video information according to the embodiment may further include a field_of_ view[i] field, a center_yaw[i] field, a center_pitch[i] field, and/or a center roll[i] field for respective viewing directions or circular images having the viewing directions depending on the value of the num_viewing_directions_minus1 field. Pieces of information following a for statement of the num_viewing_directions_minus1 field illustrated in Table 2 may correspond to information about circular images illustrated above.

The field_of_view[i] field may indicate the view angle of a fisheye lens that captures an i-th circular image. This view angle may be referred to as the view angle of the circular image depending on the context. The value of this field value may be expressed in degrees.

Even though circular images have the same size, the circular images may occupy different areas on an ERP plane depending on the view angle when projected onto the ERP plane. For example, a circular image captured by a lens having a view angle of 220 degrees may be projected in the form of projection of a circular image onto an ERP plane illustrated in 1310 of FIG. 13. In another example, a circular image captured by a lens having a view angle of 180 degrees may be projected to cover a smaller area than in 1310 of FIG. 13. That is, even though circular images have the same size, a circular image having a wider view angle may be more densely sampled.

Although not shown in Table 2, the fisheye video information may further include a view_idc[i] field for each circular image according to an embodiment. The view_idc field may indicate whether a 360-degree video for a circular image is a stereoscopic or monoscopic 360-degree video and/or whether the 360-degree video of the circular image is a left or right image. According to one embodiment of the view_idc[i] field, when the view_idc[i] field is equal to 0, the 360-degree video for the circular image may be a monoscopic 360-degree video. When the view_idc[i] field is 1, the 360-degree video for the circular image may be a left image of a stereoscopic 360-degree video. When the view_idc[i] field is 2, the 360-degree video for the circular image may be a right video of the stereoscopic 360-degree video. When the view_idc[i] field is 3, the 360-degree video for the circular image may be left and right images of the stereoscopic 360-degree video.

When the view_idc[i] field is 0 or 1, the field_of_view[i] field may indicate a view angle in a corresponding viewing direction. When the view_idc[i] field is 2 or 3, the field_of_view[i] field may indicate the view angle of a circle after upsampling left and right circular images assuming that the left/right circular images in a corresponding viewing direction have the same view angle.

22

The center_yaw[i] field, the center_pitch[i] field, and the center_roll[i] field may indicate the position of a circular image in an i-th viewing direction in a 3D space. That is, the center_yaw[i] field, the center_pitch[i] field, and the center_roll[i] field may indicate the yaw, pitch, and roll values of the center point of a region occupied by the circular image in the 3D space.

When the view_idc[i] field is 0 or 1, the center_yaw[i] field, the center_pitch[i] field, and the center_roll[i] field may indicate the yaw, pitch, and roll of the center point of the circular image in the viewing direction, respectively. When the view_idc[i] field is 2 or 3, the center_yaw[i] field, the center_pitch[i] field, and the center_roll[i] field may indicate the yaw, pitch, and roll values of center points of left/right images assuming that the center points of the left/right circular images in the viewing direction have the same yaw, pitch, and roll values.

In the present invention, i of the field_of_ view[i] field, the center_yaw[i] field, the center_pitch[i] field, and the center_roll[i] field ranges from 0 to num_viewing_directions_minus1 and may be used as an index that refers to a camera output image or fisheye lens output image (circular image) positioned at each yaw, pitch, and roll.

Referring to Table 2, when the value of the stereoscopic_flag field is 1 and the value of the synchronized_left_right_360camera_flag field is 0, the fisheye video information may further include a num_viewing_directions_per_right_view_minus1 field, a field_of_view_per_right_view[i] field, a center_yaw_per_right_view[i] field, a center_pitch_per_right_view[i] field, and/or a center_roll_per_right_view[i] field.

The num_viewing_directions_per_right_view_minus1 field, the field_of_view_per_right_view[i] field, the center_yaw_per_right_view[i] field, the center_pitch_per_right_view[i] field, and the center_roll_per_right_view[i] field may be added when a stereoscopic 360-degree video is provided and the number of cameras, the configuration of a lens, a view angle, a yaw value, a pitch value, and a roll value vary depending on left and right images.

In this case, the num_viewing_directions_minus1 field, the field_of_view[i] field, the center_yaw[i] field, the center_pitch[i] field, and the center_roll[i] field may be used as information for a left image, and the num_viewing_directions_per_right_view_minus1 field, the field_of_view_per_right_view[i] field, the center_yaw_per_right_view[i] field, the center_pitch_per_right_view[i] field, and the center_roll_per_right_view[i] field may be used as information for a right image. A description of the added fields may be the same as the foregoing description of the num_viewing_directions_minus1 field, the field_of_view[i] field, the center_yaw[i] field, the center_pitch[i] field, and the center_roll[i] field.

Referring to Table 2, the fisheye video information may include a region_type[i] field, a region_info[i] field, a rect_region_top[i] field, a rect_region_left[i] field, a rect_region_width[i] field, a rect_region_height[i] field, a circular_image_center_x[i] field, a circular_image_center_y[i] field, and/or a circular_image_radius[i] field for each rectangular region depending on the value of the num_picture_regions_minus1 field. Pieces of information following a for statement of the num_picture_regions_minus1 field illustrated in Table 2 may correspond to information about a rectangular region illustrated above.

The region_type[i] field and the region_info[i] field will be described in detail later.

The rect_region_top[i] field, the rect_region_left[i] field, the rect_region_width[i] field, and the rect_region_height[i] field may indicate the top-left position (the position of a top-left point), the width, and the height of a rectangular region mapped to an i-th circular image captured by a fisheye lens.

When the view_idc[i] field is 0 or 1, each rectangular region may be defined to correspond to each circular image. That is, one rectangular region may be mapped to one circular image. When the view_idc[i] field is 2 or 3, one rectangular region may be mapped to two or more circular images (left and right).

The circular_image_center_x[i] field and the circular_image_center_y[i] field may indicate the center point of a circle in the i-th circular image captured by the fisheye lens. According to an embodiment, the circular_image_center_x[i] field and the circular_image_center_y[i] field may indicate the center point of the circle using a position on a luma sample index of the picture, a position on a relative luma sample index in a corresponding rectangular region, or as a ratio on a unit length.

When the view_idc[i] field is 0 or 1, the circular_image_center_x[i] field and the circular_image_center_y[i] field may define the center of each circle. When the view_idc[i] field is 2 or 3, the circular_image_center_x[i] field and the circular_image_center_y[i] field may define the center of the same circle assuming that left and right circular images have the center of the same circle. Here, it may be assumed that the left and right circular images are mapped to the same rectangular region.

The circular_image_radius[i] field may indicate the radius of the i-the circular image captured by the fisheye lens. That is, the circular_image_radius[i] field may indicate the straight-line distance from the center of the circular image to the edge thereof. According to an embodiment, the radius of a circle indicated by the circular_image_radius[i] field may be defined as the distance from the center on a luma sample index to the center of an outermost pixel, to the edge of the outermost pixel, or to the center or edge of the outermost sample in a vertical or horizontal direction or may be defined as a ratio on a unit length.

When the view_idc[i] field is 0 or 1, the circular_image_radius[i] field may define the radius of each of left and right circular images. When the view_idc[i] field is 2 or 3, the circular_image_radius[i] field may indicate the radius of the left and right circular images which have been upsampled assuming that the left and right circular images have the same radius.

**EP 3 624 446 B1**

According to another embodiment of the view_idc[i] field, when the streoscopic_flag field is 1, the view_idc[i] field may have the same meaning as the region_type[i] field. That is, when the streoscopic_flag field is 1, the values of the region_type[i] field of 0, 1, 2, and 3 may indicate the same meaning as the values of the view_idc[i] field of 0, 1, 2, and 3. In this case, the role of the view_idc[i] field may be absorbed into the region_type[i] field, and the view_idc[i] field may be omitted. The region_type[i] field will be described later.

For example, the region_type[i] field and information about a region indicated by the region_info[i] field may be derived as in Table 3.

[Table 3]

| stereoscopic_flag | region_type | region_info |
|---|---|---|
| 0 (monoscopic) | 0,1,2,3 | 0,1, ..., num_viewing_directions_minus1 |
| 1 (stereoscopic) | 0 (non-frame packing, left view) | 0,1, ..., num_viewing_directions_minus1 |
| | 1 (non-frame packing, right view) | if(synchronized_left_right_360camera_flag == 1)<br>0,1, ..., num_viewing_directions_minus1<br>if(synchronized_left_right_360camera_flag == 0)<br>0,1, ..., num_viewing_directions_per_right_view_minus1 |
| | 2 (frame packing, viewing direction) | 0,1, ..., num_viewing_directions_minus1 |
| | 3 (frame packing, viewing position) | 0 (left), 1 (right), 2 (both views with identical viewing direction) |

The region_type[i] field and the region_info[i] field according to the present invention may provide type information and/or additional pieces of information about a corresponding rectangular region. The region_type[i] field and the region_info[i] field may respectively correspond to region type information and region addition information about the corresponding rectangular region which are mentioned above.

In detail, the region_type[i] field may indicate the type for the rectangular region. When monoscopic 360-degree video data is used, the region_type[i] field may not have any meaning according to a value. When stereoscopic 360-degree video data is used, the region_type[i] field may be used to indicate viewpoint information about an image of the rectangular region.

For example, when the value of the region_type[i] field is 0 or 1, it may be indicated that a single circular image is mapped to the rectangular region.

When the value of the region_type[i] field is 2, frame packing may be applied to the rectangular region, and pieces of stereoscopic fisheye 360-degree video data included in the rectangular region may have a meaning of a viewing direction. That is, when the value of the region_type[i] field is 2, the region_type[i] field may indicate that the rectangular region is subjected to frame packing and a plurality of circular images frame-packed in the rectangular region is in the same viewing direction. In this case, the respective rectangular regions may be distinguished by viewing direction #1, viewing direction #2, ..., and the like.

When the value of the region_type[i] field is 3, frame packing may be applied to the rectangular region, and pieces of stereoscopic fisheye 360-degree video data included in the rectangular region may have a meaning of a viewing position. That is, when the value of the region_type[i] field is 3, the region_type[i] field may indicate that the rectangular region is subjected to frame packing and a plurality of circular images frame-packed in the rectangular region is in the same viewing position. In this case, the respective rectangular regions may be distinguished by a left image and a right image.

When the value of the region_type[i] field is 2 or 3, it may be assumed that left and right circular images have the same size and the same center. In this case, information, such as a frame packing type and/or a sample position, may be obtained by a reception side based on signaling information delivered through a frame packing arrangement SEI message.

In another embodiment of the fisheye video information, a region_type[i] field having a value of 0 or 1 and a region_type[i] field having other values may not both exist in one SEI message.

In still another embodiment of the fisheye video information, when both a region_type[i] field having a value of 0 or 1 and a region_type[i] field having other values exist in one SEI message, the fisheye video information may include a plurality of for statements that separately defines a rectangular region, a circular image, a view angle, a yaw value, a pitch value, and a roll value for each region_type[i] field. In this case, the fisheye video information may also include information about each view or rectangular region. Pieces of information about views or rectangular regions may be distinguished based on the omnidirectional_fisheye_video_id field.

24

The region_info[i] field may provide additional information about the corresponding rectangular region according to the value of the region_type[i] field. The 360-degree video reception apparatus may derive an attribute of the region based on the region_info[i] field and may perform a projection process and a viewport generation process in consideration of the attribute, thereby improving processing efficiency in the processes.

For example, when the value of the region_type[i] field is 0 or 1, a single circular image is mapped to the rectangular region, and thus the region_info[i] field may additionally indicate the viewing direction of the circular image.

Here, when the value of the region_type[i] field is 1 and the value of the synchronized_left_right_360camera_flag field is 0, the number of viewing directions of a right image may be different from the number of viewing directions of a left image and the region_info[i] field may indicate each of the viewing directions of the right image according to the value of the num_viewing_directions_per_right_view_minus1.

When the value of the region_type[i] field is 2, the circular images frame-packed in the rectangular region may be mapped to the rectangular region based on a viewing direction. That is, when the value of the region_type[i] field is 2, circular images for the same viewing direction may be mapped to the rectangular region. In this case, the region_info[i] field may indicate the viewing direction as a reference for the rectangular region.

When the value of the region_type[i] field is 3, the circular images frame-packed in the rectangular region may be mapped to the rectangular region based on a viewing position. That is, when the value of the region_type[i] field is 3, circular images for the same viewing position may be mapped to the rectangular region. In this case, the region_info[i] field may indicate the viewing position as a reference for the rectangular region. According to an embodiment, the region_info[i] field may have values of 0, 1, and 2, which may indicate that circular images of a left image are mapped, that circular images of a right image are mapped, and left and right images having the same viewing direction are mapped together, respectively. According to an embodiment, when there are an odd number of viewing directions, a pair of left and right images for a single viewing direction may be mapped to one rectangular region and the region_info[i] field may have a value of 2. According to an embodiment, the arrangement of the circular images may be defined to be fixed in a left-to-right order.

In yet another embodiment of the fisheye video information, when the value of the region_type[i] field is 3, the fisheye video information may further include a viewing_direction_left_circular_image[i] field and a viewing_direction_right_circular_image[i] field.

The viewing_direction_left_circular_image[i] field and the viewing_direction_right_circular_image[i] field may further indicate the viewing direction of each of the circular images in the rectangular region. As described above, when the value of the region_type[i] field is 3, the fisheye video information may signal only information about the viewing position of the rectangular region. Accordingly, for supplmentation, the viewing_direction_left_circular_image[i] field and the viewing_direction_right_circular_image[i] field may be further signaled. The viewing_direction_left_circular_image[i] field may indicate the viewing direction of a circular image located on the left in the rectangular region, and the viewing_direction_right_circular_image[i] field may indicate the viewing direction of a circular image located on the right in the rectangular region.

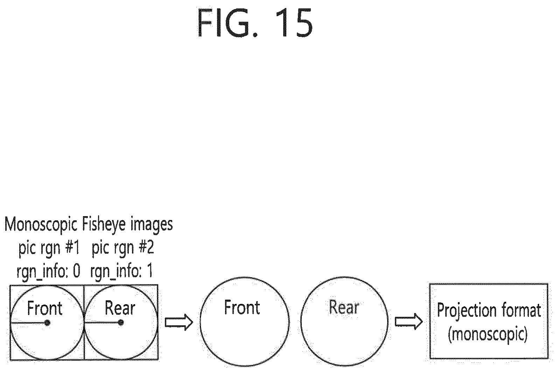

FIG. 15 illustrates a process of processing a fisheye 360-degree video for a reception side according to one embodiment of the present invention.

The process of processing the fisheye 360-degree video for the reception side according to the present invention may correspond to the foregoing extraction, projection, blending, and rendering processes of the 360-degree video reception apparatus. As described above, the process of processing the fisheye 360-degree video for the reception side may vary depending on the configuration of a picture according to the view_idc[i] field, whether framing packing is applied, a frame packing type, and the mapping state of a circular image. In this process, the aforementioned fisheye video information may be used. In the process of processing the fisheye 360-degree video for the reception side to be described below, it is assumed that a fisheye camera having two viewing directions, which are front and rear directions, is used.

In the embodiment of the process of processing the fisheye 360-degree video for the reception side illustrated in FIG. 15, a monoscopic fisheye 360-degree video is transmitted through a picture, and two rectangular regions may be used. In this case, the value of the stereoscopic_flag field may be obtained as 0, and the value of the num_fisheye_picture_regions_minus1 field may be obtained as 1.

In detail, when a monoscopic camera is used in which two fisheye lenses are disposed front and rear to obtain 360-degree video data, front and rear circular images may be mapped to the picture as illustrated in FIG. 15. For example, the front circular image may be mapped to a left rectangular region of the picture, and the rear circular image may be mapped to a right rectangular region of the picture.

As described above, the rectangular regions may be specified by information about a top-left point, width information, and height information of fisheye video information. In addition, circular regions mapped to the circular images may be specified by the index of a center point and radius information of the fisheye video information.

The 360-degree video reception apparatus may extract fisheye 360-degree video data corresponding to front and rear valid regions using the fisheye video information. Subsequently, the 360-degree video reception apparatus may perform stitching (projection and blending) based on the fisheye 360-degree video data corresponding to the valid regions and may render a suitable monoscopic 360-degree video.

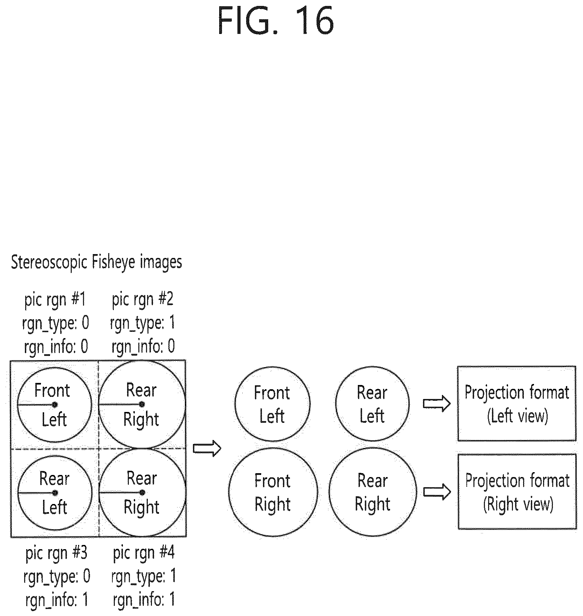

FIG. 16 illustrates a process of processing a fisheye 360-degree video for a reception side according to another embodiment of the present invention.

In the embodiment of the process of processing the fisheye 360-degree video for the reception side illustrated in FIG. 16, a stereoscopic fisheye 360-degree video is transmitted through a picture, and four rectangular regions may be used. Region type information of the rectangular regions may have a value of 0 to 1. In this case, the value of the stereoscopic_flag field may be obtained as 1, the value of the num_fisheye_picture_regions_minus1 field may be obtained as 3, and the value of the region_type field may be obtained as 0 or 1.

In detail, a circular image for a front left image, a circular image for a front right image, a circular image for a rear left image, and a circular image for a rear right image may be mapped to the picture. Also, four rectangular regions may be defined to correspond to the respective circular images as illustrated in FIG. 16. In this embodiment, a 360-degree video transmission apparatus may map one circular image to one rectangular region.

An image arrangement based on the left and right images may be arbitrarily determined. The region type information may be specified as 0 for the left images, and the region type information may be specified as 1 for the right images. It is possible to signal region addition information indicating whether a circular image is a front image or a rear image.

A 360-degree video reception apparatus may extract fisheye 360-degree video data corresponding to the front/rear left/right images based on fisheye video information. Subsequently, the 360-degree video reception apparatus may perform stitching (projection and blending) for each viewing direction based on the extracted fisheye 360-degree video data and accordingly may render a stereoscopic 360-degree video for a suitable region.

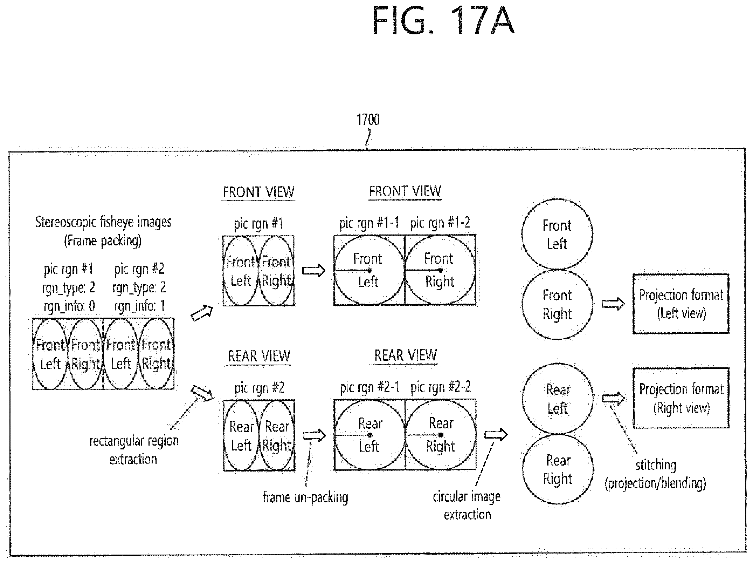

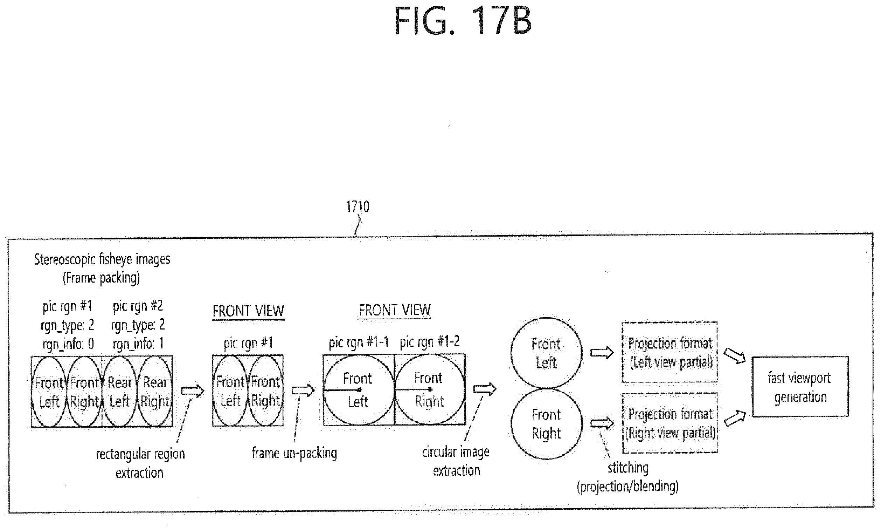

FIG. 17a and FIG. 17b illustrate a process of processing a fisheye 360-degree video for a reception side according to still another embodiment of the present invention.

In the embodiment of the process of processing the fisheye 360-degree video for the reception side illustrated in FIG. 17a, a stereoscopic fisheye 360-degree video is transmitted through a picture, and two rectangular regions may be used. Region type information of the rectangular regions may have a value of 2. In this case, the value of the stereoscopic_flag field may be obtained as 1, the value of the num_fisheye_picture_regions_minus1 field may be obtained as 1, and the value of the region_type field may be obtained as 2.

In detail, a circular image for a front left image, a circular image for a front right image, a circular image for a rear left image, and a circular image for a rear right image may be mapped to the picture. In this embodiment, a 360-degree video transmission apparatus may map two circular images to one rectangular region via frame packing. That is, as illustrated in 1700 of FIG. 17a, two rectangular regions may be defined in the picture, and two circular images may be mapped to one rectangular region.

In this embodiment, the value of the synchronized_left_right_360camera_flag field may be assumed to be 1. That is, the number of viewing directions may be equal, which is two (front and rear), for the left and right images. In the present embodiment, since the region_type field has a value of 2, as described above, one rectangular region may indicate directivity according to the yaw, pitch, and roll. That is, one rectangular region may indicate a particular viewing direction (front or rear).

For example, rectangular region #1 (pic rgn #1) illustrated in FIG. 17a may be derived as a rectangular region indicating a front viewing direction, and accordingly the two circular images corresponding to the front left image and the front right image may be mapped to rectangular region #1 via frame packing. Rectangular region #2 (pic rgn #2) illustrated in FIG. 17a may be derived as a rectangular region indicating a rear viewing direction, and accordingly the two circular images corresponding to the rear left image and the rear right image may be mapped to rectangular region #2 via frame packing.

That is, in this embodiment, circular images according to left and right viewing positions may be disposed in the same rectangular region. Although a side-by-side frame packing format is used in this embodiment, a top-and-bottom or different frame packing format may be used according to an embodiment.

Region addition information may indicate whether a rectangular region is a front rectangular region or a rear rectangular region.

A 360-degree video reception apparatus may extract each rectangular region based on fisheye video information. Next, the 360-degree video reception apparatus may reconstruct an image corresponding to each viewing direction based on frame packing arrangement information (frame unpacking) and may extract a circular image according to each viewing position. Subsequently, the 360-degree video reception apparatus may perform stitching (projection and blending) and accordingly may render a stereoscopic 360-degree video for a suitable region.

According to an embodiment, as illustrated in 1710 of FIG. 17b, the 360-degree video reception apparatus may process only an image for a necessary part, thereby quickly generating a stereoscopic video for the necessary part. The necessary part may be a part to be rendered according to the current viewport of a user or a region of interest (ROI) of 360-degree video content.

The 360-degree video reception apparatus may determine one or more rectangular regions having a yaw, pitch, roll, and/or a view angle corresponding to a viewing direction and/or a viewing range corresponding to the necessary part. This determination may be performed based on the fisheye video information. The 360-degree video reception apparatus may extract the determined (selected) rectangular regions, may perform frame unpacking on the rectangular regions, may extract a corresponding circular image, and may perform stitching based on the extracted circular image, thereby quickly generating the stereoscopic video for the necessary part.

In the embodiment illustrated in 1710 of FIG. 17b, a front image may be an image corresponding to the necessary part. Therefore, a front rectangular region may be selected, and a reception-side process may be applied only to the front rectangular region. Accordingly, a stereoscopic 360-degree video for the front image may be quickly provided to the user.

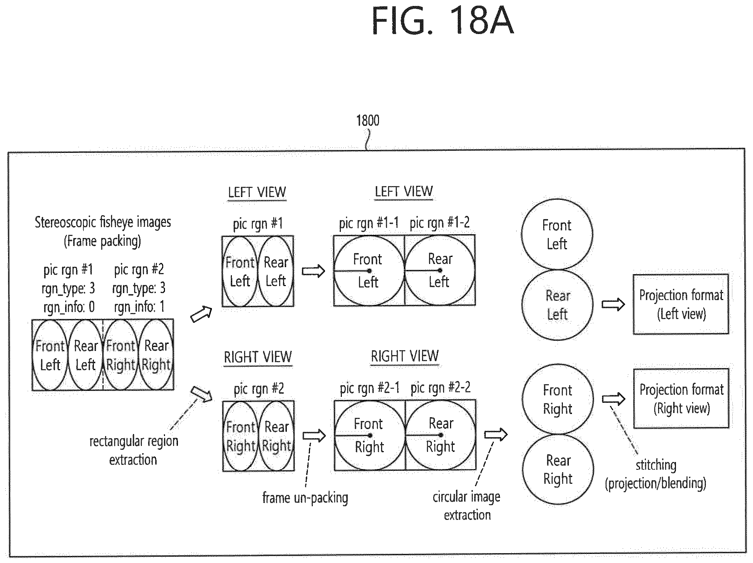

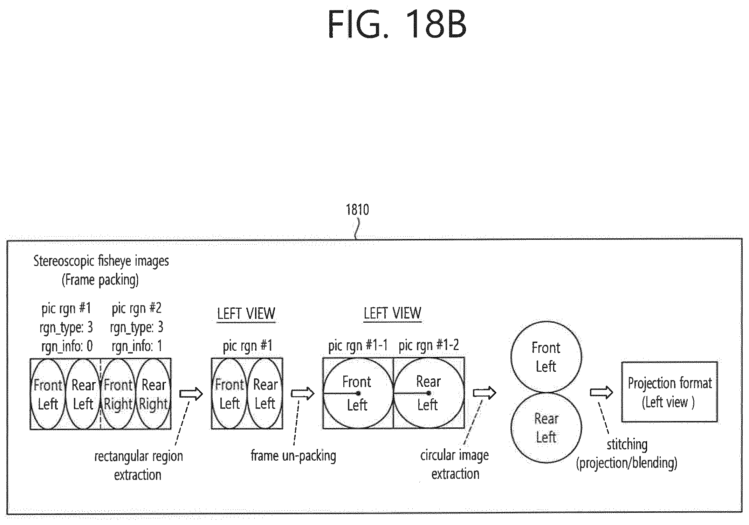

FIG. 18a and FIG. 18b illustrate a process of processing a fisheye 360-degree video for a reception side according to yet another embodiment of the present invention.

In the embodiment of the process of processing the fisheye 360-degree video for the reception side illustrated in FIG. 18a, a stereoscopic fisheye 360-degree video is transmitted through a picture, and two rectangular regions may be used. Region type information of the rectangular regions may have a value of 3. In this case, the value of the stereoscopic_flag field may be obtained as 1, the value of the num_fisheye_picture_regions_minus1 field may be obtained as 1, and the value of the region_type field may be obtained as 3.

In detail, a circular image for a front left image, a circular image for a front right image, a circular image for a rear left image, and a circular image for a rear right image may be mapped to the picture. In this embodiment, a 360-degree video transmission apparatus may map two circular images to one rectangular region via frame packing. That is, as illustrated in 1800 of FIG. 18a, two rectangular regions may be defined, and two circular images may be mapped to one rectangular region.

In this embodiment, the value of the synchronized_left_right_360camera_flag field may be assumed to be 1. That is, the number of viewing directions may be equal, which is two (front and rear), for the left and right images. In the present embodiment, since the region_type field has a value of 3, as described above, one rectangular region may indicate a left/right viewing position. That is, one rectangular region may indicate a viewing position (left image or right image).

For example, rectangular region #1 (pic rgn #1) illustrated in 1800 of FIG. 18a may be derived as a rectangular region indicating a viewing position of a left image, and accordingly the two circular images corresponding to the front left image and the rear left image may be mapped to rectangular region #1 via frame packing. Rectangular region #2 (pic rgn #2) illustrated in 1800 of FIG. 18a may be derived as a rectangular region indicating a viewing position of a right image, and accordingly the two circular images corresponding to the front right image and the rear right image may be mapped to rectangular region #2 via frame packing.

That is, in this embodiment, circular images according to front and rear viewing directions may be disposed in the same rectangular region. Although a side-by-side frame packing format is used in this embodiment, a top-and-bottom or different frame packing format may be used according to an embodiment.

Region addition information may indicate whether a rectangular region is a rectangular region corresponding to a left image or a rectangular region corresponding to a right image. Further, as described above, the directivity of each of circular images in one rectangular region may be specified by a viewing_direction_left[i] field and a viewing_direction_right[i] field.

A 360-degree video reception apparatus may extract each rectangular region based on fisheye video information. Next, the 360-degree video reception apparatus may reconstruct an image corresponding to each viewing position based on frame packing arrangement information (frame unpacking) and may extract a circular image according to each viewing direction. Subsequently, the 360-degree video reception apparatus may perform stitching (projection and blending) based on the extracted circular image and accordingly may render a stereoscopic 360-degree video for a suitable region.

According to an embodiment, as illustrated in 1810 of FIG. 18b, a 360-degree video reception apparatus not supporting a stereoscopic video may process only an image corresponding to any one viewing position, thereby quickly generating a monoscopic video of a 360-degree video.

Specifically, for example, the 360-degree video reception apparatus may determine any one viewing position among fisheye 360-degree video data corresponding to a left image or a right image. This determination may be performed based on the fisheye video information. For example, rectangular regions about which region addition information has a value of 0 or 2 may be selected. The 360-degree video reception apparatus may extract the determined (selected) rectangular regions, may perform frame unpacking on the extracted rectangular regions, may extract a corresponding circular image, and may perform stitching on the circular image, thereby quickly generating a monoscopic 360-degree video according to any one viewing position of a left image or a right image.

In the embodiment illustrated in 1810 of FIG. 18b, a rectangular region corresponding to a left image may be selected, and a reception-side process may be applied only to this rectangular region. Accordingly, the 360-degree video reception apparatus may quickly provide a monoscopic 360-degree video to a user using only an image corresponding to a left image.

The foregoing embodiments of the process of processing the fisheye 360-degree video for the reception side according to the present invention may be combined with each other. In embodiments of the 360-degree video reception apparatus according to the present invention, a process of processing a fisheye 360-degree video for a reception side may be the process of processing the fisheye 360-degree video for the reception side according to the foregoing embodiments.

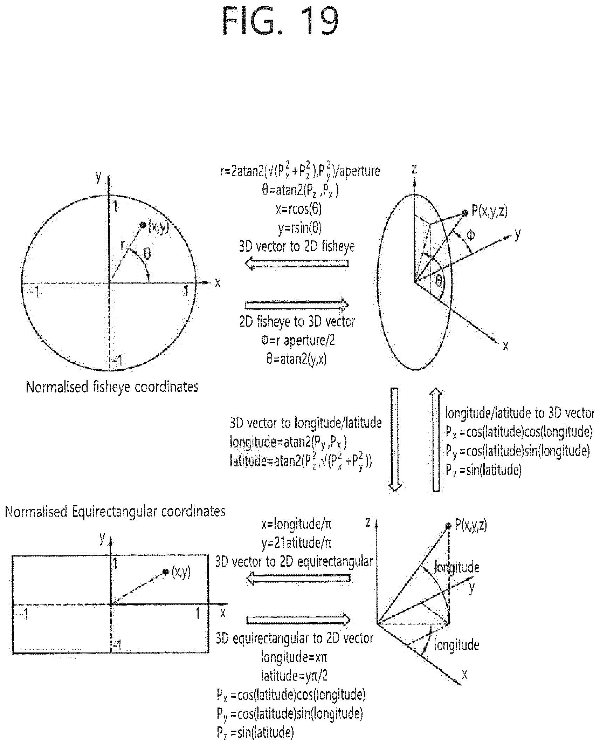

FIG. 19 illustrates a process of mapping a circular image in a processing method according to one embodiment of the present invention.

The process of mapping the circular image according to the present invention may correspond to a process of projecting a circular image on a 3D space (sphere or the like) and/or an ERP plane among the foregoing operations. In this process, relevant operations may be performed in view of the following parameters.

Specifically, the center of a circular image illustrated in FIG. 19 may be derived as (circular_image_center_x[i] $*2^{-16}$, circular_image_center_y[i]$*2^{-16}$). That is, the center of the circular image may be derived based on a circular_image_center_x[i] field and a circular_image_center_y[i] field. $\Phi$ and $\theta$ of normalized 3D fisheye lens capturing coordinates illustrated in FIG. 19 may be represented by $\alpha$ and $\beta$, and a longitude and a latitude may be represented by $\Phi$ and $\theta$. Further, FIG. 19 may show a process of representing a circular image on a 3D spherical coordinate system based on parameters transmitted in the present invention.

The process of representing the circular image on the 3D spherical coordinate system may be derived by the following equation.

[Equation 5]

$$
\begin{aligned}
&\textbf{Fisheye coordinate to 3D fisheye lens capturing coordinate conversion}\\
&\alpha = ((\text{sqrt}((x - \text{circular\_image\_center\_x}[i] * 2^{-16}) * (x - \text{circular\_image\_center\_x}[i] *\\
&\quad 2^{-16}) + (y - \text{circular\_image\_center\_y}[i] * 2^{-16}) * (y - \text{circular\_image\_center\_y}[i] *\\
&\quad 2^{-16})) / (\text{circular\_image\_radius}[i] * 2^{-16})) * \text{field\_of\_view}[i] * 2^{-16} * \pi \div 180) / 2\\
&\beta = \text{atan2}((y - \text{circular\_image\_center\_y}[i] * 2^{-16}) / (\text{circular\_image\_radius}[i] * 2^{-16})\\
&\quad , (x - \text{circular\_image\_center\_x}[i] * 2^{-16}) / (\text{circular\_image\_radius}[i] * 2^{-16}))\\
\\
&\textbf{3D fisheye lens capturing coordinate to XYZ coordinate conversion}\\
&Px = \text{Sin } \alpha * \text{Cos } \beta\\
&Py = \text{Cos } \alpha\\
&Pz = \text{Sin } \alpha * \text{Sin } \beta\\
\\
&\textbf{XYZ coordinate to spherical coordinate conversion}\\
&\phi' = \text{atan2}(Py, Px)\\
&\theta' = \text{atan2}(Pz, \text{sqrt}(Px*Px + Py*Py))\\
&\omega' = \text{center\_roll}[i] * 2^{-16} * \pi \div 180\\
&\phi = \text{Cos}(\omega') * \phi' - \text{Sin}(\omega') * \theta' + \text{center\_yaw}[i] * 2^{-16}\\
&\theta = \text{Sin}(\omega') * \phi' + \text{Cos}(\omega') * \theta' + \text{center\_pitch}[i] * 2^{-16}\\
\\
&\textbf{spherical coordinate to ERP coordinate conversion}\\
&x\_ERP = \phi / \pi\\
&y\_ERP = 2*\theta / \pi
\end{aligned}
$$

As illustrated in FIG. 19 and Equation 5, equations for individual cases may be described. The individual cases may include a fisheye coordinate-to-3D fisheye lens capturing coordinate conversion, a 3D fisheye lens capturing coordinate-to-XYZ coordinate conversion, a XYZ coordinate-to-spherical coordinate conversion, and/or a spherical coordinate-to-ERP coordinate conversion. The above equations may be referred to as spherical coordinate system mapping equations. That is, the spherical coordinate system mapping equations may refer to equations for mapping a circular image onto a 3D spherical coordinate system.

Here, it may be assumed that the circular_image_center_x[i] field, the circular_image_center_y[i] field, a circular_image_radius[i] field, and a field_of_view[i] field are 16 bits, with which an integer part and a fractional part are expressed.

The foregoing embodiments of the process of mapping the circular image according to the present invention may be combined with each other. In embodiments of the 360-degree video reception apparatus according to the present invention, a process of mapping a circular image may be the process of mapping the circular image according to the foregoing embodiments.

The fisheye video information may be delivered in the form of a box in an ISOBMFF file as described above. The fisheye video information delivered in the form of the box in the ISOBMFF file may be derived as illustrated in the following table. The fisheye video information may be defined as OmnidirectionalFisheyeVideoInformationStruct.

[Table 4]

```
aligned (8) class OmnidirectionalFisheyeVideoInformationStruct {
    unsigned int (8)  omnidirectional_fisheye_video_id
    unsigned int (1)  stereoscopic_flag
    unsigned int (1)  synchronized_left_right_360camera_flag
    unsigned int (6)  num_viewing_directions_minus1
    unsigned int (8)  num_picture_regions_minus1
    if( stereoscopic_flag == 1 )
        unsigned int (8)  disparity
    for( i = 0 ; i <= num_viewing_directions_minus1; i++ ) {
        unsigned int (32) field_of_view
        signed int (32)    center_yaw
        signed int (32)    center_pitch
        signed int (32)    center_roll
    }
    if(stereoscopic_flag == 1 && left_right_360camera_sync_flag == 0) {
        unsigned int (8)   num_viewing_directions_per_right_view_minus1
        for( i = 0 ; i <= num_viewing_directions_per_right_view_minus1; i++ ) {
            unsigned int (32) field_of_view_per_right_view
            signed int (32)    center_yaw_per_right_view
            signed int (32)    center_pitch_per_right_view
            signed int (32)    center_roll_per_right_view
        }
    }
    for( i = 0 ; i <= num_picture_regions_minus1; i++ ) {
        if( stereoscopic_flag == 1) {
            unsigned int (2)region_type
            unsigned int (6)region_info
            if(region_type[i] == 3) {
                unsigned int (8)   viewing_direction_left_circular_image
                unsigned int (8)   viewing_direction_right_circular_image
            }
        }
        unsigned int (16) rect_region_top
        unsigned int (16) rect_region_left
        unsigned int (16) rect_region_width
        unsigned int (16) rect_region_height
        unsigned int (16) circular_image_center_x
        unsigned int (16) circular_image_center_y
        unsigned int (32) circular_image_radius
    }
}
```

OmnidirectionalFisheyeVideoInformationStruct may be defined as a box, which may be included in an ISOBMFF file. That is, the fisheye 360-degree video data may be stored and transmitted based on the ISOBMFF file, and OmnidirectionalFisheyeVideoInformationStruct may be delivered in the form of the box in the ISOBMFF file.

According to an embodiment, the OmnidirectionalFisheyeVideoInformationStruct box may be signaled for fisheye 360-degree video data stored/delivered through a corresponding video track (stream), sample, sample group, or the like. Also, according to an embodiment, the OmnidirectionalFisheyeVideoInformationStruct box may exist under a visual sample entry of the track in which the fisheye 360-degree video data is stored/transmitted. In addition, according to an embodiment, the fisheye video information may be delivered through a format, such as a CFF.

Each field included in the fisheye video information illustrated in Table 4 may have the same meaning as fields of the foregoing fisheye video information transmitted through the SEI message.

According to another embodiment of delivering the fisheye video information, an OmnidirectionalFisheyeVideoInformationSEI (ofvb) box may be defined. The ofvb box may be derived as illustrated in the following table.

[Table 5]

```
class OmnidirectionalFisheyeVideoInformationSEI extends Box('ofvb', size)
{
    unsigned int(8*size-64)        omnidirectionalfisheyevideoinformationsei;
}
```

The ofvb box may include an SEI NAL unit, and the SEI NAL unit may include an SEI message including the fisheye video information.

The ofvb box may be included in VisualSampleEntry, AVCSampleEntry, MVCSampleEntry, SVCSampleEntry, HEVCSampleEntry, or the like, which is associated with the fisheye video information.

When the ofvb box is included in VisualSampleEntry, the ofvb box may be derived as illustrated in the following table.

[Table 6]

```
class VisualSampleEntry(codingname) extends SampleEntry (codingname){
    unsigned int(16) pre_defined = 0;
    const unsigned int(16) reserved = 0;
    unsigned int(32)[3]          pre_defined = 0;
    unsigned int(16)             width;
    unsigned int(16)             height;
    template unsigned int(32)    horizresolution = 0x00480000;    // 72 dpi
    template unsigned int(32)    vertresolution  = 0x00480000;    // 72 dpi
    const unsigned int(32)       reserved = 0;
    template unsigned int(16)    frame_count = 1;
    string[32]     compressorname;
    template unsigned int(16)    depth = 0x0018;
    int(16)        pre_defined = -1;
    // other boxes from derived specifications
    CleanApertureBox             clap;// optional
    PixelAspectRatioBox          pasp;// optional
    OmnidirectionalFisheyeVideoInformationSEI     fisheye_sei;
}
```

When the ofvb box is included in HEVCSampleEntry, the ofvb box may be derived as illustrated in the following table.

[Table 7]

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    extra_boxes boxes; // optional
}

class HEVCConfigurationBox extends Box('hvcC') {
    HEVCDecoderConfigurationRecord() HEVCConfig;
    OmnidirectionalFisheyeVideoInformationSEI       fisheye_sei;
}
```

[Table 8]

```
class HEVCSampleEntry() extends VisualSampleEntry ('hvc1' or 'hev1'){
    HEVCConfigurationBox config;
    MPEG4BitRateBox (); // optional
    MPEG4ExtensionDescriptorsBox (); // optional
    OmnidirectionalFisheyeVideoInformationSEI       fisheye_sei;
    extra_boxes boxes; // optional
}
```

When the ofvb box is included in HEVCSampleEntry, the ofvb box may be included in HEVCConfigurationBox as illustrated in Table 7, or may be directly included in HEVCSampleEntry as illustrated in Table 8.

Also, according to an embodiment, the ofvb box may be included in SEI or video usability information (VUI) providing relevant information according to a region. Accordingly, different signaling information for each region may be provided with respect to a video frame included in a file format.

According to an embodiment, the fisheye video information may be defined as an OmnidirectionalFisheyeVideoInformationStruct (ofvi) box and may be delivered via timed metadata. When the ofvi box is included in the dime metadata, the ofvi box may be derived as illustrated in the following table. Here, fields included in the ofvi box may have the same meaning as defined in the SEI message.

[Table 9]

```
class OmnidirectionalFisheyeVideoInformationSampleEntry(type) extends MetadataSampleEntry (type)
{
     OmnidirectionalFisheyeVideoInformationStruct ();
     Box [] other_boxes;
 }
```

[Table 10]

```
aligned (8) OmnidirectionalFisheyeVideoInformationSample () {
      OmnidirectionalFisheyeVideoInformationStruct ()
 }
```

When the content of the fisheye video information delivered via the timed metadata are equally applied to all video samples, the ofvi box may be included in a sample entry of a header (moov or moof box) of a corresponding timed metadata track as illustrated in Table 9. In this case, the fields of the ofvi box may be applied to all metadata samples in mdat.

Alternatively, when the content of the fisheye video information delivered via the timed metadata needs to be differently applied depending on video samples, the ofvi box may be included in a timed metadata sample as illustrated in Table 10. In this case, the fields of the ofvi box may be applied to a corresponding video sample.

In addition, when the content of the fisheye video information delivered via the timed metadata needs to be applied to all video sequences, the ofvi box may be included in the sample entry of the timed metadata track as described above, in which pieces of information (fields) of the ofvi box may be semantically extended to be applied to all the video sequence.

For example, assuming that a fisheye 360-degree camera capturing the video sequence is not changed, a disparity field, a field_of_view field, a num_viewing_directions_minus1 field, a center_yaw field, a center_pitch field, a center_roll field, a synchronized_left_right_360camera_flag field, a num_viewing_directions_per_right_view_minus 1 field, a center_yaw_per_right_view field, a center_pitch_per_right_view field, and a center_roll_per_right_view field included in the ofvi box may be applied to all the video sequences.

Further, when all the video sequences have the same image packing format, not only a num_picture_regions_minus1 field, a region_type field, a region_info field, a viewing_direction_left_circular_image field, and a viewing_direction_right_circular_image field but also a rect_region_top field, a rect_region_left field, a rect_region_width field, a rect_region_height field, a circular_image_center_x field, a circular image center_y field, and a circular_image_radius field included in the ofvi box may be defined to be applied to all the video sequences and may be referenced for all video sequences.

The fisheye video information may be delivered according to DASH. The fisheye video information described as a DASH-based descriptor may be derived as illustrated in the following table.

[Table 11]

| @value | Use |
|---|---|
| omnidirectional_fisheye_video_id | O |
| stereoscopic_flag | OD (defualt:flase) |
| synchronized_left_right_360camera_flag | OD (defualt:true) |
| num_viewing_directions_minus1 | D |
| num_picture_regions_minus1 | D |
| disparity | O |
| field_of_view | D |
| center_yaw, center_pitch, center_roll | D |
| num_viewing_directions_per_right_view_minus1 | O |
| field_of_view_per_right_view | O |
| center_yaw_per_right view, center_pitch_per_right_view, center_roll_per_right_view | O |
| region_type, region_info | D |
| viewing_direction_left_circular_image, viewing_direction_right_circular_image | O |
| rect_region_top, rect_region_left, rect_region_width, rect_region_height | D |
| circular_image_center_x, circular_image_center_y | D |
| circular_image_radius | D |

The DASH-based descriptor may include an @schemeIdUri field, an @value field, and/or an @id field. The @schemeIdUri field may provide a URI for identifying a scheme of the descriptor. The @value field may have values whose meaning is defined by the scheme indicated by the @schemeIdUri field. That is, the @value field may have values of descriptor elements according to the scheme, and these descriptor elements may be referred to as parameters and may be distinguished from each other by ','. The @id field may indicate an identifier of the descriptor. When descriptors have the same identifier, the descriptors may include the same scheme ID, the same value, and the same parameter.

When the fisheye video information is delivered according to DASH, the fisheye video information may be described as a DASH descriptor and may be transmitted to a receiver via an MPD. Descriptors for the fisheye video

32

information may be delivered as an essential property descriptor and/or a supplemental property descriptor illustrated above. These descriptors may be included and delivered in an adaptation set, a representation, or a sub-representation of the MPD.

In the descriptor delivering the fisheye video information illustrated in Table 11, the @schemeIdURI field may have a value of urn:mpeg:dash:vr201x, which may be a value indicating that the descriptor is a descriptor delivering fisheye video information.

The @value field of the descriptor for the fisheye video information may have the same value as in the embodiment illustrated in Table 11. That is, the parameters separated by ',' in the @value field may correspond to the respective fields of the fisheye video information illustrated above. The respective parameters may have the same meaning as the fields of the fisheye video information. In the illustrated embodiment, the respective parameters may have the same meaning as the signaling fields having the same terms described above.

The fisheye video information according to all the above-described embodiments may also be described in the form of a DASH-based descriptor. That is, although the embodiment illustrated in Table 11 is one embodiment described with the parameters of @value among the above-described various embodiments of the fisheye video information, the signaling fields may be replaced by the parameters of @value to be described in all the embodiments of the fisheye video information described above.

Here, M may indicate that a parameter is a mandatory parameter, a may indicate that a parameter is an optional parameter, and OD may indicate that a parameter is an optional parameter with a default value. When the value of an OD parameter is not given, a predefined default value may be used as the value of the parameter. In the embodiment illustrated in Table 11, the default value of each OD parameter is given in parentheses.

The foregoing embodiments of the fisheye video information according to the present invention may be combined with each other. In embodiments of the 360-degree video transmission apparatus and/or 360-degree video reception apparatus according to the present invention, fisheye video information may be the fisheye video information according to the foregoing embodiments.

Additional information may be further included in the fisheye video information transmitted as described above. Fisheye video information including additional information may be derived as illustrated in the following table.

[Table 12]

| omnidirectional_fisheye_video( payloadSize ) { | Descriptor |
|---|---|
| omnidirectional_fisheye_video_id | ue(v) |
| stereoscopic_flag | u(1) |
| synchronized_left_right_360camera_flag | u(1) |
| num_viewing_directions_minus1 | u(6) |
| num_picture_regions_minus1 | u(8) |
| if( stereoscopic_flag == 1 ) | |
|   disparity | u(8) |
| for( i = 0 ; i <= num_viewing_directions_minus1; i++ ) { | |
|   field_of_view[ i ] | u(32) |
|   center_yaw[ i ] | i(32) |
|   center_pitch[ i ] | i(32) |
|   center_roll[ i ] | i(32) |
|   spherical_center_offset_x[i] | u(32) |
|   spherical_center_offset_y[i] | u(32) |
|   spherical_center_offset_z[i] | u(32) |
|   focal_length[i] | u(32) |
|   lens_type[i] | u(8) |
|   if(lens_type[i] == 127){ | |
|     functional_descriptor() | |
|   } | |
| if(stereoscopic_flag == 1 && left_right_360camera_sync_flag == 0) { | |
|   num_viewing_directions_per_right_view_minus1 | u(6) |
|   reserved | u(2) |
|   for( i = 0 ; i <= num_viewing_directions_per_right_view_minus1; i++ ) { | |
|     field_of_view_per_right_view[ i ] | u(32) |
|     center_yaw_per_right_view[ i ] | i(32) |
|     center_pitch_per_right_view[ i ] | i(32) |
|     center_roll_per_right_view[ i ] | i(32) |
|   } | |
| for( i = 0 ; i <= num_picture_regions_minus1; i++ ) { | |
|   region_type[ i ] | u(2) |
|   region_info[ i ] | u(6) |
|   if(region_type[i] == 3) { | |
|     viewing_direction_left_circular_image [i] | u(8) |
|     viewing_direction_right_circular_image[i] | u(8) |
|   } | |
|   rect_region_top[ i ] | u(16) |
|   rect_region_left[ i ] | u(16) |
|   rect_region_width[ i ] | u(16) |
|   rect_region_height[ i ] | u(16) |
|   circular_image_center_x[ i ] | u(16) |
|   circular_image_center_y[ i ] | u(16) |
|   circular_image_radius[ i ] | u(32) |
|   supp_circular_image_radius [i] | u(32) |
|   num_of_supp_regions[i] | u(8) |
|   for(j=0; j <num_of_supp_regions[i]; j++) { | |
|     supp_rect_region_top [ i ] | u(16) |
|     supp_rect_region_left[ i ] | u(16) |
|     supp_rect_region_width[ i ] | u(16) |
|     supp_rect_region_height[ i ] | u(16) |
|     } | |
|   } | |
| } | |

Referring to Table 12, the SEI message may include omnidirectional_fisheye_video as fisheye video information. omnidirectional_fisheye_video may include fields for the fisheye video information. The fields may have the same meaning as described above.

Also, referring to Table 12, omnidirectional_fisheye_video may include a spherical_center_offset_x[i] field, a spherical_center_offset_y[i] field, a spherical_center_offset_z[i] field, a focal_length[i] field, a lens_type[i] field, a supp_circular_image_radius[i] field, a num_of_supp_regions[i] field, a supp_rect_region_top [i] field, a supp_rect_region_left[i] field, a supp_rect_region_width[i] field, a supp_rect_region_height[i] field, and/or a functional_descriptor() field.

The spherical_center_offset_x[i] field, the spherical_center_offset_y[i] field, and the spherical_center_offset_z[i] field may indicate sphere coordinates (e.g., a unit sphere) in which an image captured by a 360-degree fisheye camera is rendered. Specifically, when a (unit) sphere in which an image captured through an i-th fisheye lens is rendered is referred to as an i-th local sphere and a sphere in which all resulting images are rendered to construct a 360-degree video is referred to as a global sphere, the spherical_center_offset_x[i] field, the spherical_center_offset_y[i] field, and the spherical_center_offset_z[i] field may indicate the distance of the center of the i-th local sphere from the center of the global sphere in an XYZ coordinate system. That is, with the center of the global sphere as the origin, the spherical_center_offset_x[i] field may indicate the x component of the center of the i-th local sphere, the spherical_center_offset_y[i] field may indicate the y component of the center of the i-th local sphere, and the spherical_center_offset_z[i] field may indicate the z component of the center of the i-th local sphere. Here, the unit of the x component, the y component, and the z component respectively indicated by the spherical_center_offset_x[i] field, the spherical center offset_y[i] field, and the spherical_center_offset_z [i] field may be a unit sphere or may be an actual length (e.g., in mm). The spherical_center_offset_x[i] field, the spherical_center_offset_y[i] field, and the spherical_center_offset_z[i] field may be used together with a center_pitch [i] field and a center_roll[i] field, which are illustrated above, in order to indicate the relative positions of individual cameras included in a 360-degree camera and the angle of an imaging surface.

The focal_length[i] field may indicate the focal length of a fisheye lens. The focal length indicated by the focal_length[i] field may be expressed in mm. It may be assumed that the focal length may have an inverse-function relationship with the field of view (FoV). The relationship between the focal length and the FoV may be derived as in the following equation.

[Equation 6]

$$\frac{aperture}{2} = \frac{FoV}{2} = \frac{1}{focal\ length}$$

The lens_type[i] field may indicate a lens type for an image. The lens type indicated by the lens_type[i] field may be derived as in the following table.

[Table 13]

| lens_type | description |
|-----------|-------------|
| 0 | undefined |
| 1 | equidistant |
| 2 | stereographic |
| 3 | equisolid angle |
| 4 | orthographic |
| 5-126 | reserved |
| 127 | user defined |

Referring to Table 13, the lens type may be derived based on the value of the lens_type[i] field. For example, when the value of the lens_type[i] field is 1, the lens type may be derived as an equidistant type; when the value of the lens_type[i] field is 2, the lens type may be derived as a stereographic type; when the value of the lens_type[i] field is 3, the lens type may be derived as an equisolid angle type; when the value of the lens_type[i] field is 4, the lens type may be derived as an orthographic type. In addition, when the value of the lens_type[i] field is 127, a user may define an arbitrary function and a parameter thereabout may be delivered.

For example, when the value of the lens_type[i] field is 127, functional_descriptor() may be delivered. In functional_descriptor(), parameters for defining the arbitrary function may be defined, and variables indicating the start and the end of a section for N sections, variables defining the type of a function used in a section (linear, polynomial, exponential, or Bazier functions), and variables for specifying each function may be delivered.

According to the lens type derived based on the lens_type[i] field, a different spherical coordinates mapping equation for a fisheye camera may be applied.

A spherical coordinate system mapping equation according to the lens type may be derived as follow.

[Equation 7]

stereographic          $a = 2 * atan\ (r/(2*f))$
equidistant             $a = r\ /\ f$
equisolid angle       $a = 2 * asin\ (r/(2*f))$
orthographic          $a = asin\ (r/f)$

Here, r is the distance from the center of a circular image, that is, r is the radius of the circular image, f is the focal length, and a is the angle from an optical axis.

Specifically, for example, when the value of the spherical_center_offset_x[i] field, the value of the spherical_center_offset_y[i] field, and the value of the spherical_center_offset_z[i] field are 0, mapping to spherical coordinates according to the lens type and mapping to a projected picture according to ERP may be performed as in the following table.

[Table 14]

Fisheye coordinate to 3D fisheye lens capturing coordinate conversion (using focal length)

if fisheye_lens_type[i] = 1 (equidistant)

$\phi'$ = ((sqrt((x − circular_image_center_x[ i ] * $2^{-16}$) * (x − circular_image_center_x[ i ] * $2^{-16}$) + (y − circular_image_center_y[ i ] * $2^{-16}$) * (y − circular_image_center_y[ i ] * $2^{-16}$)) / (circular_image_radius[ i ] * $2^{-16}$)) * field_of_view[ i ] * $2^{-16}$ * π ÷ 180) / 2

$\theta'$ = atan2 ((y- circular_image_center_y[ i ] * $2^{-16}$) / (circular_image_radius[ i ] * $2^{-16}$)
, (x − circular_image_center_x[ i ] * $2^{-16}$) / (circular_image_radius[ i ] * $2^{-16}$))

else if fisheye_lens_type[i] = 2 (stereographic)

$\phi'$ = 2 * atan((sqrt((x − circular_image_center_x[ i ] * $2^{-16}$) * (x − circular_image_center_x[ i ] * $2^{-16}$) + (y − circular_image_center_y[ i ] * $2^{-16}$) * (y − circular_image_center_y[ i ] * $2^{-16}$)) / (circular_image_radius[ i ] * $2^{-16}$)) * (field_of_view[ i ] * $2^{-16}$ * π ÷ 180) / 2 / 2)

$\theta'$ = atan2 ((y- circular_image_center_y[ i ] * $2^{-16}$) / (circular_image_radius[ i ] * $2^{-16}$)
, (x − circular_image_center_x[ i ] * $2^{-16}$) / (circular_image_radius[ i ] * $2^{-16}$))

else if fisheye_lens_type[i] = 3 (equisolid angle)

$\phi'$ = 2 * asin((sqrt((x − circular_image_center_x[ i ] * $2^{-16}$) * (x − circular_image_center_x[ i ] * $2^{-16}$) + (y − circular_image_center_y[ i ] * $2^{-16}$) * (y − circular_image_center_y[ i ] * $2^{-16}$)) / (circular_image_radius[ i ] * $2^{-16}$)) *( field_of_view[ i ] * $2^{-16}$ π ÷ 180) / 2 / 2)

$0'$ = atan2 ((y- circular_image_center_y[ i ] * $2^{-16}$) / (circular_image_radius[ i ] * $2^{-16}$)
, (x − circular_image_center_x[ i ] * $2^{-16}$) / (circular_image_radius[ i ] * $2^{-16}$))

else if fisheye_lens_type[i] = 4 (orthographic)

$\phi'$ = asin((sqrt((x − circular_image_center_x[ i ] * $2^{-16}$) * (x − circular_image_center_x[ i ] * $2^{-16}$) + (y − circular_image_center_y[ i ] * $2^{-16}$) * (y − circular_image_center_y[ i ] * $2^{-16}$)) / (circular_image_radius[ i ] * $2^{-16}$)) * field_of_view[ i ] * $2^{-16}$ π ÷ 180) / 2)

$0'$ = atan2 ((y- circular_image_center_y[ i ] * $2^{-16}$) / (circular_image_radius[ i ] * $2^{-16}$)
, (x − circular_image_center_x[ i ] * $2^{-16}$) / (circular_image_radius[ i ] * $2^{-16}$))

3D fisheye lens capturing coordinate to XYZ coordinate conversion

$x_1$ = Sin $\phi'$ * Cos $\theta'$
$y_1$ = Cos $\phi'$
$z_1$ = Sin $\phi'$ * Sin $0'$

XYZ coordinate to spherical coordinate conversion

$x_2$ = Cos( β ) * Cos ( γ ) * $x_1$ − Cos( β ) * Sin( γ ) * $y_1$ + Sin( β ) * $z_1$
$y_2$ = ( Cos( α ) * Sin( γ ) + Sin( α ) * Sin( β ) * Cos( γ ) ) * $x_1$ + ( Cos( α ) * Cos( γ ) − Sin( α ) * Sin( β ) * Sin( γ ) ) * $y_1$ − Sin( α ) * Cos( β ) * $z_1$
$z_2$ = ( Sin( α ) * Sin( γ ) − Cos( α ) * Sin( β ) * Cos( γ ) ) * $x_1$ + ( Sin( α ) * Cos( γ ) + Cos( α ) * Sin( β ) * Sin( γ ) ) * $y_1$ + Cos( α ) * Cos( β ) * $z_1$

$\phi$ = Atan2( $y_2$, $x_2$ ) * 180 ÷ π
$\theta$ = Asin( $z_2$ ) * 180 ÷ π

sphere coordinate to ERP coordinate conversion

x_ERP = $\phi$ / π
y_ERP = 2*$\theta$ / π

When the value of the spherical_center_offset_x[i] field, the value of the spherical_center_offset_y[i] field, and the value of the spherical_center_offset_z[i] field are not 0, a process of mapping an image mapped on the i-th local sphere to the global sphere may be added.

Although only a lens type of the fisheye camera is defined in the present invention, the above-described syntax elements may be used to define a receiver operation according to the lens type of a general camera or the lens type of a different fisheye camera.

The supp_circular_image_radius[i] field may be used to derive the range of samples that can be used to construct a 360-degree sphere. Here, the 360-degree sphere may indicate a 3D space in which the 360-degree video is rendered. For example, there may be a region hidden by the structure of the 360-degree camera, and the supp_circular_image_radius[i] field may be delivered to exclude the region from a stitching process. The supp_circular_image_radius[i] field may indicate, for example, the radius of a circular region not mapped to the 360-degree video. The supp_circular_image_radius[i] field may have a smaller value than that of the circular_image_radius[i] field described above.

In addition, information about a plurality of rectangular regions may be transmitted to deliver specific information about the 360-degree sphere. The rectangular regions may indicate regions not mapped to the 360-degree video and may be referred to as a dead zone. In order to reduce the amount of bits for the 360-degree video, samples in the rectangular regions may be set to the same sample value. For example, all the samples in the rectangular regions may be set to a sample value indicating black.

The num_of_supp_regions[i] field may indicate the number of rectangular regions. The supp_rect_region_top[i] field and the supp_rect_region_left[i] field may indicate the top-left position (the position of the top-left point) of a rectangular region. The supp_rect_region_width[i] field may indicate the width of the rectangle region, and the supp_rect_region_height[i] field may indicate the height of the rectangle region.

The supp_circular_image_radius[i] field may be used to deliver useful information for a stitching process, such as essential information and information about a region that can be considered to have no error, such as lens shading.

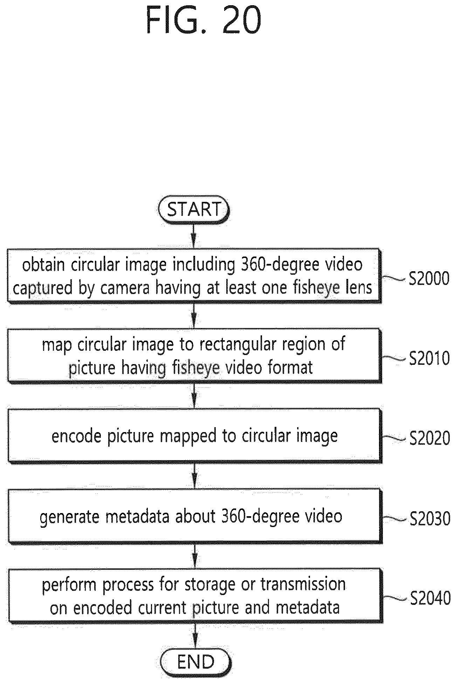

FIG. 20 schematically illustrates a 360-degree video data processing method by a 360-degree video transmission apparatus according to the present invention. The method disclosed in FIG. 20 may be performed by the 360-degree video transmission apparatus disclosed in FIG. 5. Specifically, for example, S2000 of FIG. 20 may be performed by the data input unit of the 360-degree video transmission apparatus, S2010 may be performed by the projection processor of the 360-degree video transmission apparatus, S2020 may be performed by the data encoder of the 360-degree video transmission apparatus, S2030 may be performed by the metadata processor of the 360-degree video transmission device, and S2040 may be performed by the transmission processor of the 360-degree video transmission apparatus. The transmission processor may be included in the transmitter.

The 360-degree video transmission apparatus acquires a circular image including a 360-degree video captured by a camera having at least one fisheye lens (S2000). The 360-degree video transmission apparatus may acquire the circular image including the 360-degree video captured by the camera having the at least fisheye lens.

The 360-degree video transmission apparatus maps the circular image to a rectangular region of a picture having a fisheye video format (S2010). The 360-degree video transmission apparatus may map the circular image to the rectangular region of the picture. The 360-degree video transmission apparatus may acquire a plurality of circular images, and the picture may include at least one rectangular region. In this case, the 360-degree video transmission apparatus may map at least one of the plurality of circular images to the rectangular region.

In addition, the 360-degree video transmission apparatus may perform a process of rotating or rearranging the rectangular region of the picture or changing the resolution of the rectangular region. This process may be referred to as region-wise packing or frame packing.

The 360-degree video transmission apparatus encodes the picture mapped to the circular image (S2020). The 360-degree video transmission apparatus may encode the current picture. In addition, the 360-degree video transmission apparatus may encode metadata.

The 360-degree video transmission apparatus generates metadata about the 360-degree video (S2030). The metadata may include fisheye video information.

The fisheye video information may include an omnidirectional_fisheye_video_id field, a stereoscopic_flag field, a synchronized_left_right_360camera_flag field, a num_viewing_directions_minus1 field, a num_picture_regions_minus1 field, a disparity field, a field_of_view field, a center_yaw[i] field, a center_pitch[i] field, a center_roll[i] field, a num_viewing_directions_per_right_view_minus1 field, a field_of_view_per_right_view[i] field, a center_yaw_per_right_view[i] field, a center_pitch_per_right_view[i] field, a center_roll_per_right_view[i] field, a region_type[i] field, a region_info[i] field, a rect_region_top[i] field, a rect_region_left[i] field, a rect_region_width[i] field, a rect_region_height[i] field, a circular_image_center_x[i] field, a circular_image_center_y[i] field, a circular_image_radius[i] field, a spherical_center_offset_x[i] field, a spherical_center_offset_y[i] field, a spherical_center_offset_z[i] field, a focal_length[i] field, a lens_type[i] field, a supp_circular_image_radius[i] field, a num_of_supp_regions[i] field, a supp_rect_region_top[i] field, a supp_rect_region_left[i] field, a supp_rect_region_width[i] field, a supp_rect_region_height[i] field, and/or a functional_descriptor() field as described above.

The fields have been described above.

Specifically, for example, the fisheye video information may include information indicating a lens type. The lens type may be one of an equidistant type, a stereographic type, an equisolid angle type, an orthographic type, and a user-defined type. For example, when the value of the information indicating the lens type is 1, the lens type may be derived as the equidistant type; when the value of the information indicating the lens type is 2, the lens type may be derived as the stereographic type; when the value of the information indicating the lens type is 3, the lens type may be derived as the equisolid angle type; when the value of the information indicating the lens type is 4, the lens type may be derived as the orthographic type; when the value of the information indicating the lens type is 127, the lens type may be derived as the user-defined type. The information indicating the lens type may be the lens_type[i] field.

A spherical coordinate system mapping equation used to map the circular image to a 3D space may be derived based on the lens type.

For example, when the center of the 3D space to which the circular image is mapped is (0, 0, 0), the spherical coordinate system mapping equation may be derived as follows based on the lens type.

When the lens type is the equidistant type, the spherical coordinate system mapping equation may be derived as the following equation.

[Equation 8]

$$\phi' = ((sqrt((x - circular\_image\_center\_x[\,i\,] * 2^{-16}) * (x - circular\_image\_center\_x[\,i\,] * 2^{-16}) + (y - circular\_image\_center\_y[\,i\,] * 2^{-16}) * (y - circular\_image\_center\_y[\,i\,] * 2^{-16})) / (circular\_image\_radius[\,i\,] * 2^{-16})) * field\_of\_view[\,i\,] * 2^{-16} * \pi \div 180) / 2$$

$$\theta' = atan2\,((y\text{-}\,circular\_image\_center\_y[\,i\,] * 2^{-16}) / (circular\_image\_radius[\,i\,] * 2^{-16}) , (x - circular\_image\_center\_x[\,i\,] * 2^{-16}) / (circular\_image\_radius[\,i\,] * 2^{-16}))$$

$$x_1 = Sin\,\phi' * Cos\,\theta'$$
$$y_1 = Cos\,\phi'$$
$$z_1 = Sin\,\phi' * Sin\,\theta'$$

$$x_2 = Cos(\beta) * Cos(\gamma) * x_1 - Cos(\beta) * Sin(\gamma) * y_1 + Sin(\beta) * z_1$$
$$y_2 = (Cos(\alpha) * Sin(\gamma) + Sin(\alpha) * Sin(\beta) * Cos(\gamma)) * x_1 + (Cos(\alpha) * Cos(\gamma) - Sin(\alpha) * Sin(\beta) * Sin(\gamma)) * y_1 - Sin(\alpha) * Cos(\beta) * z_1$$
$$z_2 = (Sin(\alpha) * Sin(\gamma) - Cos(\alpha) * Sin(\beta) * Cos(\gamma)) * x_1 + (Sin(\alpha) * Cos(\gamma) + Cos(\alpha) * Sin(\beta) * Sin(\gamma)) * y_1 + Cos(\alpha) * Cos(\beta) * z_1$$

$$\phi = Atan2(y_2, x_2) * 180 \div \pi$$
$$\theta = Asin(z_2) * 180 \div \pi$$

Here, circular_image_center_x[i] indicates syntax for the x component of the center of the circular image, circular_image_center_y[i] indicates syntax for the y component of the center of the circular image, circular_image_radius [i] indicates syntax for the radius of the circular image, and field_of_view[i] indicates syntax for the view angle of a viewing direction with respect to the circular image. The position $(\Phi, 0)$ of a sample in the 3D space corresponding to a position (x, y) in the circular image may be derived based on Equation 8.

In another example, when the lens type is the stereographic type, the spherical coordinate system mapping equation may be derived as the following equation.

[Equation 9]

$$\phi' = 2 * atan((sqrt((x - circular\_image\_center\_x[\,i\,] * 2\text{-}16) * (x - circular\_image\_center\_x[\,i\,] * 2\text{-}16) + (y - circular\_image\_center\_y[\,i\,] * 2\text{-}16) * (y - circular\_image\_center\_y[\,i\,] * 2\text{-}16)) / (circular\_image\_radius[\,i\,] * 2\text{-}16)) * (field\_of\_view[\,i\,] * 2\text{-}16 * \pi \div 180) / 2 / 2)$$

$$\theta' = atan2\,((y\text{-}\,circular\_image\_center\_y[\,i\,] * 2\text{-}16) / (circular\_image\_radius[\,i\,] * 2\text{-}16) , (x - circular\_image\_center\_x[\,i\,] * 2\text{-}16) / (circular\_image\_radius[\,i\,] * 2\text{-}16))$$

$$x_1 = Sin\,\phi' * Cos\,\theta'$$
$$y_1 = Cos\,\phi'$$
$$z_1 = Sin\,\phi' * Sin\,\theta'$$

$$x_2 = Cos(\beta) * Cos(\gamma) * x_1 - Cos(\beta) * Sin(\gamma) * y_1 + Sin(\beta) * z_1$$
$$y_2 = (Cos(\alpha) * Sin(\gamma) + Sin(\alpha) * Sin(\beta) * Cos(\gamma)) * x_1 + (Cos(\alpha) * Cos(\gamma) - Sin(\alpha) * Sin(\beta) * Sin(\gamma)) * y_1 - Sin(\alpha) * Cos(\beta) * z_1$$
$$z_2 = (Sin(\alpha) * Sin(\gamma) - Cos(\alpha) * Sin(\beta) * Cos(\gamma)) * x_1 + (Sin(\alpha) * Cos(\gamma) + Cos(\alpha) * Sin(\beta) * Sin(\gamma)) * y_1 + Cos(\alpha) * Cos(\beta) * z_1$$

$$\phi = Atan2(y_2, x_2) * 180 \div \pi$$
$$\theta = Asin(z_2) * 180 \div \pi$$

Here, circular_image_center_x[i] indicates syntax for the x component of the center of the circular image, circular_image_center_y[i] indicates syntax for the y component of the center of the circular image, circular_image_radius [i] indicates syntax for the radius of the circular image, and field_of_view[i] indicates syntax for the view angle of a viewing direction with respect to the circular image. The position $(\Phi, \theta)$ of a sample in the 3D space corresponding to a position $(x, y)$ in the circular image may be derived based on Equation 9.

Further, in another example, when the lens type is the equisolid angle type, the spherical coordinate system mapping equation may be derived as the following equation.

[Equation 10]

$$
\begin{aligned}
&\phi' = 2 * \text{asin}((\text{sqrt}((x - \text{circular\_image\_center\_x}[\,i\,] * 2\text{-}16) * (x - \text{circular\_image\_center\_x}[\,i\,] * 2\text{-}16) + (y - \\
&\qquad \text{circular\_image\_center\_y}[\,i\,] * 2\text{-}16) * (y - \text{circular\_image\_center\_y}[\,i\,] * 2\text{-}16)) / (\text{circular\_image\_radius}[\,i\,] * \\
&\qquad 2\text{-}16)) *( \text{field\_of\_view}[\,i\,] * 2\text{-}16 * \pi \div 180) / 2 \ / 2) \\
&\theta' = \text{atan2} ((y\text{-} \text{circular\_image\_center\_y}[\,i\,] * 2\text{-}16) / (\text{circular\_image\_radius}[\,i\,] * 2\text{-}16) \\
&\qquad , (x - \text{circular\_image\_center\_x}[\,i\,] * 2\text{-}16) / (\text{circular\_image\_radius}[\,i\,] * 2\text{-}16)) \\[4pt]
&x_1 = \text{Sin } \phi' * \text{Cos } \theta' \\
&y_1 = \text{Cos } \phi' \\
&z_1 = \text{Sin } \phi' * \text{Sin } \theta' \\[4pt]
&x_2 = \text{Cos}(\beta) * \text{Cos}(\gamma) * x_1 - \text{Cos}(\beta) * \text{Sin}(\gamma) * y_1 + \text{Sin}(\beta) * z_1 \\
&y_2 = (\text{Cos}(\alpha) * \text{Sin}(\gamma) + \text{Sin}(\alpha) * \text{Sin}(\beta) * \text{Cos}(\gamma)) * x_1 + (\text{Cos}(\alpha) * \text{Cos}(\gamma) - \text{Sin}(\alpha) * \text{Sin}(\beta) * \text{Sin}(\gamma)) * \\
&\qquad y_1 - \text{Sin}(\alpha) * \text{Cos}(\beta) * z_1 \\
&z_2 = (\text{Sin}(\alpha) * \text{Sin}(\gamma) - \text{Cos}(\alpha) * \text{Sin}(\beta) * \text{Cos}(\gamma)) * x_1 + (\text{Sin}(\alpha) * \text{Cos}(\gamma) + \text{Cos}(\alpha) * \text{Sin}(\beta) * \text{Sin}(\gamma)) * \\
&\qquad y_1 + \text{Cos}(\alpha) * \text{Cos}(\beta) * z_1 \\[4pt]
&\phi = \text{Atan2}(y_2, x_2) * 180 \div \pi \\
&\theta = \text{Asin}(z_2) * 180 \div \pi
\end{aligned}
$$

Here, circular_image_center_x[i] indicates syntax for the x component of the center of the circular image, circular_image_center_y[i] indicates syntax for the y component of the center of the circular image, circular_image_radius [i] indicates syntax for the radius of the circular image, and field_of_view[i] indicates syntax for the view angle of a viewing direction with respect to the circular image. The position $(\Phi, 0)$ of a sample in the 3D space corresponding to a position $(x, y)$ in the circular image may be derived based on Equation 10.

Further, in another example, when the lens type is the orthographic type, the spherical coordinate system mapping equation may be derived as the following equation.

[Equation 11]

$$
\begin{aligned}
&\phi' = \text{asin}((\text{sqrt}((x - \text{circular\_image\_center\_x}[\,i\,] * 2\text{-}16) * (x - \text{circular\_image\_center\_x}[\,i\,] * 2\text{-}16) + (y - \\
&\qquad \text{circular\_image\_center\_y}[\,i\,] * 2\text{-}16) * (y - \text{circular\_image\_center\_y}[\,i\,] * 2\text{-}16)) / (\text{circular\_image\_radius}[\,i\,] * \\
&\qquad 2\text{-}16)) * \text{field\_of\_view}[\,i\,] * 2\text{-}16 * \pi \div 180) / 2) \\
&\theta' = \text{atan2} ((y\text{-} \text{circular\_image\_center\_y}[\,i\,] * 2\text{-}16) / (\text{circular\_image\_radius}[\,i\,] * 2\text{-}16) \\
&\qquad , (x - \text{circular\_image\_center\_x}[\,i\,] * 2\text{-}16) / (\text{circular\_image\_radius}[\,i\,] * 2\text{-}16)) \\[4pt]
&x_1 = \text{Sin } \phi' * \text{Cos } \theta' \\
&y_1 = \text{Cos } \phi' \\
&z_1 = \text{Sin } \phi' * \text{Sin } \theta' \\[4pt]
&x_2 = \text{Cos}(\beta) * \text{Cos}(\gamma) * x_1 - \text{Cos}(\beta) * \text{Sin}(\gamma) * y_1 + \text{Sin}(\beta) * z_1 \\
&y_2 = (\text{Cos}(\alpha) * \text{Sin}(\gamma) + \text{Sin}(\alpha) * \text{Sin}(\beta) * \text{Cos}(\gamma)) * x_1 + (\text{Cos}(\alpha) * \text{Cos}(\gamma) - \text{Sin}(\alpha) * \text{Sin}(\beta) * \text{Sin}(\gamma)) * \\
&\qquad y_1 - \text{Sin}(\alpha) * \text{Cos}(\beta) * z_1 \\
&z_2 = (\text{Sin}(\alpha) * \text{Sin}(\gamma) - \text{Cos}(\alpha) * \text{Sin}(\beta) * \text{Cos}(\gamma)) * x_1 + (\text{Sin}(\alpha) * \text{Cos}(\gamma) + \text{Cos}(\alpha) * \text{Sin}(\beta) * \text{Sin}(\gamma)) * \\
&\qquad y_1 + \text{Cos}(\alpha) * \text{Cos}(\beta) * z_1 \\[4pt]
&\phi = \text{Atan2}(y_2, x_2) * 180 \div \pi \\
&\theta = \text{Asin}(z_2) * 180 \div \pi
\end{aligned}
$$

Here, circular_image_center_x[i] indicates syntax for the x component of the center of the circular image, circular_image_center_y[i] indicates syntax for the y component of the center of the circular image, circular_image_radius[i] indicates syntax for the radius of the circular image, and field_of_view[i] indicates syntax for the view angle of a viewing direction with respect to the circular image. The position $(\Phi, \theta)$ of a sample in the 3D space corresponding to a position (x, y) in the circular image may be derived based on Equation 11.

In another example, the fisheye video information may include information about a region not mapped to 360-degree video data.

For example, the information about the region not mapped to the 360-degree video data may include information indicating the radius of a circular region not mapped to the 360-degree video. The information indicating the radius of the circular region may correspond to the supp_circular_image_radius[i] field.

The information about the region not mapped to the 360-degree video data may include information indicating the number of rectangular regions not mapped to the 360-degree video. The information about the region not mapped to the 360-degree video data may include information indicating the top left point of a rectangular region not mapped to the 360-degree video, information indicating the height of the rectangular region, and information indicating the width of the rectangular region. Here, samples in a region not mapped to the 360-degree video data may be set to the same sample value. For example, the samples in the region not mapped to the 360-degree video data may be set to the same sample value, and the sample value may be a value representing black. The information indicating the number of rectangular regions not mapped to the 360-degree video may correspond to the num_of_supp_regions[i] field, the information indicating the top left point of the rectangular region not mapped to the 360-degree video may correspond to the supp_rect_region_top[i] field and the supp_rect_region_left[i] field, the information indicating the height of the rectangular region may correspond to the supp_rect_region_height[i] field, and the information indicating the width of the rectangular region may correspond to the supp_rect_region_width[i] field.

Further, in another example, the fisheye video information may include information indicating the focal length of the fisheye lens with respect to the 360-degree video data. The information indicating the height of the rectangular region may correspond to the focal_length[i] field.

Further, in another example, the fisheye video information may include information indicating the center of a 3D space in which the circular image is rendered. The information indicating the center of the 3D space in which the circular image is rendered may correspond to the spherical_center_offset_x[i] field, the spherical_center_offset_y[i] field, and the spherical_center_offset_z[i] field.

Further, in another example, the fisheye video information may include information describing the circular image and information describing the rectangular region mapped to the circular image. The information describing the circular image and the information describing the rectangular region may be used for a 360-degree video reception apparatus to extract 360-degree video data corresponding to the intersection of the circular image and the rectangular region.

The information describing the circular image may include information indicating the view angle of the fisheye lens that captures the circular image and information indicating the coordinates of the center point of a region occupied by the circular image in a 3D space. The information describing the rectangular region may include information indicating the position of the top left point of the rectangular region, the width of the rectangular region, and the height of the rectangular region to specify the rectangular region and information indicating the coordinates of the center point of the circular image mapped to the rectangular region and the radius of the circular image to specify the circular image.

The information describing the rectangular region may include region type information and region addition information that has a different meaning depending on the value of the region type information. The circular image mapped to the picture may include stereoscopic 360-degree video data. The region type information may indicate the viewing position of the circular image mapped to the rectangular region, and the region addition information may indicate the viewing direction of the circular image mapped to the rectangular region.

The region type information may further indicate whether a plurality of circular images having the same viewing direction is mapped to the rectangular region. When a plurality of circular images having the same viewing direction is mapped to the rectangular region, the region addition information may indicate the viewing direction of the plurality of circular images mapped to the rectangular region.

The region type information may further indicate whether a plurality of circular images having the same viewing position is mapped to the rectangular region. When a plurality of circular images having the same viewing position is mapped to the rectangular region, the region addition information may indicate the viewing position of the plurality of circular images mapped to the rectangular region.

The metadata may be transmitted through an SEI message. Also, the metadata may be included in an adaptation set, a representation, or a sub-representation of a media presentation description (MPD). For example, the fisheye video information may be transmitted in the form of a Dynamic Adaptive Streaming over HTTP (DASH) descriptor included in the MPD. Here, the SEI message may be used to support decoding a 2D image or displaying a 2D image in a 3D space.

The 360-degree video transmission apparatus performs a process for storage or transmission on the encoded current picture and the metadata (S2140). The 360-degree video transmission apparatus may encapsulate the encoded 360-degree video data and/or the metadata into a file or the like. The 360-degree video transmission apparatus may encapsulate the encoded 360-degree video data and/or the metadata in a file format, such as the ISOBMFF or the CFF, or may process the same into a DASH segment or the like in order to store or transmit the same. The 360-degree video transmission apparatus may include the metadata in a file format. For example, the metadata may be included in a box having various levels in the ISOBMFF or may be included as data of a separate track in a file. In addition, the 360-degree video transmission apparatus may encapsulate the metadata itself into a file. The 360-degree video transmission apparatus may apply processing for transmission to the 360-degree video data encapsulated according to the file format. The 360-degree video transmission apparatus may process the 360-degree video data according to any transmission protocol. The processing for transmission may include processing for delivery through a broadcast network or processing for delivery through a communication network, such as a broadband. Furthermore, the 360-degree video transmission apparatus may also apply processing for transmission to the metadata. The 360-degree video transmission apparatus may transmit the 360-degree video data and the metadata, which are processed for transmission, through a broadcast network and/or a broadband.

According to the present invention, it is possible to derive a spherical coordinate system mapping equation according to the lens type based on information indicating the lens type of a fisheye lens for a 360-degree video, thus accurately mapping 360-degree video data to a 3D space in view of the lens type. In addition, according to the present invention, it is possible to efficiently derive 360-degree video data mapped to a 3D space based on information indicating a region not mapped to the 360-degree video data, thus improving coding efficiency.

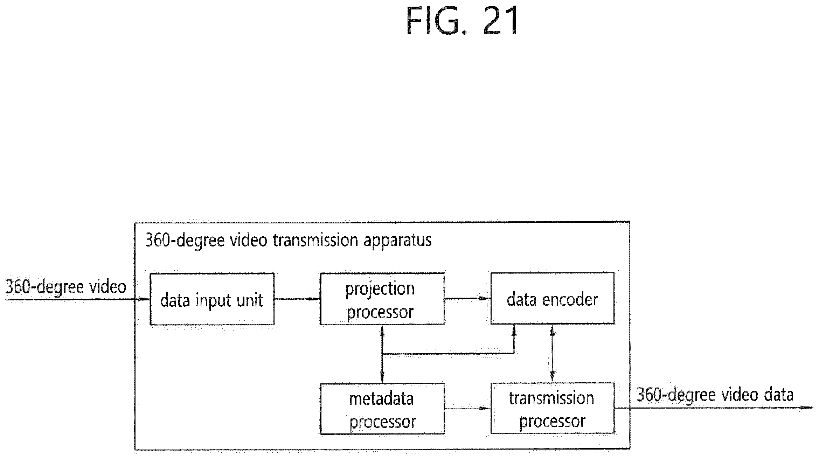

FIG. 21 schematically illustrates a 360-degree video transmission apparatus that performs a 360-degree video data processing method according to the present invention. The method disclosed in FIG. 20 may be performed by the 360-degree video transmission apparatus disclosed in FIG. 21. Specifically, for example, a data input unit of the 360-degree video transmission apparatus in FIG. 21 may perform S2000 of FIG. 20, a projection processor of the 360-degree video transmission apparatus in FIG. 21 may perform S2010 of FIG. 20, a data encoder of the 360-degree video transmission apparatus in FIG. 21 may perform S2020 of FIG. 20, a metadata processor of the 360-degree video transmission device in FIG. 21 may perform S2030 of FIG. 20, and a transmission processor of the 360-degree video transmission apparatus in FIG. 21 may perform S2040 of FIG. 20. The transmission processor may be included in a transmitter.

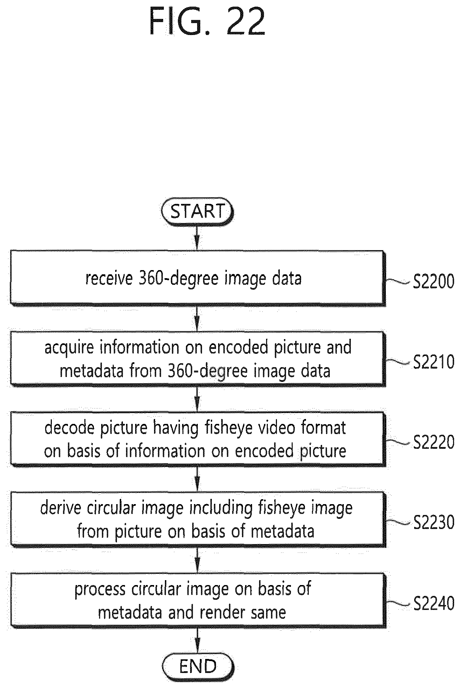

FIG. 22 schematically illustrates a 360-degree video data processing method by a 360-degree video reception apparatus according to the present invention. The method disclosed in FIG. 22 may be performed by the 360-degree video reception apparatus disclosed in FIG. 6. Specifically, for example, S2200 of FIG. 22 may be performed by the receiver of the 360-degree video reception apparatus, S2210 may be performed by the reception processor of the 360-degree video reception apparatus, S2220 may be performed by the data decoder of the 360-degree video reception apparatus, and S2230 and S2240 may be performed by the renderer of the 360-degree video reception apparatus.

The 360-degree video reception apparatus receives 360-degree video data (S2200). The 360-degree video reception apparatus may receive the 360-degree video data signaled from a 360-degree video transmission apparatus through a broadcast network. In addition, the 360-degree video reception apparatus may receive the 360-degree video data through a communication network, such as broadband, or a storage medium.

The 360-degree video reception apparatus acquires information about an encoded picture and metadata from the 360-degree video data (S2210). The 360-degree video reception apparatus may process the received 360-degree video data according to a transmission protocol and may acquire the information about the encoded picture and the metadata from the 360-degree video data. Further, the 360-degree video reception apparatus may perform the reverse process of the aforementioned process for transmission of the 360-degree video transmission apparatus.

The metadata may include fisheye video information.

The fisheye video information may include an omnidirectional_fisheye_video_id field, a stereoscopic_flag field, a synchronized_left_right_360camera_flag field, a num_viewing_directions_minus1 field, a num_picture_regions_minus1 field, a disparity field, a field_of_view field, a center_yaw[i] field, a center_pitch[i] field, a center_roll[i] field, a num_viewing_directions_per_right_view_minus1 field, a field_of_view_per_right_view[i] field, a center_yaw_per_right_view[i] field, a center_pitch_per_right_view[i] field, a center_roll_per_right_view[i] field, a region_type[i] field, a region_info[i] field, a rect_region_top[i] field, a rect_region_left[i] field, a rect_region_width[i] field, a rect_region_height[i] field, a circular_image_center_x[i] field, a circular_image_center_y[i] field, a circular_image_radius[i] field, a spherical_center_offset_x[i] field, a spherical_center_offset_y[i] field, a spherical_center_offset_z[i] field, a focal_length[i] field, a lens_type[i] field, a supp_circular_image_radius[i] field, a num_of_supp_regions[i] field, a supp_rect_region_top[i] field, a supp_rect_region_left[i] field, a supp_rect_region_width[i] field, a supp_rect_region_height[i] field, and/or a functional_descriptor() field as described above.

The fields have been described above.

Specifically, for example, the fisheye video information may include information indicating a lens type. The lens type may be one of an equidistant type, a stereographic type, an equisolid angle type, an orthographic type, and a user-defined type. For example, when the value of the information indicating the lens type is 1, the lens type may be derived as the equidistant type; when the value of the information indicating the lens type is 2, the lens type may be derived as the stereographic type; when the value of the information indicating the lens type is 3, the lens type may be derived as the equisolid angle type; when the value of the information indicating the lens type is 4, the lens type may be derived as the orthographic type; when the value of the information indicating the lens type is 127, the lens type may be derived as the user-defined type. The information indicating the lens type may be the lens_type[i] field.

A spherical coordinate system mapping equation used to map a circular image to a 3D space may be derived based on the lens type. The 360-degree video reception apparatus may map a circular image to a 3D space according to the spherical coordinate system mapping equation derived based on the lens type.

For example, when the center of the 3D space to which the circular image is mapped is (0, 0, 0), the spherical coordinate system mapping equation may be derived as follows based on the lens type.

When the lens type is the equidistant type, the spherical coordinate system mapping equation may be derived as Equation 8. In another example, when the lens type is the stereographic type, the spherical coordinate system mapping equation may be derived as Equation 9. Further, in another example, when the lens type is the equisolid angle type, the spherical coordinate system mapping equation may be derived as Equation 10. Further, in another example, when the lens type is the orthographic type, the spherical coordinate system mapping equation may be derived as Equation 11.

According to the present invention, it is possible to derive a spherical coordinate system mapping equation according to the lens type based on information about the lens type of a fisheye lens for a 360-degree video, thereby accurately mapping 360-degree video to a 3D space in view of the lens type.

In another example, the fisheye video information may include information about a region not mapped to 360-degree video data.

For example, the information about the region not mapped to the 360-degree video data may include information indicating the radius of a circular region not mapped to the 360-degree video. The information indicating the radius of the circular region may correspond to the supp_circular_image_radius[i] field.

The information about the region not mapped to the 360-degree video data may include information indicating the number of rectangular regions not mapped to the 360-degree video. The information about the region not mapped to the 360-degree video data may include information indicating the top left point of a rectangular region not mapped to the 360-degree video, information indicating the height of the rectangular region, and information indicating the width of the rectangular region. Here, samples in a region not mapped to the 360-degree video data may be set to the same sample value. For example, the samples in the region not mapped to the 360-degree video data may be set to the same sample value, and the sample value may be a value representing black. The information indicating the number of rectangular regions not mapped to the 360-degree video may correspond to the num_of_supp_regions[i] field, the information indicating the top left point of the rectangular region not mapped to the 360-degree video may correspond to the supp_rect_region_top[i] field and the supp_rect_region_left[i] field, the information indicating the height of the rectangular region may correspond to the supp_rect_region_height[i] field, and the information indicating the width of the rectangular region may correspond to the supp_rect_region_width[i] field.

Further, in another example, the fisheye video information may include information indicating the focal length of the fisheye lens with respect to the 360-degree video data. The information indicating the height of the rectangular region may correspond to the focal_length[i] field.

Further, in another example, the fisheye video information may include information indicating the center of a 3D space in which the circular image is rendered. The information indicating the center of the 3D space in which the circular image is rendered may correspond to the spherical_center_offset_x[i] field, the spherical_center_offset_y[i] field, and the spherical_center_offset_z[i] field.

Further, in another example, the fisheye video information may include information describing the circular image and information describing the rectangular region mapped to the circular image. The 360-degree video reception apparatus may extract 360-degree video data corresponding to the intersection of the circular image and the rectangular region based on the information describing the circular image and the information describing the rectangular region.

The information describing the circular image may include information indicating the view angle of the fisheye lens that captures the circular image and information indicating the coordinates of the center point of a region occupied by the circular image in a 3D space. The information describing the rectangular region may include information indicating the position of the top left point of the rectangular region, the width of the rectangular region, and the height of the rectangular region to specify the rectangular region and information indicating the coordinates of the center point of the circular image mapped to the rectangular region and the radius of the circular image to specify the circular image.

The information describing the rectangular region may include region type information and region addition information that has a different meaning depending on the value of the region type information. The circular image mapped to the picture may include stereoscopic 360-degree video data. The region type information may indicate the viewing position of the circular image mapped to the rectangular region, and the region addition information may indicate the viewing direction of the circular image mapped to the rectangular region.

The region type information may further indicate whether a plurality of circular images having the same viewing direction is mapped to the rectangular region. When a plurality of circular images having the same viewing direction is mapped to the rectangular region, the region addition information may indicate the viewing direction of the plurality of circular images mapped to the rectangular region.

The region type information may further indicate whether a plurality of circular images having the same viewing position is mapped to the rectangular region. When a plurality of circular images having the same viewing position is mapped to the rectangular region, the region addition information may indicate the viewing position of the plurality of circular images mapped to the rectangular region.

The metadata may be received through an SEI message. Also, the metadata may be included in an adaptation set, a representation, or a sub-representation of a media presentation description (MPD). For example, the fisheye video information may be received in the form of a Dynamic Adaptive Streaming over HTTP (DASH) descriptor included in the MPD. Here, the SEI message may be used to support decoding a 2D image or displaying a 2D image in a 3D space.

The 360-degree video reception apparatus decodes a picture having a fisheye video format based on the information about the encoded picture (S2220). The 360-degree video reception apparatus may decode the picture having the fisheye video format based on the information about the encoded picture.

The 360-degree video reception apparatus may derive a circular image including a fisheye video from the picture based on the metadata (S2230). For example, the fisheye video information of the metadata may include information describing the circular image and information describing a rectangular region mapped to the circular image. The 360-degree video reception apparatus may derive the rectangular region based on the information describing the rectangular region and may derive the circular image mapped to the rectangular region based on the information describing the circular image. In this case, a region corresponding to the internal intersection of the rectangular region and a region mapped to the circular image may be actual 360-degree video data obtained by the fisheye lens. The remaining invalid region may be discriminatively indicated with black or the like. According to an embodiment, the 360-degree video reception apparatus may extract a region corresponding to the intersection of rectangular regions and the region mapped to the circular image. Here, the region mapped to the circular image may be referred to as a circular region.

The fisheye video information may include the information about the region not mapped to the 360-degree video data. The 360-degree video reception apparatus may derive the region not mapped to the 360-degree video data based on the information about the region not mapped to the 360-degree video data.

The 360-degree video reception apparatus processes and renders the circular image based on the metadata (S2240). The fisheye video information may include the information about the lens type, and the 360-degree video reception apparatus may map the circular image to a 3D space according to the spherical coordinate system mapping equation derived based on the lens type. Specifically, the 360-degree video reception apparatus may project the circular images on a plane according to the spherical coordinate system mapping equation derived based on the lens type (projection). Here, the plane may be an equirectangular projection (ERP) plane. This projection process may be an intermediate step for re-projecting the circular images into a 3D space, such as a spherical coordinate system. The 360-degree video reception apparatus may perform rendering based on the finally composed ERP plane (picture), thereby generating a corresponding viewport.

According to the present invention, it is possible to derive a spherical coordinate system mapping equation according to the lens type based on information indicating the lens type of a fisheye lens for a 360-degree video, thus accurately mapping 360-degree video data to a 3D space in view of the lens type. In addition, according to the present invention, it is possible to efficiently derive 360-degree video data mapped to a 3D space based on information indicating a region not mapped to the 360-degree video data, thus improving coding efficiency.

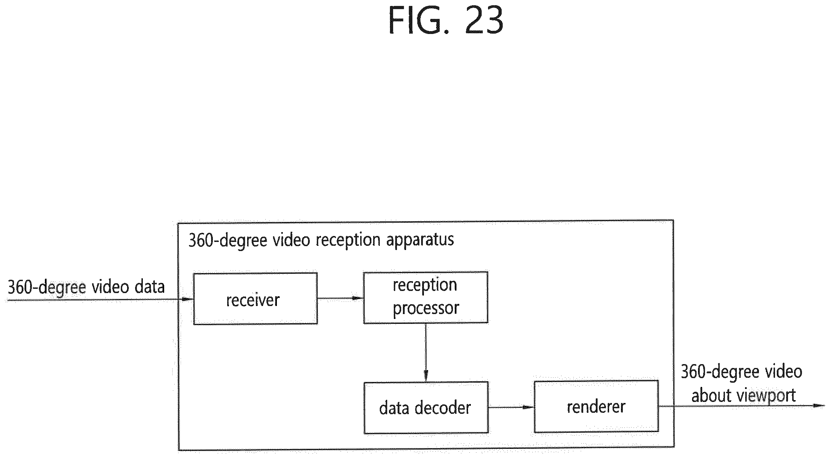

FIG. 23 schematically illustrates a 360-degree video reception apparatus that performs a 360-degree video data processing method according to the present invention. The method disclosed in FIG. 22 may be performed by the 360-degree video reception apparatus disclosed in FIG. 23. Specifically, for example, a receiver of the 360-degree video reception apparatus in FIG. 23 may perform S2200 of FIG. 22, a reception processor of the 360-degree video reception apparatus in FIG. 23 may perform S2210 of FIG. 22, a data decoder of the 360-degree video reception apparatus in FIG. 23 may perform S2220 of FIG. 22, and a renderer of the 360-degree video reception apparatus in FIG. 23 may perform S2230 and S2240 in FIG. 22.

The above-described steps may be omitted according to an embodiment or replaced by other steps of performing similar/identical operations.

The 360-degree video transmission apparatus according to an embodiment of the present invention may include the above-described data input unit, stitcher, signaling processor, projection processor, data encoder, transmission processor and/or transmitter. The internal components have been described above. The 360-degree video transmission apparatus and internal components thereof according to an embodiment of the present invention may perform the above-described embodiments with respect to the method of transmitting a 360-degree video of the present invention.

The 360-degree video reception apparatus according to an embodiment of the present invention may include the above-described receiver, reception processor, data decoder, signaling parser, re-projection processor, and/or renderer. The internal components have been described above. The 360-degree video reception apparatus and internal components thereof according to an embodiment of the present invention may perform the above-described embodiments with respect to the method of receiving a 360-degree video of the present invention.

**EP 3 624 446 B1**

The internal components of the above-described apparatuses may be processors which execute consecutive processes stored in a memory or hardware components. These components may be located inside/outside the apparatuses.

The above-described modules may be omitted or replaced by other modules which perform similar/identical operations according to embodiments.

The above-described parts, modules or units may be processors or hardware parts executing consecutive processes stored in a memory (or a storage unit). The steps described in the aforementioned embodiments can be performed by processors or hardware parts. Modules/blocks/units described in the above embodiments can operate as hardware/processors. The methods proposed by the present invention can be executed as code. Such code can be written on a processor-readable storage medium and thus can be read by a processor provided by an apparatus.

When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means. The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices.

**Claims**

1.  A 360-degree video data processing method performed by a 360-degree video reception apparatus, the 360-degree video data processing method comprising:

    receiving (S2200) the 360-degree video data and metadata;
    the 360-degree video data including fisheye omnidirectional video data including a picture including a first circular image and a second circular image captured with one or more fisheye lenses that are directly projected onto the picture;
    decoding (S2220) the picture; and
    rendering (S2240) the first and second circular images,
    wherein the metadata includes fisheye video information for the picture,
    the fisheye video information is used to render the first circular image and the second circular image, and
    the fisheye video information for the picture including a first lens type information representing a lens projection model corresponding to the first circular image and a second lens type information representing a lens projection model corresponding to the second circular image.

2.  The 360-degree video data processing method according to claim 1, wherein the first and second circular images are directly projected to a rectangular region in the picture,
    wherein the fisheye video information for the picture further includes position information representing a position of the rectangular region, circular image center information representing a position of a center of the first and second circular images and circular image radius information representing a radius of the first and second circular images.

3.  The 360-degree video data processing method according to claim 2, wherein:

    the first lens type information has a value representing at least one of an equidistant projection model, or a user-defined projection model, and
    the second lens type information has a value representing at least one of an equidistant projection model, a stereographic projection model, an equisolid angle projection model, or a user-defined projection model,
    wherein the value of the first lens type information is different from the value of the second lens type information.

4.  The 360-degree video data processing method according to claim 1, wherein the method further comprises mapping the first and second circular images to a 3D space based on a spherical coordinate system mapping equation based on the lens type.

5.  The 360-degree video data processing method according to claim 1, wherein the fisheye video information comprises information about a region not mapped to the 360-degree video data.

6.  The 360-degree video data processing method according to claim 2, wherein fisheye video information for the picture

45

further includes spherical coordinates that correspond to the center of the first and the second circular images, information representing a focal center of the one or more fisheye lenses for the 360-degree video data, offset information representing offset values of a focal center of the one or more fisheye lenses corresponding to the first and second circular images.

7. The 360-degree video data processing method according to claim 5, wherein the information about the region not mapped to the 360-degree video data comprises information indicating a number of rectangular regions mapped to the 360-degree video data.

8. The 360-degree video data processing method according to claim 7, wherein the information about the region not mapped to the 360-degree video data comprises information indicating a top left point of a rectangular region not mapped to the 360-degree video data, information indicating a height of the rectangular region, and information indicating a width of the rectangular region.

9. The 360-degree video data processing method according to claim 1, wherein the fisheye video information is received in a form of a Dynamic Adaptive Streaming over HTTP (DASH) descriptor comprised in a media presentation description (MPD).

10. A 360-degree video data processing method performed by a 360-degree video transmission apparatus, the 360-degree video data processing method comprising:

obtaining (S2000) a first circular image and a second circular image using one or more fisheye lenses;
projecting the first and second circular images to a picture directly;
encoding (S2020) a plurality of pictures including the picture; and
transmitting (S2040) the 360-degree video data including fisheye omnidirectional video data including the encoded pictures and a metadata,
wherein the metadata comprises fisheye video information for the picture,
the fisheye video information is used to render the first circular image and the second circular image, and
the fisheye video information for the picture including a first lens type information representing a lens projection model corresponding to the first circular image and a second lens type information representing a lens projection model corresponding to the second circular image.

11. The 360-degree video data processing method according to claim 10, wherein the first and second circular images are directly projected to a rectangular region in the picture (S2010),
wherein the fisheye video information for the picture further includes position information representing a position of the rectangular region, circular image center information representing a position of a center of the first and second circular images and circular image radius information representing a radius of the first and second circular images.

12. The 360-degree video data processing method according to claim 10,

the first lens type information has a value representing at least one of an equidistant projection model, a stereographic projection model, an equi-solid angle projection model, or a user-defined projection model,
wherein the value of the first lens type information is different from the value of the second lens type information.

13. The 360-degree video data processing method according to claim 11,
wherein fisheye video information for the picture further includes spherical coordinates that correspond to the center of the first and second circular images, information representing a focal center of the one or more fisheye lenses for the 360-degree video data, offset information representing offset values of a focal center of the one or more fisheye lenses corresponding to the first and second circular images.

**Patentansprüche**

1. Verfahren zur Verarbeitung von 360-Grad-Videodaten, das von einer 360-Grad-Videoempfangsvorrichtung durchgeführt wird, wobei das Verfahren zur Verarbeitung von 360-Grad-Videodaten umfasst:

Empfangen (S2200) der 360-Grad-Videodaten und Metadaten;
wobei die 360-Grad-Videodaten omnidirektionale Fischaugen-Videodaten mit einem Bild umfassen, das ein erstes kreisförmiges Bild und ein zweites kreisförmiges Bild enthält, die mit einem oder mehreren Fischaugen-Linsen aufgenommen wurden, die direkt auf das Bild projiziert werden;

Dekodieren (S2220) des Bildes; und

Rendern (S2240) des ersten und zweiten kreisförmigen Bildes,

wobei die Metadaten Fischaugen-Videoinformationen für das Bild enthalten,

wobei die Fischaugen-Videoinformationen verwendet werden, um das erste kreisförmige Bild und das zweite kreisförmige Bild zu rendern, und

wobei die Fischaugen-Videoinformationen für das Bild eine erste Linsentypinformation, die ein Linsenprojektionsmodell entsprechend dem ersten kreisförmigen Bild darstellt, und eine zweite Linsentypinformation enthalten, die ein Linsenprojektionsmodell entsprechend dem zweiten kreisförmigen Bild darstellt.

2. Verfahren zur Verarbeitung von 360-Grad-Videodaten nach Anspruch 1, wobei das erste und das zweite kreisförmige Bild direkt auf einen rechteckigen Bereich im Bild projiziert werden,

wobei die Fischaugen-Videoinformationen für das Bild ferner Positionsinformationen, die eine Position des rechteckigen Bereichs darstellen, kreisförmige Bildmittelpunktsinformationen, die eine Position eines Mittelpunkts der ersten und zweiten kreisförmigen Bilder darstellen, und kreisförmige Bildradiusinformationen aufweisen, die einen Radius der ersten und zweiten kreisförmigen Bilder darstellen.

3. Verfahren zur Verarbeitung von 360-Grad-Videodaten nach Anspruch 2, wobei:

die ersten Linsentypinformation einen Wert hat, der mindestens eines repräsentiert von einem äquidistanten Projektionsmodell oder einem benutzerdefinierten Projektionsmodell, und die zweite Linsentypinformation einen Wert hat, der mindestens eines repräsentiert von einem äquidistanten Projektionsmodell, einem stereografischen Projektionsmodell, einem Äquisolidwinkel-Projektionsmodell oder einem benutzerdefinierten Projektionsmodell,

wobei sich der Wert der ersten Linsentypinformation von dem Wert der zweiten Linsentypinformation unterscheidet.

4. Verfahren zur Verarbeitung von 360-Grad-Videodaten nach Anspruch 1, wobei das Verfahren ferner ein Abbilden des ersten und zweiten kreisförmigen Bilds in einen 3D-Raum auf der Grundlage einer auf dem Linsentyp basierenden Abbildungsgleichung für ein sphärisches Koordinatensystem umfasst.

5. Verfahren zur Verarbeitung von 360-Grad-Videodaten nach Anspruch 1, wobei die Fischaugen-Videoinformationen Informationen über einen Bereich umfassen, der nicht auf die 360-Grad-Videodaten abgebildet ist.

6. Verfahren zur Verarbeitung von 360-Grad-Videodaten nach Anspruch 2, wobei die Fischaugen-Videoinformationen für das Bild ferner sphärische Koordinaten, die dem Zentrum des ersten und des zweiten kreisförmigen Bildes entsprechen, Informationen, die ein fokales Zentrum der einen oder der mehreren Fischaugen-Linsen für die 360-Grad-Videodaten darstellen, und Offset-Informationen aufweisen, die Offset-Werte eines fokalen Zentrums der einen oder der mehreren Fischaugen-Linsen entsprechend dem ersten und dem zweiten kreisförmigen Bild darstellen.

7. Verfahren zur Verarbeitung von 360-Grad-Videodaten nach Anspruch 5, wobei die Informationen über den Bereich, der nicht auf die 360-Grad-Videodaten abgebildet ist, Informationen umfassen, die eine Anzahl von rechteckigen Bereichen angeben, die auf die 360-Grad-Videodaten abgebildet sind.

8. Verfahren zur Verarbeitung von 360-Grad-Videodaten nach Anspruch 7, wobei die Informationen über den Bereich, der nicht auf die 360-Grad-Videodaten abgebildet wird, Informationen umfassen, die einen oberen linken Punkt eines rechteckigen Bereichs angeben, der nicht auf die 360-Grad-Videodaten abgebildet wird, Informationen, die eine Höhe des rechteckigen Bereichs angeben, und Informationen, die eine Breite des rechteckigen Bereichs angeben.

9. Verfahren zur Verarbeitung von 360-Grad-Videodaten nach Anspruch 1, wobei die Fischaugen-Videoinformationen in einer Form eines Dynamic Adaptive Streaming over HTTP (DASH)-Deskriptors empfangen werden, der in einer Medienpräsentationsbeschreibung (MPD) enthalten ist.

10. Verfahren zur Verarbeitung von 360-Grad-Videodaten, das von einer 360-Grad-Videoübertragungsvorrichtung durchgeführt wird, wobei das Verfahren zur Verarbeitung von 360-Grad-Videodaten umfasst:

Gewinnen (S2000) eines ersten kreisförmigen Bildes und eines zweiten kreisförmigen Bildes unter Verwendung einer oder mehrerer Fischaugen-Linsen;

Projektion des ersten und zweiten kreisförmigen Bildes direkt auf ein Bild;

Kodieren (S2020) einer Vielzahl von Bildern, die das Bild enthalten; und

Übertragen (S2040) der 360-Grad-Videodaten einschließlich der Fischaugen-Rundum-Videodaten mit den kodierten Bildern und Metadaten,

wobei die Metadaten Fischaugen-Videoinformationen für das Bild umfassen,

wobei die Fischaugen-Videoinformationen verwendet werden, um das erste kreisförmige Bild und das zweite kreisförmige Bild darzustellen, und

die Fischaugen-Videoinformationen für das Bild eine erste Linsentypinformation, die ein Linsenprojektionsmodell entsprechend dem ersten kreisförmigen Bild darstellt, und eine zweite Linsentypinformation aufweist, die ein Linsenprojektionsmodell entsprechend dem zweiten kreisförmigen Bild darstellt.

11. Verfahren zur Verarbeitung von 360-Grad-Videodaten, wobei das erste und das zweite kreisförmige Bild direkt auf einen rechteckigen Bereich in dem Bild (S2010) projiziert werden,

wobei die Fischaugen-Videoinformationen für das Bild ferner Positionsinformationen, die eine Position des rechteckigen Bereichs darstellen, kreisförmige Bildmittelpunktsinformationen, die eine Position eines Mittelpunkts des ersten und zweiten kreisförmigen Bildes darstellen, und kreisförmige Bildradiusinformationen aufweisen, die einen Radius der ersten und zweiten kreisförmigen Bilder darstellen.

12. Verfahren zur Verarbeitung von 360-Grad-Videodaten nach Anspruch 10,

wobei die erste Linsentypinformation einen Wert hat, der mindestens eines repräsentiert von einem äquidistanten Projektionsmodell, einem stereografischen Projektionsmodell, einem Äquidistanzwinkel-Projektionsmodell oder einem benutzerdefinierten Projektionsmodell,

wobei sich der Wert der ersten Linsentypinformation von dem Wert der zweiten Linsentypinformation unterscheidet.

13. Verfahren zur Verarbeitung von 360-Grad-Videodaten nach Anspruch 11, wobei die Fischaugen-Videoinformationen für das Bild ferner sphärische Koordinaten enthalten, die dem Zentrum des ersten und zweiten kreisförmigen Bildes entsprechen, Informationen, die ein fokales Zentrum der einen oder der mehreren Fischaugen-Linsen für die 360-Grad-Videodaten darstellen, Offset-Informationen, die Offset-Werte eines fokalen Zentrums der einen oder der mehreren Fischaugen-Linsen darstellen, die dem ersten und zweiten kreisförmigen Bild entsprechen.

**Revendications**

1. Procédé de traitement de données vidéo à 360 degrés exécuté par un appareil de réception vidéo à 360 degrés, le procédé de traitement de données vidéo à 360 degrés comprenant:

la réception (S2200) des données et métadonnées de la vidéo à 360 degrés;

les données vidéo à 360 degrés, y compris les données vidéo omnidirectionnelles fisheye, comprennent une image comprenant une première image circulaire et une seconde image circulaire capturées avec un ou plusieurs objectifs fisheye qui sont directement projetés sur l'image;

le décodage (S2220) de l'image; et

la restitution (S2240) des première et seconde images circulaires,

dans lequel les métadonnées comprennent des informations vidéo fisheye pour l'image,

les informations de vidéo fisheye sont utilisées pour restituer la première image circulaire et la seconde image circulaire, et

les informations vidéo fisheye pour l'image comprennent des premières informations relatives au type d'objectif représentant un modèle de projection d'objectif correspondant à la première image circulaire et des secondes informations relatives au type d'objectif représentant un modèle de projection d'objectif correspondant à la seconde image circulaire.

2. Procédé de traitement de données vidéo à 360 degrés selon la revendication 1, dans lequel les première et seconde images circulaires sont directement projetées dans une région rectangulaire de l'image,

les informations de vidéo fisheye pour l'image comprennent en outre des informations de position représentant une position de la région rectangulaire, des informations de centre d'image circulaire représentant une position d'un centre des première et seconde images circulaires et des informations de rayon d'image circulaire représentant un rayon des première et seconde images circulaires.

3. Procédé de traitement de données vidéo à 360 degrés selon la revendication 2, dans lequel:

les premières informations sur le type d'objectif a une valeur représentant au moins l'un parmi un modèle de projection équidistante ou un modèle de projection défini par l'utilisateur, et
les secondes informations sur le type d'objectif a une valeur représentant au moins l'un parmi un modèle de projection équidistante, un modèle de projection stéréographique, un modèle de projection angulaire équisolide ou un modèle de projection défini par l'utilisateur,
dans lequel la valeur des premières informations sur le type d'objectif est différente de la valeur des secondes informations sur le type d'objectif.

4. Procédé de traitement de données vidéo à 360 degrés selon la revendication 1, dans lequel le procédé comprend en outre le mappage des première et seconde images circulaires dans un espace 3D sur la base d'une équation de mappage de système de coordonnées sphériques en fonction du type d'objectif.

5. Procédé de traitement de données vidéo à 360 degrés selon la revendication 1, dans lequel les informations de vidéo fisheye comprennent des informations sur une région qui n'est pas mise en correspondance avec les données vidéo à 360 degrés.

6. Procédé de traitement de données vidéo à 360 degrés selon la revendication 2, dans lequel les informations de vidéo fisheye pour l'image comprennent en outre des coordonnées sphériques qui correspondant au centre des première et seconde images circulaires, des informations représentant un centre focal du ou des objectifs fisheye pour les données vidéo à 360 degrés, des informations de décalage représentant des valeurs de décalage d'un centre focal du ou des objectifs fisheye correspondant aux première et seconde images circulaires.

7. Procédé de traitement de données vidéo à 360 degrés selon la revendication 5, dans lequel les informations concernant la région non mappée aux données vidéo à 360 degrés comprennent des informations indiquant un nombre de régions rectangulaires mappées aux données vidéo à 360 degrés.

8. Procédé de traitement de données vidéo à 360 degrés selon la revendication 7, dans lequel les informations concernant la région non mappée aux données vidéo à 360 degrés comprennent des informations indiquant un point supérieur gauche d'une région rectangulaire non mappée aux données vidéo à 360 degrés, des informations indiquant une hauteur de la région rectangulaire et des informations indiquant une largeur de la région rectangulaire

9. Procédé de traitement de données vidéo à 360 degrés selon la revendication 1, dans lequel les informations de vidéo fisheye sont reçues sous la forme d'un descripteur DASH (diffusion en continu adaptative dynamique sur HTTP) compris dans une description de présentation média (MPD).

10. Procédé de traitement de données vidéo à 360 degrés exécuté par un appareil de transmission vidéo à 360 degrés, le procédé de traitement de données vidéo à 360 degrés comprenant:

l'obtention (S2000) d'une première image circulaire et d'une seconde image circulaire à l'aide d'un ou plusieurs objectifs fisheye;
la projection directe des première et seconde images circulaires sur une image;
le codage (S2020) d'une pluralité d'images comprenant l'image; et
la transmission (S2040) des données vidéo à 360 degrés, y compris les données vidéo omnidirectionnelles fisheye, comprenant les images codées et les métadonnées,
dans lequel les métadonnées comprennent des informations de vidéo fisheye pour l'image,
les informations de vidéo fisheye sont utilisées pour restituer la première image circulaire et la seconde image circulaire, et
les informations vidéo fisheye pour l'image comprennent des premières informations relatives au type d'objectif représentant un modèle de projection d'objectif correspondant à la première image circulaire et des secondes informations relatives au type d'objectif représentant un modèle de projection d'objectif correspondant à la seconde image circulaire.

11. Procédé de traitement de données vidéo à 360 degrés selon la revendication 10, dans lequel les première et seconde images circulaires sont directement projetées dans une région rectangulaire de l'image (S2010),

les informations de vidéo fisheye pour l'image comprennent en outre des informations de position représentant une position de la région rectangulaire, des informations de centre d'image circulaire représentant une position d'un centre des première et seconde images circulaires et des informations de rayon d'image circulaire représentant un rayon des première et seconde images circulaires.

12. Procédé de traitement de données vidéo à 360 degrés selon la revendication 10,

les premières informations sur le type d'objectif a une valeur représentant au moins l'un parmi un modèle de projection équidistante, un modèle de projection stéréographique, un modèle de projection angulaire équisolide ou un modèle de projection défini par l'utilisateur,
dans lequel la valeur des premières informations sur le type d'objectif est différente de la valeur des secondes informations sur le type d'objectif.

13. Procédé de traitement de données vidéo à 360 degrés selon la revendication 11,
dans lequel les informations de vidéo fisheye pour l'image comprennent en outre des coordonnées sphériques qui correspondant au centre des première et seconde images circulaires, des informations représentant un centre focal du ou des objectifs fisheye pour les données vidéo à 360 degrés, des informations de décalage représentant des valeurs de décalage d'un centre focal du ou des objectifs fisheye correspondant aux première et seconde images circulaires.

# FIG. 1

EP 3 624 446 B1

# FIG. 2

```
aligned(8) class Box (unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
    //     box extends to end of file
    }
    if (boxtype=='uuid') {
        unsigned int(8)[16] usertype = extended_type;
    }
}

aligned(8) class FullBox(unsigned int(32) boxtype, unsigned int(8)
v, bit(24) f) extends Box(boxtype) {
    unsigned int(8)       version = v;
    bit(24)               flags = f;
}
```

# FIG. 3

# FIG. 4

EP 3 624 446 B1

# FIG. 5

360 VIDEO TRANSMISSION APPARATUS

DATA INPUT UNIT → METADATA PROCESSOR

STITCHER

PROJECTION PROCESSOR

DATA ENCODER

ENCAPSULATION PROCESSOR

TRANSMISSION PROCESSOR

TRANSMITTER

(TRANSMISSION SIDE) FEEDBACK PROCESSOR

TRANSMISSION

FEEDBACK INFORMATION

# FIG. 6

RECEPTION

FEEDBACK INFORMATION

360 VIDEO RECEPTION APPARATUS

RECEIVER

RECEPTION PROCESSOR

METADATA PARSER

DECAPSULATION PROCESSOR

FEEDBACK INFORMATION

(RECEPTION SIDE) FEEDBACK PROCESSOR

DATA DECODER

FEEDBACK INFORMATION

REPROJECTION PROCESSOR

FEEDBACK INFORMATION

RENDERER

FEEDBACK INFORMATION

EP 3 624 446 B1

# FIG. 7A

# FIG. 7B

EP 3 624 446 B1

Image stitching, projection, and region-wise packing

Input images —B$_i$→ | Stitching and projection | → C Projected frame → | Region-wise packing (optional) | → D Packed frame(s) → | Image/video encoding |

# FIG. 8

$(3\pi K \ r/2, \pi K \ r/2)$

Pitch Axis

Roll Axis

Yaw Axis

# FIG. 9A

# FIG. 9B

(e)

Left-
top

Right-
top

front

Left-
bottom

Right-
bottom

(f)

width (e.g., 2πr)

(g)

# FIG. 10

360-degree video transmission apparatus

Video processor

Metadata processor

Data encoder

Encapsulation processor

Transmission processor/transmitter

# FIG. 11

360-degree video reception apparatus

Data processor

Receiver

Metadata parser

# FIG. 12

# FIG. 13

FISHEYE CAM1
center=(a1, b1)
radius=c1

FISHEYE CAM2
center=(a2, b2)
radius=c2

1300

Fisheye circular image to ERP projection

FISHEYE CAM1
center coordinate=(y1, p1, r1)
FoV=XXX degrees

FISHEYE CAM2
center coordinate=(y2, p2, r2)
FoV=YYY degrees

1310

Blending

1320

EP 3 624 446 B1

# FIG. 14

8mm Focal Length    10mm Focal Length    12mm Focal Length    15mm Focal Length

Full Frame Sensor        APS-C Sensor            APS-C Sensor        Full Frame Sensor
(Circular Fisheye)    (Full Frame Fisheye)    (Full Frame Fisheye)    (Full Frame Fisheye)

66

# FIG. 15

Monoscopic Fisheye images
pic rgn #1   pic rgn #2
rgn_info: 0   rgn_info: 1

| Front | Rear | ⟹ | Front | Rear | ⟹ | Projection format (monoscopic) |

# FIG. 16

Stereoscopic Fisheye images

pic rgn #1     pic rgn #2
rgn_type: 0    rgn_type: 1
rgn_info: 0    rgn_info: 0

pic rgn #3     pic rgn #4
rgn_type: 0    rgn_type: 1
rgn_info: 1    rgn_info: 1

# FIG. 17A

# FIG. 17B

1710

Stereoscopic fisheye images
(Frame packing)

pic rgn #1    pic rgn #2
rgn_type: 2   rgn_type: 2
rgn_info: 0   rgn_info: 1

FRONT VIEW

pic rgn #1

FRONT VIEW

pic rgn #1-1   pic rgn #1-2

Front
Left

Front
Right

Projection format
(Left view partial)

Projection format
(Right view partial)

fast viewport
generation

rectangular region
extraction

frame un-packing

circular image
extraction

stitching
(projection/blending)

FIG. 18A

# FIG. 18B

1810

Stereoscopic fisheye images
(Frame packing)

pic rgn #1    pic rgn #2
rgn_type: 3   rgn_type: 3
rgn_info: 0   rgn_info: 1

LEFT VIEW

pic rgn #1

LEFT VIEW

pic rgn #1-1   pic rgn #1-2

Front Left | Rear Left | Front Right | Rear Right

Front Left | Rear Left

Front Left | Rear Left

Front Left

Rear Left

Projection format
(Left view )

rectangular region
extraction

frame un-packing

circular image
extraction

stitching
(projection/blending)

# FIG. 19

$$r=2atan2(\sqrt{(P_x^2+P_z^2)},P_y^2)/aperture$$
$$\theta=atan2(P_z,P_x)$$
$$x=rcos(\theta)$$
$$y=rsin(\theta)$$

3D vector to 2D fisheye

2D fisheye to 3D vector
$$\Phi=r\ aperture/2$$
$$\theta=atan2(y,x)$$

Normalised fisheye coordinates

3D vector to longitude/latitude
$$longitude=atan2(P_y,P_x)$$
$$latitude=atan2(P_z^2,\sqrt{(P_x^2+P_y^2)})$$

longitude/latitude to 3D vector
$$P_x=cos(latitude)cos(longitude)$$
$$P_y=cos(latitude)sin(longitude)$$
$$P_z=sin(latitude)$$

Normalised Equirectangular coordinates

$$x=longitude/\pi$$
$$y=2 latitude/\pi$$

3D vector to 2D equirectangular

3D equirectangular to 2D vector
$$longitude=x\pi$$
$$latitude=y\pi/2$$
$$P_x=cos(latitude)cos(longitude)$$
$$P_y=cos(latitude)sin(longitude)$$
$$P_z=sin(latitude)$$

73

# FIG. 20

```
                    ( START )
                        │
                        ▼
   ┌──────────────────────────────────────────────┐
   │ obtain circular image including 360-degree video │  ～ S2000
   │ captured by camera having at least one fisheye lens │
   └──────────────────────────────────────────────┘
                        │
                        ▼
   ┌──────────────────────────────────────────────┐
   │    map circular image to rectangular region of    │  ～ S2010
   │       picture having fisheye video format         │
   └──────────────────────────────────────────────┘
                        │
                        ▼
   ┌──────────────────────────────────────────────┐
   │      encode picture mapped to circular image      │  ～ S2020
   └──────────────────────────────────────────────┘
                        │
                        ▼
   ┌──────────────────────────────────────────────┐
   │     generate metadata about 360-degree video     │  ～ S2030
   └──────────────────────────────────────────────┘
                        │
                        ▼
   ┌──────────────────────────────────────────────┐
   │     perform process for storage or transmission    │  ～ S2040
   │       on encoded current picture and metadata      │
   └──────────────────────────────────────────────┘
                        │
                        ▼
                    ( END )
```

# FIG. 21

360-degree video transmission apparatus

360-degree video → data input unit → projection processor → data encoder

metadata processor → transmission processor → 360-degree video data

EP 3 624 446 B1

# FIG. 22

START

| receive 360-degree image data | S2200 |

| acquire information on encoded picture and metadata from 360-degree image data | S2210 |

| decode picture having fisheye video format on basis of information on encoded picture | S2220 |

| derive circular image including fisheye image from picture on basis of metadata | S2230 |

| process circular image on basis of metadata and render same | S2240 |

END

# FIG. 23

EP 3 624 446 B1

360-degree video reception apparatus

360-degree video data → receiver → reception processor

data decoder → renderer → 360-degree video about viewport

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016076680 A1